(19) Europäisches Patentamt
European Patent Office
Office européen des brevets

(11) EP 4 462 328 B1

(12) **EUROPEAN PATENT SPECIFICATION**

(45) Date of publication and mention of the grant of the patent:
**15.04.2026 Bulletin 2026/16**

(21) Application number: **23172957.5**

(22) Date of filing: **11.05.2023**

(51) International Patent Classification (IPC):
***G06Q 10/0637*** *(2023.01)*

(52) Cooperative Patent Classification (CPC):
**G06Q 10/06375**

(54) **POWER GRID PLANNING SUPPORT**

UNTERSTÜTZUNG ZUR PLANUNG EINES STROMNETZES

SUPPORT DE PLANIFICATION DE RÉSEAU ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**13.11.2024 Bulletin 2024/46**

(73) Proprietor: **Hitachi, Ltd.**
**Tokyo 100-8280 (JP)**

(72) Inventors:
- **OMI, Shota**
  **London, EC2Y 5AJ (GB)**
- **NAKAYAMA, Yasuaki**
  **Tokyo, 100-8280 (JP)**
- **KAWAMOTO, Naoki**
  **Tokyo, 100-8280 (JP)**

(74) Representative: **Mewburn Ellis LLP**
**Aurora Building**
**Counterslip**
**Bristol BS1 6BX (GB)**

(56) References cited:
**EP-A1- 3 457 513**
**US-A1- 2020 212 681**
**US-A1- 2022 115 867**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### *TECHNICAL FIELD*

The present disclosure relates to a power grid planning support method and a power grid planning support system.

### *BACKGROUND*

As energy production and supply transitions to carbon neutral, there is increased demand and implementation of variable renewable energy sources (VREs). The intermittent generation from VREs, different characteristics between VREs and conventional synchronous generators (SGs) and long-range electricity transmissions depending on the VRE location and demand location is expected to reduce the power grid reliability.

Therefore, it is desirous to apply optimisation calculations to power grid planning generally and provide cost-minimised solutions within the constraints related to the planning such as asset capacity, bus voltage range, reliability criteria and so on.

However, optimisation problems are typically too complex to be solved efficiently because there is a large number of reliability issues brought forward by the energy transition and a lot of scenarios need to be contemplated depending on uncertainties in the grid planning. If a solution is not obtained, grid planners cannot continue to plan power grids.

For example, US2020212681A1 proposes a method, an apparatus and a storage medium for transmission network expansion planning considering extremely large amounts of operation scenarios. The method comprises establishing an optimization model for transmission network expansion planning, the optimization model including an objective function for minimizing the sum of investment costs for the transmission lines and expected values of operation costs in the power transmission network, solving the optimization model to obtain an optimal investment decision variable; and determining the transmission network expansion planning based on the optimal investment decision variable.

For example, US2022115867A1 proposes a control system for a power distribution grid including an electrical distribution circuit. The electrical distribution circuit includes a processor configured to perform operations including constructing a grid model comprising edges and nodes representing assets and transmission paths of the power distribution grid, generating an analysis of an operation of the power distribution grid over a predetermined time duration, determining a plurality of constraint violations based on the analysis of the operation of the power distribution grid within the predetermined time duration, generating a plurality of alterations to the power distribution grid, respective ones of the plurality of alterations resolving at least one of the constraint violations, selecting a first alteration of the plurality of alterations to the power distribution grid responsive to determining that the selected first alteration resolves at least two of the plurality of constraint violations, and autonomously implementing the first alteration to the power distribution grid.

For example, JP2022142649 proposes a device and method for optimising the cost-benefit performance on a grid expansion plan, including conversion from retired generators to synchronous condensers. The method proposed has sequentially iterative processes including a contingency analysis, counter measure study, benefit analysis, cost analysis, cost benefit analysis, and determination of conversion plan for identifying the best solution. However, as discussed above, enormous patterns of power grid conditions must be taken into account for ensuring that solutions obtained are the best. The combination of complex constraints related to power flow and reliability, and the large number of variables, will cause convergence issues.

The present disclosure was arrived at in light of the above considerations.

### *SUMMARY*

Accordingly, in a first aspect, embodiments of the invention provide a power grid planning support method as set out in claim 1.

Such a method allows power grid planners to robustly obtain solutions to optimisation problems of power grids.

Steps (i) - (iii) may be performed in any order. Steps (i) - (iii) and (v) may be performed on or using a graphical user interface.

The method may further include a step of indicating to a user that the optimisation calculation cannot be completed, and providing the calculated interim result(s) to the user.

The method may further include a step of receiving one or more invalidations and/or edits to the constraint(s) received in step (ii), such that step (iv) is performed without the invalidated constraint(s) and/or with the edited constraint(s).

The method may further include a step of applying a decomposition method to the objective function, so as to arrive a plurality of sub-problems representing the objective function, wherein the plurality of sub-problems and the constraint function(s) represent the model of the power grid.

Step (ii) may further include receiving a plurality of constraint functions, and the method may further comprise receiving an order in which the constraint functions are to be applied.

The method may further include a step of applying a constraint generation method to one or more of the constraint functions, the constraint generation method applying a sub-set of constraints and adding additional constraints sequentially. The method may include a step of receiving a priority for the sub-set of constrains and/or a maximum number of constraints to be generated at once.

Step (i) may include receiving definitions or one or more variables, definitions of one or more constraints, and definitions of one or more data sets.

A reinforcement learning system may provide one or more of the constraint functions.

The method may further include a step of receiving a request, before executing the optimisation calculation, to perform a trial calculation, the method further including performing the trial calculation, the trial calculation indicating whether a complete solution is expected from the optimisation calculation defined by the model of the power grid and the input data.

In a second aspect, embodiments of the invention provide a power grid planning support system as set out in claim 11.

Steps (i) - (iii) may be performed in any order.

The machine executable instructions may cause the processor to indicate to a user that the optimisation calculation cannot be completed, and to provide the calculated interim results to the user.

The machine executable instructions may cause the processor to receive one or more invalidations and/or edits to the constraint(s) received in step (ii), such that step (iv) is performed without the invalidated constraint(s) and/or with the edited constraint(s).

The machine executable instructions may cause the processor to apply a decomposition method to the objective function and constraint function(s), so as to arrive at a plurality of sub-problems representing the objective function, wherein the plurality of sub-problems with the decomposed objective function and constraint function(s) represent the model of the power grid.

Step (ii) may include receiving a plurality of constraint functions, and the method further comprises receiving an order in which the constraint functions are to be applied.

The machine executable instructions may cause the processor to apply a constraint generation method to one or more of the constraint functions, the constraint generation method applying a subset of constraints and adding additional constraints sequentially. The machine executable instructions may cause the processor to receive a priority for the sub-set of constraints, and/or a maximum number of constraints to be generated at once.

Step (i) may include receiving definitions of one or more variables, definitions of one or more constants, and definitions of one or more data sets.

A reinforcement learning system may provide one or more of the constraint functions and/or constraint applying methods.

The machine executable instructions may cause the processor to receive a request, before executing the optimisation calculation, to perform a trial calculation, the method further including performing the trial calculation, the trial calculation indicating whether a complete solution is expected from the optimisation calculation defined by the model of the power grid and the input data.

The invention includes the combination of the aspects and preferred features described except where such a combination is clearly impermissible or expressly avoided.

Further aspects of the present invention provide: a computer program comprising code which, when run on a computer, causes the computer to perform the method of the first aspect; a computer readable medium storing a computer program comprising code which, when run on a computer, causes the computer to perform the method of the first aspect; and a computer system programmed to perform the method of the first aspect.

## *BRIEF DESCRIPTION OF THE DRAWINGS*

Fig. 1 shows an example of a power grid planning support system;

Fig. 2 shows an example of processing functions of the power gird planning support system;

Fig. 3 is an example initial screen;

Fig. 4 is an example model management screen;

Fig. 5 is an example objective function edit screen;

Figs. 6 - 17 are example constraint edit screens;

Fig 18 is an example of a model detail setting screen;

Fig. 19 is an example of a variable management sub-screen;

Fig. 20 is an example of a constant management sub-screen;

Fig. 21 is an example of a set management sub-screen;

Fig. 22 is an example of a constraint management sub-screen;

Fig. 23 is an example of a data management screen;

Fig. 24 is an example of a data management screen after data mapping;

Fig. 25 is an example of an input file provided to the power grid planning support system;

Fig. 26 is an example of a final result screen;

Fig. 27 is an example of a placement result sub-screen;

Fig. 28 is an example of an operation result sub-screen;

Fig. 29 is a further example of a model management screen;

Fig. 30 is a further example of a constraint edit screen;

Fig. 31 shows an example of a drop-down list on a model management screen;

Fig. 32 shows an example model management screen after selecting a constraint applying method;

Fig. 33 shows an example of a constraint management sub-screen after setting the order of the constraint applying method;

Fig. 34 shows an example of a constraint generation property setting sub-screen;

Fig. 35 shows an example of a Benders decomposition property setting sub-screen;

Fig. 36 shows an example of a master problem definition screen;

Figs. 37 and 38 shows examples of a subproblem definition screen before and after allocation;

Fig. 39 shows an example of an objective function edit screen;

Fig. 40 shows an example of an interface definition screen;

Fig. 41 shows a flowchart of a method;

Fig. 42 shows a plot of calculation step against tolerance when constrains applying method(s) are not applied;

Fig. 43 shows a plot of calculation step against tolerance when two constraint applying methods are applied;

Fig. 44 shows an example of an interim result screen;

Fig. 45 and 46 are examples of placement result and operational result sub-screens respectively;

Fig. 47 is an example of a constraint and violation sub-screen;

Fig. 48 is an example of detailed view of the constraint and violation sub-screen; and

Fig. 49 is an example of a further system configuration.

***DETAILED DESCRIPTION***

Aspects and embodiments of the present invention will now be discussed with reference to the accompanying figures. Further aspects and embodiments will be apparent to those skilled in the art.

Generally, the method and tool comprise several functions including a model management function, constraint applying method database function, and calculation interim result database function in addition to a calculation model database function, calculation input database function, and calculation final result database function. It also includes several interfaces to input constraint conditions from grid planners (the users) or external systems, and to output calculation interim results and constraint violations to these planners or external systems. The input interfaces of constraint applying methods, the model management function, and the constraint applying method database function enable the users or external systems to edit how constraints are applied to solve an optimisation problem. By using these functionalities, the users or systems can define the decomposition of the original optimisation problem including constraint applying methods and process flow for solving the decomposed problems in a coordinated manner so as to obtain an optimal solution from decomposed problems cooperatively and robustly instead of solving the original problem directly. The output interfaces of calculation interim results and constraint violations, and the calculation interim result database, enable the users or external systems to make decisions for the next process based on the interim results even if the final results cannot be obtained (e.g., due to numerical issues). The users or external systems can also re-run the optimisation calculation(s) after editing the decomposition definition of the original problem based on the output calculation interim results, in order to obtain a better solution in the next calculation. Therefore, grid planners can continue their planning works since an optimal solution of the power grid planning within expectation can be robustly obtained depending on the decomposition definition. Even if the optimal solution cannot be obtained, the grid planners can make decisions based on the calculation interim result or re-run the optimisation calculation after changing the decomposition definition to try to obtain the optimal solution.

Fig. 1 shows an example of a power grid planning support system 1. The power grid planning support system may also be referred to as a power grid planning support tool. The tool 1 is provided, in this example, as a general computer having a central control unit 11, arithmetic logic unit 12, input unit 13, output unit 14, main memory unit 15, and auxiliary memory unit 16. These units are connected to each other via computer bus 17. The auxiliary memory unit 16 includes one or more databases 18 and one or more programs 19. The "processing functions" discussed below with reference to Figure 2 are realised by the central control unit 11 loading programs stored in the auxiliary memory unit 16 into the main memory unit 15. The output unit 14 may comprise a display device or may be a component which provides an output to a display device or other a user terminal (so as to be displayed by the terminal).

Fig. 2 shows an example of processing functions of the power gird planning support system 1. As shown, data flow, processing functions, and processing flows are determined by programs 19. The power grid planning support tool 1 has an input function 201, output function 202, model management function 203, calculation function 204, calculation model database function 210, calculation input database function 211, constraint applying method database function 212, calculation interim result database function 213, and calculation final result database function 214. Once the power gird planning support tool 1 is activated, the output function 202 shows an initial screen 301.

Fig. 3 is an example initial screen 301. The initial screen 301 includes a new project button 310, project load button 311, project save button 312, run calculation button 313, model management button 314, data management button 315, and trial calculation button 316. The new project button 310 is utilised to create a new project. Here, "project" means a set of models and input/output data related for the optimisation calculation related to the power grid planning work. The project load button 311 is utilised to load a project previously saved. The project save button 312 is utilised to save the current working project. The run calculation button 313 is utilised to execute the optimisation calculation defined by the model and data. Model management button 314 is utilised to open a model management screen 401 as shown in Figure 4. The data management button 315 is utilised to open the data management screen 2301 shown in Figure 23, which is used to set parameters and load data. The trial calculation button 316 is utilised to check the validity of the user-defined model by calculating an initial few steps of the optimisation problem.

Fig. 4 is an example model management screen 401. Model management screen 401 includes a model load button 410, model save button 411, model details button 412, close button 413, objective function edit button 414, constraint edit button 415, invalidate button 416, add constraint button 417, add constraint applying method drop-down button 418, objective function table 420, and constraint table 421. The model load button 410 is utilised to load a template model or a model which had been previously saved. The model save button 411 is utilised to save the current working model. The model details button 412 is utilised to open the model detail setting screen 1801 for setting model details related to the constraint applying method. Close button 413 is used to close the model management screen 401. The objective function edit button 414 is utilised to open the objective function edit screen 501 shown in Figure 5, and thereby for editing models shown in the objective function table 420.

The constraint edit button 415 is utilised to open the constraint edit screen 601 shown in Figures 6 - 17 and so used for editing models shown in the constraint table 421. The invalidate button 416 is utilised to invalidate one or more constraints shown in the constraint table 421. The add constraint button 417 is utilised to add a row to the constraint table 421. The constraint applying method drop-down button 418 is utilised to open a candidate list of constraint applying methods. The objective function table 420 shows the name of the objective function in the current working model, and the constraint table 421 shows the name list of the constraints in the current working model.

In one example, the optimisation problem for placing reactive power sources is formulated as below. The objective function of this problem includes the total cost, derived from generation costs and asset placement costs. The total cost is formulated according to equation 1:

[Equation 1]

$$\min \sum_{t\in \mathrm{TIME}} \left\{ \sum_{i\in \mathrm{G}} (a(i)P_{\mathrm{g}}^2(i,t) + b(i)P_{\mathrm{g}}(i,t) + c(i) + \sum_{i\in S} C_{\mathrm{dep}}(i)u_s(i,t) \right\}$$

Here, *a, b,* and *c* are real constants indicating generation cost coefficients. $P_g$ are real variables indicating active power generation from generators. G and S are a set of generators and reactive power sources respectively. $C_{dep}$ are real constants indicating depreciation costs of assets. $u_s$ are integer variables indicating placement status of assets. In this instance, $u_s$ can be described according to equation 2 using $u_{ST}$ and $u_{SyC}$:

[Equation 2]

$$u_s(:,t) = \begin{pmatrix} u_{\mathrm{ST}}(:,t) \\ u_{\mathrm{SyC}}(:,t) \end{pmatrix}, \forall t \in \mathrm{TIME}$$

Here, $u_{ST}$ and $u_{SyC}$ are integer variables indicating the placement status of STATCOMs (static synchronous compensator) and synchronous condensers respectively. $u_s(:, t)$ means the $t^{th}$ column of $u_s$.

The constraints of this problem includes the power flow equation, power flow limit, reactive reserve requirement, short circuit level requirement, asset capacity constraint, asset placement lead-time constraint, asset removal prohibition constraint, and variable range and definition. The power flow is calculated according to equation 3:

[Equation 3]

$$\sum_{n\in \mathrm{BUS}} V(m,t)Y^*(m,n,t)V^*(n,t) + P_{\mathrm{d}}(m,t) + \mathrm{j}Q_{\mathrm{d}}(m,t) - \sum_{i\in\{\mathrm{g_{bus}}=m\}} \left(P_{\mathrm{g}}(i,t) + \mathrm{j}Q_{\mathrm{g}}(i,t)\right) - \sum_{i\in\{\mathrm{s_{bus}}=m\}} Q_{\mathrm{s}}(i,t)$$
$$= 0, \quad \forall m \in \mathrm{BUS}, \quad \forall t \in \mathrm{TIME}$$

Here, *V* are complex variables indicating bus voltages. *Y* are complex constants indicating bus admittance of the power grid. *Y** is the complex conjugate of *Y*. $P_d$ and $Q_d$ are real constants respectively indicating active and reactive power demands on buses. $P_g$ and $Q_g$ are real variables respectively indicating active and reactive power generation from generators. $\{g_{bus} = m\}$ is a subset of generators connected to the bus m. $Q_s$ are real variables indicating reactive power generation from reactive power sources. $Q_s$ includes $Q_{ST}$ which are real variables indicating reactive power generation from STATCOMs and $Q_{SyC}$ are real variables indicating reactive power from synchronous condensers as calculated using equation 4:

[Equation 4]

$$Q_{\mathrm{s}}(:,t) = \begin{pmatrix} Q_{\mathrm{ST}}(:,t) \\ Q_{\mathrm{SyC}}(:,t) \end{pmatrix}, \forall t \in \mathrm{TIME}$$

$\{s_{bus} = m\}$ is a subset of reactive power sources that are connected to the bus m. BUS is the set of buses, and TIME is a set of times. The set of reactive power sources is the sum of a set of STATCOMs (ST) and a set of synchronous condensers (SyC) as below.

[Equation 5]

$$S = \mathrm{ST} \cup SyC$$

The flow limit is formulated as set of multiple equations as below:

[Equation 6]

$$V(m,t) \sum_{k \in \mathrm{BUS}} Y_{\mathrm{f}}^{*}(l,k) V^{*}(k,t) \le F_{\mathrm{max}}(l), \forall (l,m,n) \in \mathrm{BRANCH}, \forall t \in \mathrm{TIME}$$

[Equation 7]

$$-V(m,t) \sum_{k \in \mathrm{BUS}} Y_{\mathrm{f}}^{*}(l,k) V^{*}(k,t) \le F_{\mathrm{max}}(l), \forall (l,m,n) \in \mathrm{BRANCH}, \forall t \in \mathrm{TIME}$$

[Equation 8]

$$V(n,t) \sum_{k \in \mathrm{BUS}} Y_{t}^{*}(l,k) V^{*}(k,t) \le F_{\mathrm{max}}(l), \forall (l,m,n) \in \mathrm{BRANCH}, \forall t \in \mathrm{TIME}$$

[Equation 9]

$$-V(n,t) \sum_{k \in \mathrm{BUS}} Y_{\mathrm{t}}^{*}(l,k) V^{*}(k,t) \le F_{\mathrm{max}}(l), \forall (l,m,n) \in \mathrm{BRANCH}, \forall t \in \mathrm{TIME}$$

Where $Y_f$ and $Y_t$ are complex constants indicating branch admittance of the power grid, $F_{max}$ are real constants indicating flow limits of branches, BRANCH is a set of branches, $(l, m, n)$ are an element of BRANCH and indicate that the branch $l$ connects from bus m to bus n.

The reactive power reserve requirement is formulated as below:

[Equation 10]

$$\sum_{i \in \{g_{\mathrm{area}} = a\}} \left(Q_{\mathrm{g}}^{\mathrm{max}}(i) - Q_{\mathrm{g}}(i,t)\right) + \sum_{i \in \{s_{\mathrm{area}} = a\}} \left(Q_{\mathrm{s}}^{\mathrm{max}}(i) - Q_{\mathrm{s}}(i,t)\right) \ge Q_{\mathrm{res+}}(a),$$

$\forall a$ E AREA, $\forall t \in$ TIME

[Equation 11]

$$\sum_{i\in\{g_{area}=a\}}\left(Q_g^{min}(i)-Q_g(i,t)\right)+\sum_{i\in\{s_{area}=a\}}\left(Q_s^{min}(i,t)\right)\leq Q_{res-}(a),$$

$\forall a \in$ AREA, $\forall t \in$ TIME

Here, $Q_g^{max}$ and $Q_g^{min}$ are real constants respectively indicating a maximum and minimum reactive power capacity of generators. $Q_s^{max}$ and $Q_s^{min}$ are real constants respectively indicating a maximum and minimum reactive power capacity of reactive power sources. $Q_{res+}$ and $Q_{res-}$ are real constants for respectively indicating reactive power reserve requirements for leading and lagging directions in areas. AREA is a set of areas. $\{g_{area} = a\}$ means a subset of generators that are located in the area $a$. $\{s_{area} = a\}$ means a subset of reactive power sources that are located in the area $a$.

The short circuit level requirement is formulated as a set of multiple equations as below:

[Equation 12]

$$-\frac{1}{\mathrm{SCR}_{\mathrm{lim}}^2(m)}\leq Z_{\mathrm{ext}}(m,m,t)Z_{\mathrm{ext}}^*(m,m,t)\leq\frac{1}{\mathrm{SCR}_{\mathrm{lim}}^2(m)},\forall m\in\mathrm{BUS},\forall t\in\mathrm{TIME}$$

[Equation 13]

$$\sum_{k\in\mathrm{BUS}}Z_{\mathrm{ext}}(m,k,t)Y_{\mathrm{ext}}(k,n,t)=I(m,n),\forall m\in\mathrm{BUS},\forall t\in\mathrm{TIME}$$

[Equation 14]

$$Y_{\mathrm{ext}}(m,n,t)=Y(m,n)+\sum_{i\in\{g_{bus}=m\}}\frac{1}{\mathrm{j}x'_{d_g}(i,t)}+\sum_{i\in\{\mathrm{SyC}_{bus}=m\}}\frac{1}{\mathrm{j}x'_{d_{\mathrm{SyC}}}(i,t)}u_{\mathrm{SyC}}(i,t),if\ m=n,\forall m\in\mathrm{BUS},\forall n\in\mathrm{BUS},\forall t\in\mathrm{TIME}$$

[Equation 15]

$$Y_{\mathrm{ext}}(m,n,t)=Y(m,n),if\ m\neq n,\forall m\in\mathrm{BUS},\forall n\in\mathrm{BUS},\forall t\in\mathrm{TIME}$$

Here, $Z_{ext}$ means complex variables indicating extended impedance of the power grid, $SCR_{lim}$ means real constants indicating limits of a short circuit ratio, $Y_{ext}$ means complex variables indicating extended bus admittance of the power gird, $I$ means an identity matrix, $x'_{d_g}$ and $x'_{d_{SyC}}$ respectively mean real constants indicating a transient reactance of generators and synchronous condensers, and $\{SyC_{bus} = m\}$ means a subset of synchronous condensers that are connected to the bus m.

The asset capacity constraint is formulated as a set of multiple equations as below:

[Equation 16]

$$P_g^{min}(i)\leq P_g(i,t)\leq P_g^{max}(\mathrm{i}),\forall i\in\mathrm{G},\forall t\in\mathrm{TIME}$$

[Equation 17]

$$Q_g^{min}(i)\leq Q_g(i,t)\leq Q_g^{max}(i),\forall i\in\mathrm{G},\forall t\in\mathrm{TIME}$$

[Equation 18]

$$u_{ST}(i,t)Q_{ST}^{min}(i) \leq Q_{ST}(i,t) \leq u_{ST}(i,t)Q_{ST}^{max}(i), \forall i \in \mathrm{ST}, \forall t \in \mathrm{TIME}$$

[Equation 19]

$$u_{SyC}(i,t)Q_{SyC}^{min}(i) \leq Q_{SyC}(i,t) \leq u_{SyC}(i,t)Q_{SyC}^{max}(i), \forall i \in \mathrm{SyC}, \forall t \in \mathrm{TIME}$$

Here, $P_g^{max}$ and $P_g^{min}$ mean real constants respectively indicating maximum and minimum active power capacities of generators, $Q_{ST}^{max}$ and $Q_{ST}^{min}$ mean real constants respectively indicating a maximum and minimum reactive power capacity of STATCOMs, and $Q_{SyC}^{max}$ and $Q_{SyC}^{min}$ mean real constants respectively indicating a maximum and minimum reactive power capacity of synchronous condensers.

The asset placement lead-time constraint is formulated as below:

[Equation 20]

$$C_{LT}(i,t)u_s(i,t) = 0, \forall i \in \mathrm{S}, \forall t \in \mathrm{TIME}$$

Here, $C_{LT}$ means integer constants indicating coefficient of lead-time condition for reactive power sources. For a reactive power source *i*, if $t \leq T_{LT}$, the corresponding element is 1. If $t > T_{LT}$, the corresponding element is 0.

The asset removal prohibition constrain is formulated as below:

[Equation 21]

$$u_s(i,t-1) \leq u_s(i,t), \forall i \in \mathrm{S}, \forall t \in \mathrm{TIME}$$

The variable range and definition are formulated as below:

[Equation 22]

$$V_M^{min}(m) \leq V_M(m,t) \leq V_M^{max}(m), \forall m \in \mathrm{BUS}, \forall t \in \mathrm{TIME}$$

[Equation 23]

$$\Theta^{min}(m) \leq \Theta\ (m,t) \leq \Theta^{max}(m), \forall m \in \mathrm{BUS}, \forall t \in \mathrm{TIME}$$

[Equation 24]

$$u_s^{min}(\mathrm{i}) \leq u_s(i,t) \leq u_s^{max}(i), \forall i \in \mathrm{S}, \forall t \in \mathrm{TIME}$$

[Equation 25]

$$V(m,t) = V_M(m,t)\exp\big(\mathrm{j}\Theta(m,t)\big), \forall m \in \mathrm{BUS}, \forall t \in \mathrm{TIME}$$

Equations 2 and 4 are also included in the variable range and definition. Here $V_M$ and $\Theta$ mean real variables respectively indicating a magnitude and angle of bus voltages, $V_M^{min}$ and $V_M^{max}$ mean real constants respectively indicating minimum and maximum limits of $V_M$, $\Theta^{min}$ and $\Theta^{max}$ mean constants respectively indicating minimum and

maximum limits of $\Theta$, and $u_s^{\min}$ and $u_s^{\max}$ mean real constants respectively indicating minimum and maximum limits of $u_s$.

These equations can be checked and edited on the objective function edit screen 501, or the constraint edit screen 601. Once the user pushes the objective function edit button 414 on the model management screen, the objective function edit screen 501 will open. Fig. 5 is an example objective function edit screen 501, having a close button 413, an objective function confirm button 510, an add variable row button 511, a delete variable row button 512, an add constraint row button 513, a delete constraint row button 514, an add set row button 515, a delete set row button 516, an objective function name field 520, an objective function formulation field 521, a variable table 522, a constant table 523, and a set table 524.

The objective function confirm button 510 is utilised to overwrite the objective function model with the edited objective function name on the objective function name field 520, edited formulation on the objective function formulation field 521, edited variables on variable table 522, edited constants on constant table 523, and edited sets on set table 524. The add variable row button 511, add constraint row button513, and add set row button 515 are utilised to add rows to the variable table 522, constant table 523, and set table 524 respectively. The delete variable row button 512, delete constant row button 514, and delete set row button 515 are utilised to delete rows from the variable table 522, constant table 523, and set table 524 respectively. The objective function name field 520 shows the objective function name, and the objective function formulation field 521 shows the formulation of the objective function (for example as described in [Equation 1]). Variable table 522, constant table 523, and set table 524 show the variables, constants, and sets included in the objective function. The objective function name in the objective function name field 520, formulation on objective function formulation field 521, variables on variable table 522, constants on constant table 523, and sets on set table 524 are editable.

Similarly, once the user has pushed the constraint edit button 415 on the model management screen, a constraint edit screen 601 for the corresponding constraint will open. Figures 6 - 16 are example constraint edit screens for each constraint. Figure 6 shows the example of the constraint edit screen 601 for the power flow equation. Constraint edit screen 601 has a close button 413, add variable row button 511, delete variable row button 512, add constraint row button 513, delete constant row button 514, add set row button 515, delete set row button 516, constraint confirm button 610, variable table 522, constant table 523, set table 524, constraint name field 620 and constraint formulation table 621.

Constraint confirm button 610 is utilised to overwrite the current constraint model with the edited constraint name on constraint name field 620, edited formulation on constraint formulation table 621, edited variables on variable table 522, edited constants on constant table 523, and edited sets on set able 524. Constraint name field 620 shows the corresponding constraint name. Constraint formulation table 621 shows the formulation of the equations as described, for example, in [Equation 3]. Variable table 522, constant table 523, and set table 524 show the variables, constants, and sets included in the constraint. The constraint name on constraint name field 520, formulation on constraint formulation field 621, variables on variable table 522, constants on constant table 523, and sets on set table 524 are editable.

Figures 7 to 17 show example constraint edit screens 601 for the power flow limit, reactive power reserve requirement, short circuit level requirement, asset capacity constraint, asset placement lead-time constraint, asset removal prohibition constraint, and variable range and definition. Figures 7 and 8, 10 and 11, 12 and 13, and 16 and 17 are scrolled parts of the same screens, respectively. Once the user pushes the model details button 412 on the model management screen 401, model detail setting screen 1801 will open. Fig. 18 is an example of a model detail setting screen, which includes some common buttons and sub-screen area 1802. The common buttons are variable management sub-screen button 1811, constant management sub-screen button 1812, set management sub-screen button 1813, constraint management sub-screen button 1814, and close button 413. Variable management sub-screen button 1811, constant management sub-screen button 1812, set management sub-screen button 1813, and constraint management sub-screen button 1814 are utilised to show respectively variable management sub-screen 1901, constant management sub-screen 2001, set management sub-screen 2101, and constraint management sub-screen 2201 on the sub-screen area 1802.

Fig. 19 is an example of a variable management sub-screen 1901 which includes a confirm button 1910 and variable definition table 1920. The confirm button 1910 is utilised to confirm the variable definition edited on variable definition table 1920 to update the current working model. Variable definition table 1920 has a variable row and type row. The variable row shows the list of variables included in the current working model, and the type row shows the list of variable types such as integer, real, or complex. Elements of this row are editable to set the type of variables.

Fig. 20 is an example of a constant management sub-screen 2001, which includes a confirm button 1910, constant move to right button 2010, constant move to left button 2011, constant table (input from data) 2020, and constant table (user definition) 2021. The constant move to right button 2010 is utilised to move a selected constant from the constant table (input from data) 2020) to constant table (user definition) 2021. Constant move to left button 2011 is utilised to move a selected constant from constant table (user definition) 2021 to constant table (input from data) 2020. Constant table (input from data) 2020 shows the list of constants, the values of which are defined from the input data. Constant table (input from data) 2021 has a constant row and definition row. The constant row of constant table (input from data) 2021 shows the list of constants, the values of which are defined from other constants. The definition row of the constant table (input from data) 2021 shows the definition of the constant, and the elements of this row are editable.

Fig. 21 is an example of a set management sub-screen 2101, which includes a confirm button 1910, set table (input from data) 2120, and set table (user definition) 2121. Set table (input from data) 2120 shows the list of sets, the elements of which are defined from input data. Set table (user definition) 2121 has a set row and definition row. The set row of set table (user definition) 2121 shows the list of sets, the elements of which are defined by other sets. The definition row of set table (user definition) 2121 shows the definitions of the sets, and the elements of this row are editable.

Fig. 22 is an example of a constraint management sub-screen 2201, which includes a constraint applying method drop-down button 418, constraint management category drop-down button 2210, and constraint management category field 2220. Constraint management category drop-down button 2210 is utilised to select a category of the constraint management. Constraint management category field 2220 shows the selected category of the constraint management. Figure 22 shows an example when the order of constraint applying method is selected as a category of the constraint management. In this case, table for order of constraint applying method 2221 to be utilised to set the order of the constraint applying methods will be displayed. The detailed use of this sub-screen 2201 is explained below.

Fig. 23 is an example of a data management screen 2301, which has a dataset management sub-screen 2302, import button 2310, close button 413, dataset drop-down button 2311, add dataset button 2312, and dataset name field 2321. Import button 2310 is utilised to import data form the file specified in the file name filed 2324 and based on the mapping determined in a data mapping table 2325. Dataset drop-down button 2311 is utilised to open the drop-down list to select a dataset for mapping. Add dataset button 2312 is utilised to add a new dataset. Dataset name field 2321 shows the dataset name selected by the drop-down list opened by the dataset drop-down button 2311. Dataset management sub-screen 2302 has constant and set allocation buttons 2313, explorer open button 2313, constant table 2322, set table 2323, file name field 2324, and data mapping table 2325. Constant and set allocation button 2313 is utilised to allocate the constants and sets selected in constant table 2322 and set table 2323. Constant table 2322 and set table 2323 show the list of constants and sets, respectively, and the elements of these tables are selectable.

Explorer open button 2314 is utilised to open a file system explorer window to select an input file. File name field 2324 shows the file name selected in the explorer window opened by explorer open button 2314. Data mapping table 2325 has set & constraint column and place in input file column. Once the user has pushed the constant and set allocation button after selecting a constant in the constant table 2322 or a set in the set table 2323, the selected constant or set will be shown in the Set & constant column of data mapping table 2325. For each constant or set shown in the data mapping table 2325, data placed in the input file should be specified in the place in input file column of the data mapping table 2325. The user can enter a column number or row number as an element of the place in input file column. Figure 24 is an example of a data management screen 2301 after data mapping, in this example GenData 2501 in the input file is determined as shown in Figure 25.

Once the user has pushed the import button 2310 after setting all datasets, data is imported from the file specified in the file name field 2324 and based on the mapping determined in the data mapping table 2325. The confirmed models and the imported datasets are stored in the calculation model database module 210 and calculation input database module 211 respectively. The calculation module 204 executes the calculation with the models from the calculation model database module 210 and the data from the calculation input database module 211 by using a solver once the user pushes the run calculation 313 button after setting the model and data via the model management screen 401, objective function edit screen 501, constraint edit screen 601, model detail setting screen 1801, and data management screen 2301. Once the calculation is completed, the output screens show the results of the calculation.

Figures 26 - 28 show examples of final result screens. Figure 26 shows an example of a final result screen 2601, having a final result sub-screen area 2602, placement result button 2611, operation result button 2612, export button 2613, and close button 413. The placement result button 2611 is utilised to open a placement result sub-screen 2701. The operation result button 2612 is utilised to open operation result sub-screen 2801, and the export button 2613 is utilised to export the result data for further analysis. Figure 27 shows an example of placement result sub-screen 2701. The placement result sub-screen 2701 has a calendar button 2711, total cost field 2721, total placement cost field 2722, date field 2723, network diagram field 2724, and asset placement plan table 2725. Total cost field 2721 shows the comparison of the total cost with and without asset intervention. Total placement cost filed 2722 shows the comparison of the total placement cost with and without asset intervention. Calendar button 2711 is utilised to select a date. Date field 2723 shows the selected data. Network diagram field 2724 shows the network diagram with assets placed on the basis of the calculation result for the date specified in date field 2723, and the asset placement plan table 2725 shows the asset placement plan including information about the date, location, and capacity from the calculation result.

Figure 28 shows the operation of the operation result sub-screen 2801. The operation result sub-screen 2801 has a total cost filed 2721, total generation cost field 2821, and time-series generation cost field 2822. The total generation cost field 2821 shows the comparison of the total generation cost with and without asset intervention. Time-series generation cost field 2822 shows the comparison of the time-series generation cost with and without asset intervention. If no constraint applying method is specified in the model management screen 401, the defined problem is calculated as a single problem. This means that the user can obtain the result of the calculation when the calculation completes. Conversely, the user cannot obtain the result of the calculation if it does not complete (e.g., because the calculation times out due to the numerical difficulty of the calculation).

To avoid such situations, the user can invalidate or edit constraints, or apply one or more constraint applying methods. If some constraints have a lower priority than other constraints, invalidation of the constraints can improve the possibility of completing the calculation. Figure 29 shows a model management screen 401 when the user has invalidated the reactive power reserve requirement. Since the reactive power reserve requirement was invalidated, that constraint was not used in the calculation. If some constraints are strict or complex, modification of the constraints can improve the possibility of completing the calculation. Figure 30 is a further example of a constraint edit screen 601, with the modified reactive power reserve requirement. As shown in the constraint formulation table, the user added slack variables $s_+$ and $s_$ to the left side of the equations and variable table 522. The user can also modify the objective function, variable range and definition, and data mapping to be consistent with this modification. This invalidation and modification capability enables the user to do trial and error flexibly and so obtain the preferable results without directly editing the source code of the program. Model management module 203 provides automatic functions to support such trial and errors based on the constraint applying methods.

Fig. 31 shows an example of a drop-down list 3101 on a model management screen 401. One the user pushes the constraint applying method drop-down button 418 on the model management screen 401, a constraint applying method drop-down list 3101 will open to select the constraint applying method. In this example, "Benders decomposition" and "Constraint generation" are shown as the candidates. Benders decomposition is a method used to solve complex optimisation problems by decomposing the original problem into a master problem and one or more sub-problems. Constraint generation is also a method used to solve large-scale optimisation problems by starting with a subset of constraints and adding constraints sequentially.

Fig. 32 shows an example model management screen 401 after selecting a constraint applying method. In this example, the constraint generation method is to be applied to the power flow limit and the reactive power reserve requirement, and Benders decomposition method is to be applied to the short circuit level requirement. Since no constraint applying methods are applied to the other constraints, these constraints are handled as usual in the optimisation calculation. After selecting the constraint applying method, the user can define the order of the constraint applying method via the constraint management sub-screen 2201 on the model detail setting screen 1801. Figure 33 shows an example of a constraint management sub-screen 2201 after setting the order of the constraint applying method. According to this order, the optimisation calculation will proceed in the following three steps. In the first step, the optimisation problem without the constraints specified with any constrain applying method are calculated. In the second step, the constraint generation method is applied to the optimisation calculation. In the last step, Benders decomposition method is applied to the optimisation calculation. Sometimes, iterations between the second and last step occur depending on the condition.

The model detail setting screen 1801 can be used by the user to set the properties for each constraint applying method. As an example of the properties of the constraint generation method, the user can set the property for the priority criteria and the maximum number of constraints to be generated at once. Figure 34 shows an example of a constraint generation property setting sub-screen 3401 on the model detail setting screen 1801. Constraint generation property setting sub-screen 3401 has a priority criteria drop-down button 3411, priority criteria field 3421, maximum number constraint generation field 3422, and priority criteria drop-down list 3423. Priority criteria drop-down button 3411 is utilised to open the priority criteria drop-down list 3423 in order to select the priority criteria for deciding which constraint should be generated in the algorithm. Once the user selects the priority criteria, it will be shown in the priority criteria field 3421. Maximum number constraint generation field shows the maximum number of constraints to be generated in the algorithm at once, and this field is editable.

As an example of the properties for Benders decomposition method, the user can set the details of the decomposition properties. Figure 35 shows an example of a Benders decomposition property setting sub-screen 3501, which includes a master problem definition button 3511, subproblem definition button 3512, connector 3513, interface definition button 3514, add layer button 3515, and add subproblem button 3516. Master problem definition button 3511 is utilised to check the definition of the master problem for applying Benders decomposition. Subproblem definition button 3512 is utilised to define the subproblem for applying Benders decomposition method. Connector 3513 is utilised to link between the master problem and subproblem or subproblems in the different layers. Interface definition button (from upper to lower) 3514 is utilised to define the variables provided from the upper layer problem to the lower layer problem and the additional constraints from the lower layer problem to the upper layer problem. Add layer button 3515 is utilised to add a lower layer. Add subproblem button 3516 is utilised to add a subproblem in the layer.

Once the user pushes the master problem definition button 3511, the master problem definition screen 3601 is displayed as shown in Figure 36 to check the definition of the master problem. Master problem definition screen 3601 includes a close button 413, objective function table (original problem) 3620, constraint table (original problem) 3621, objective function table (master problem) 3622, and constraint table (master problem) 3623. The objective function table (original problem) 3620 and constraint table (original problem) 3621 show the objective function and constraints in the original problem, respectively. Objective function table (master problem) 3622 and constraint table (master problem) 3623 also who the objective function and constraints for the master problem, respectively. The objective function and constraints that are not to be managed by Benders decomposition are shaded based on the specification in the model management screen 401. In this example, the short circuit level requirement is included in the original problem but not included in the master problem because the user selected Benders decomposition as a constraint applying method to this constraint.

Once the user pushes the subproblem definition button 3512, the subproblem definition screen 3701 is displayed as shown in Figure 37 so as to allow the user to allocate the constraints from the original problem to the subproblem. Subproblem definition screen 3701 includes a confirm button 1901, reset button 3710, close button 413, reset button 3710, allocate button (from original problem to subproblem) 3711, objective function edit button (subproblem) 3712, remove button 3713, objective function table (original problem) 3620, constraint table (original problem) 3621, objective function table (subproblem) 3720, and constraint table (subproblem) 3721. The objective function table (subproblem) 3720 and constraint table (subproblem) 3721 respectively show the objective function and constraints in the subproblem. The objective function and constraints that are not to be managed by Benders decomposition are shaded. In this example, the total cost and short circuit level requirement are to be managed by Benders decomposition. If the user would like to add the total cost and short circuit level requirement to this subproblem, they can be allocated by pushing the allocate button (from original problem to subproblem) 3711. Figure 38 shows an example of the subproblem definition screen 3710 after the allocation. If the user would like to remove the constraint after the allocation, it can be removed from the subproblem by pressing the remove button 3713. If the user would like to restart the allocation from the beginning, the reset button 3710 is utilised to reinitialise the allocation. Objective function edit button (subproblem) is utilised to open the objective function edit screen (subproblem) 3901 to allow the user to edit the objective function in the subproblem.

Once the user has pushed the objective function edit button (subproblem) 3717, the objective function edit screen (subproblem) 3901 is displayed as shown in Figure 39. The objective function edit screen (subproblem) 3901 has a confirm button 510, close button 413, reset button 3710, add variable row button 511, add constant row button 513, add set row button 515, move button (from variable to constant) 3910, variable definition button 3911, constant definition button 3912, set definition button 3913, objective function name field 520, objective function formulation field 521, variable table 522, constant table 523, and set table 524. Move button (from variable to constant) 3910 is utilised to change a variable to constant. Variable definition button 3911, constant definition button 3912, and set definition button 3913 are utilised to define the properties of additional variables, constants, and sets, respectively.

If the user would like to modify the objective function, it can be directly edited in the objective function formulation field 521. In this instance, the following penalty term was added to the objective function to avoid unfeasible conditions:

[Equation 26]

$$\sum_{m \in \mathrm{BUS}} w_{\mathrm{SCR}}(m) s_{\mathrm{SCR}}(m,t)$$

Here, $w_{SCR}$ and $s_{SCR}$ are real constants indicating penalty prices and slack variables respectively. These additional constant and variables are also added to the constant table 523 and variable table 522 respectively. Furthermore, u is treated not as a variable but as a constant in the subproblem by using move button (from variable to constant) 3910 in order to make the subproblem simpler. The user can confirm the edit result by pushing the confirm button 1910.

Once the user pushes the interface definition button (upper to lower) 3514, interface definition screen 4001 will open as shown in Figure 40 to define the interface between the upper layer problem and lower layer problem. Interface definition screen 4001 has additional constant definition button 4011, variable table (from upper to lower (4020, constraint table (from lower to upper) 4021, and constant table 4022. Variable table (from upper to lower) 4020 is editable to define the variable to be provided from the upper layer problem to the lower layer problem. Constraint table (from lower to upper) 4021 is editable to define the constraint to be added to the upper layer problem based on the lower layer problem, and additional constant table 4022 is editable to define the additional constant required in the constraint. Additional constant definition button 4011 is utilised to define the properties of the additional constants.

Once the modification of the problem is completed, all models, data, and constraint applying methods are stored in the calculation model database 210, calculation input database 211, and constraint applying method database 212 respectively. Then, trial calculation can be executed by pushing the trial calculation button 316 on the initial screen 301 to check the feasibility and validity of the problem. If no errors are found in the trial calculation, the user can execute the calculation by pushing the run calculation button 313 on the initial screen 301. As mentioned above, the optimisation calculation in this instance proceeds to perform three steps as shown in Figure 41. In the first step shown as S4101, the optimisation problem without constraints specified with any constraint applying method is calculated. In the second step, shown as step S4102, constraint generation methods are applied to the optimisation calculation. In the third step shown as S4103, Benders decomposition method is applied to the optimisation calculation. After the third step, constraint violations are checked for as shown in S4104, and if any constraint violations are identified the process goes back to S4102 and the calculation will proceed with updated constraints. If no constraint violations are identified, the calculation is terminated. If the calculation is completed, the calculation result is stored in the calculation final result database 214 and output to the user.

Figure 42 shows a plot of calculation step against tolerance when constrains applying method(s) are not applied. The tolerance does not reach the threshold value because of the scale and complexity of the original problem. On the other hand, Figure 43 shows a plot of calculation step against tolerance when two constraint applying methods are applied. Since the optimisation problem in each step is smaller and simpler than the original problem, the calculated tolerance finally reaches the tolerance value. Furthermore, the calculation results at steps S4101, S4102, and S4103 are stored in the calculation interim result database 213 during the calculation so as to be output to the user in the case that the calculation cannot be completed due to numerical difficulties. For example, if the calculation of a sub-step in S4103 was not completed and the previous sub-step was available, the calculation interim result of S4103 with violation check result can be output to the user. If the calculation of a sub-step in S4103 was not completed, and the result of any previous sub-step S4103 was not available, the calculation interim result of S4102 with violation check result can be output to the user.

Figure 44 shows an example of an interim result screen 4401, which includes an interim result sub-screen area 4402, placement result button 2611, operation result button 2612, constraint & violation button 4411, export button (interim result) 4412, and close button 413. Constraint & violation button 4411 is utilised to open constraint & violation sub-screen 4701 as shown in Figure 47. Export button (interim result) 4413 is utilised to export the interim results.

Fig. 45 and 46 are examples of placement result 2701 and operational result 2801 sub-screens, which are respectively displayed on the interim result screen 4401. The structure of these sub-screens on the interim result screen 4401 is the same as that on the final result screen 2601. The constraint & violation sub-screen 4701 includes a detail button 4711 and constraint & violation status table 4721. Constraint & violation status table 4721 shows the list of the constraints, applied status of the constraints, and violation against the constraints. If the user would like to check the detail of the applied status and violation, the detail button 4711 is utilised to open a constraint & violation detail screen 4801 shown in Figure 48. Constraint & violation detail screen 4801 has constraint & violation detail table 4821 and it shows the applied status of the constraint and amount of the violation at the object level. If all of the calculation does not complete, the user can make a decision based on these interim results and also try the next calculation with changed models and constraint applying methods.

The proposed power grid planning support tool and method therefore enables the user to continue planning work and provides a flexible environment to obtain a planning solution.

Fig. 49 is an example of a further system configuration where the power grid planning support tool 1 cooperates with a reinforcement learning system 4903 via a communication network 4902. In this example, the constraint applying method is selected by the reinforcement learning system 4902 instead of by the user, and the calculation results is output to the reinforcement learning system 4903. The interface to input modelling data from the reinforcement learning system 4903 has data including Constraint Table 421, Objective Function Formulation Field 521, Variable Table 522, Constraint Table 523, Set Table 524, Table for Order of Constraint Applying Method 2221, Priority Criteria Field 3421, Maximum Number Constraint Generation Field 3422, Objective Function Table (Subproblem) 3720, Constraint Table (Subproblem) 3721, Variable Table (From Upper To Lower) 4020, Constraint Table (From Lower To Upper) 4021, and Additional Constraint Table 4022 in the example.

By connecting the power grid planning support tool 1 to a reinforcement learning system 4903, the solution can be obtained automatically based on the input from the reinforcement learning system.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above-described embodiments. For example, a computer system may comprise a central processing unit (CPU), input means, output means and data storage. The computer system may have a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting.

In particular, although the methods of the above embodiments have been described as being implemented on the systems of the embodiments described, the methods and systems of the present disclosure need not be implemented in conjunction with each other, but can be implemented on alternative systems or using alternative methods respectively.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the disclosure in diverse forms thereof.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A power grid planning support method, implemented on a computer, the method comprising steps of:

    (i) receiving an objective function, the objective function representing a quantity or parameter associated with a power grid;
    (ii) receiving one or more constraint functions, the or each constraint function representing constraints on the power grid, the objective function and constraint function(s) together representing a model of the power grid;
    (iii) receiving input data related to the power grid;
    (iv) executing an optimisation calculation defined by the model of the power grid and the input data;
    (v) displaying a result of the optimisation calculation; and
    (vi) calculating one or more interim results when the execution of the optimisation calculation returns, as a result, an indication that the optimisation calculation cannot be completed.

2. The method of claim 1, further including a step of indicating to a user that the optimisation calculation cannot be completed, and providing the calculated interim result(s) to the user.

3. The method of any preceding claim, further comprising a step of receiving one or more invalidations and/or edits to the constraint(s) received in step (ii), such that step (iv) is performed without the invalidated constraint(s) and/or with the edited constraint(s).

4. The method of any preceding claim, further comprising a step of applying a decomposition method to the objective function and constraint function(s), so as to arrive at a plurality of subproblems representing the objective function, wherein the plurality of sub-problems with the decomposed objective function and constraint function(s) represent the model of the power grid.

5. The method of any preceding claim, wherein step (ii) includes receiving a plurality of constraint functions, and the method further comprises receiving an order in which the constraint functions are to be applied.

6. The method of any preceding claim, further including a step of applying a constraint generation method to one or more of the constraint functions, the constraint generation method applying a sub-set of constraints and adding additional constraints sequentially.

**7.** The method of claim 6, further including a step of receiving a priority for the sub-set of constraints, and/or a maximum number of constraints to be generated at once.

**8.** The method of any preceding claim, wherein step (i) includes receiving definitions of one or more variables, definitions of one or more constants, and definitions of one or more data sets.

**9.** The method of any preceding claim, wherein a reinforcement learning system provides one or more of the constraint functions and/or constraint applying methods.

**10.** The method of any preceding claim, further comprising a step of receiving a request, before executing the optimisation calculation, to perform a trial calculation, the method further including performing the trial calculation, the trial calculation indicating whether a complete solution is expected from the optimisation calculation defined by the model of the power grid and the input data.

**11.** A power grid planning support system (1), the system comprising one or more processors and memory, the memory containing machine executable instructions which, when executed on the processor(s) cause the processor(s) to:

(i) receive an objective function, the objective function representing a quantity or parameter associated with a power grid;
(ii) receive one or more constraint functions, the or each constraint function representing constraints on the power grid, the objective function and constraint function(s) together representing a model of the power grid;
(iii) receive input data related to the power grid;
(iv) execute an optimisation calculation defined by the model of the power grid and the input data;
(v) display a result of the optimisation calculation;
(vi) calculate one or more interim results when the execution of the optimisation calculation returns, as a result, an indication that the optimisation calculation cannot be completed.

**12.** The power grid planning support system (1) of claim 11, wherein the memory contains further machine executable instructions which, when executed on the processor(s), cause the processor(s) to indicate to a user that the optimisation calculation cannot be completed, and to provide the calculated interim results to the user.

**13.** A non-transitory computer-readable storage medium containing machine executable instructions which, when executed on one or more processors, cause the processors to perform the method set out in any of claims 1 - 10.

## Patentansprüche

**1.** Stromnetzplanungsunterstützungsverfahren, das auf einem Computer implementiert wird, wobei das Verfahren folgende Schritte umfasst:

(i) Empfangen einer Zielfunktion, wobei die Zielfunktion eine(n) einem Stromnetz zugeordnete(n) Menge oder Parameter umfasst;
(ii) Empfangen von einer oder mehreren Beschränkungsfunktionen, wobei die oder jede Beschränkungsfunktion Beschränkungen auf dem Stromnetz darstellen, wobei die Zielfunktion und die Beschränkungsfunktion(en) zusammen ein Modell des Stromnetzes darstellen;
(iii) Empfangen von Eingangsdaten betreffend das Stromnetz;
(iv) Ausführen einer durch das Modell des Stromnetzes und die Eingangsdaten definierten Optimierungsrechnung;
(v) Anzeigen eines Ergebnisses der Optimierungsrechnung; und
(vi) Berechnen von einem oder mehreren Zwischenergebnissen, wenn das Ausführen der Optimierungsrechnung als Ergebnis eine Angabe ausgibt, dass die Optimierungsrechnung nicht abgeschlossen werden konnte.

**2.** Verfahren nach Anspruch 1, ferner umfassend eines Schritts des Anzeigens für einen Benutzer, dass die Optimierungsrechnung nicht abgeschlossen werden kann, und Bereitstellen des/der berechneten Zwischenergebnis(se) für den Benutzer.

**3.** Verfahren nach einem der vorangegangenen Ansprüche, ferner umfassend einen Schritt des Empfangens von einer oder mehreren Ungültigerklärungen und/oder Editierungen der in Schritt (ii) empfangenen Beschränkung(en), sodass Schritt (iv) ohne die für ungültig erklärte(n) Beschränkung(en) und/oder mit der/den editierten Beschränkung(en) durchgeführt wird.

4. Verfahren nach einem der vorangegangenen Ansprüche, ferner umfassend einen Schritt des Anwendens eines Zerlegungsverfahrens auf die Zielfunktion und die Beschränkungsfunktion(en), um zu einer Vielzahl von Teilaufgaben zu gelangen, die die Zielfunktion darstellen, wobei die Vielzahl von Teilaufgaben mit der zerlegten Zielfunktion und die Beschränkungsfunktion(en) das Modell des Stromnetzes darstellen.

5. Verfahren nach einem der vorangegangenen Ansprüche, wobei Schritt (ii) das Empfangen einer Vielzahl von Beschränkungsfunktionen umfasst und das Verfahren ferner das Empfangen einer Reihung umfasst, gemäß der die Beschränkungsfunktionen anzuwenden sind.

6. Verfahren nach einem der vorangegangenen Ansprüche, ferner umfassend einen Schritt des Anwendens eines Beschränkungserzeugungsverfahrens auf eine oder mehrere aus den Beschränkungsfunktionen, wobei das Beschränkungserzeugungsverfahren einen Teilsatz von Beschränkungen anwendet und nacheinander zusätzliche Beschränkungen hinzufügt.

7. Verfahren nach Anspruch 6, ferner umfassend einen Schritt des Empfangens einer Priorität für den Teilsatz von Beschränkungen und/oder eine maximale Anzahl von Beschränkungen, die in einem Mal erzeugt werden können.

8. Verfahren nach einem der vorangegangenen Ansprüche, wobei Schritt (i) das Empfangen von Definitionen von einer oder mehreren Variablen, Definitionen von einer oder mehreren Konstanten und Definitionen von einem oder mehreren Datensätzen umfasst.

9. Verfahren nach einem der vorangegangenen Ansprüche, wobei ein Bestärkendes-Lernen-System eines oder mehrere aus den Beschränkungsfunktionen und/oder Beschränkungsanwendungsverfahren bereitstellt.

10. Verfahren nach einem der vorangegangenen Ansprüche, ferner umfassend einen Schritt des Empfangens einer Anfrage zur Durchführung einer Versuchsrechnung vor dem Ausführen der Optimierungsrechnung, wobei das Verfahren ferner das Durchführen der Versuchsrechnung umfasst, wobei die Versuchsrechnung angibt, ob von der durch das Modell des Stromnetzes und die Eingangsdaten definierten Optimierungsrechnung eine vollständige Lösung erwartet wird.

11. Stromnetzplanungsunterstützungssystem (1), wobei das System einen oder mehrere Prozessoren und einen Speicher umfasst, wobei der Speicher durch eine Maschine ausführbare Befehle enthält, die, wenn sie auf dem/den Prozessor(en) ausgeführt werden, bewirken, dass der/die Prozessor(en) Folgendes durchführt/durchführen:

(i) Empfangen einer Zielfunktion, wobei die Zielfunktion eine(n) einem Stromnetz zugeordnete(n) Menge oder Parameter umfasst;
(ii) Empfangen von einer oder mehreren Beschränkungsfunktionen, wobei die oder jede Beschränkungsfunktion Beschränkungen auf dem Stromnetz darstellen, wobei die Zielfunktion und die Beschränkungsfunktion(en) zusammen ein Modell des Stromnetzes darstellen;
(iii) Empfangen von Eingangsdaten betreffend das Stromnetz;
(iv) Ausführen einer durch das Modell des Stromnetzes und die Eingangsdaten definierten Optimierungsrechnung;
(v) Anzeigen eines Ergebnisses der Optimierungsrechnung; und
(vi) Berechnen von einem oder mehreren Zwischenergebnissen, wenn das Ausführen der Optimierungsrechnung als Ergebnis eine Angabe ausgibt, dass die Optimierungsrechnung nicht abgeschlossen werden konnte.

12. Stromnetzplanungsunterstützungssystem (1) nach Anspruch 11, wobei der Speicher ferner durch eine Maschine ausführbare Befehle umfasst, die, wenn sie auf dem/den Prozessor(en) ausgeführt werden, bewirken, dass der/die Prozessor(en) für einen Benutzer anzeigt/anzeigen, dass die Optimierungsrechnung nicht abgeschlossen werden kann, und für den Benutzer die berechneten Zwischenergebnisse bereitstellt/bereitstellen.

13. Nichtflüchtiges computerlesbares Speichermedium, das durch eine Maschine ausführbare Befehle enthält, die, wenn sie auf einem oder mehreren Prozessoren ausgeführt werden, bewirken, dass die Prozessoren ein Verfahren nach Anspruch 1 bis 10 ausführen.

**Revendications**

1. Procédé d'aide à la planification de réseau électrique, mis en œuvre sur un ordinateur, comprenant les étapes consistant à :

   (i) recevoir une fonction objective, la fonction objective représentant une quantité ou un paramètre associé(e) à un réseau électrique ;
   (ii) recevoir une ou plusieurs fonctions de contraintes, la ou chaque fonction de contraintes représentant des contraintes sur le réseau électrique, la fonction objective et la ou les fonctions de contraintes représentant ensemble un modèle du réseau électrique ;
   (iii) recevoir des données d'entrée relatives au réseau électrique ;
   (iv) exécuter un calcul d'optimisation défini par l'intermédiaire du modèle du réseau électrique et des données d'entrée ;
   (v) afficher un résultat du calcul d'optimisation ; et
   (vi) calculer un ou plusieurs résultats intermédiaires lorsque l'exécution du calcul d'optimisation renvoie, comme résultat, une indication que le calcul d'optimisation ne peut pas être achevé.

2. Procédé selon la revendication 1, comprenant en outre une étape consistant à indiquer à un utilisateur que le calcul d'optimisation ne peut pas être achevé, et à fournir le ou les résultats intermédiaires calculés à l'utilisateur.

3. Procédé selon l'une quelconque des revendications précédentes, comprenant en outre une étape de réception d'une ou plusieurs invalidations et/ou modifications de la ou des contraintes reçues à l'étape (ii), de telle sorte que l'étape (iv) soit effectuée sans la ou les contraintes invalidées et/ou avec la ou les contraintes modifiées.

4. Procédé selon l'une quelconque des revendications précédentes, comprenant en outre une étape consistant à appliquer un procédé de décomposition à la fonction objectif et à la ou aux fonctions de contraintes, de manière à obtenir une pluralité de sous-problèmes représentant la fonction objectif, dans lequel la pluralité de sous-problèmes avec la fonction objectif et la ou les fonctions de contraintes décomposées représentent le modèle du réseau électrique.

5. Procédé selon l'une quelconque des revendications précédentes, dans lequel l'étape (ii) comprend la réception d'une pluralité de fonctions de contrainte, et le procédé comprend en outre la réception d'un ordre dans lequel les fonctions de contraintes doivent être appliquées.

6. Procédé selon l'une quelconque des revendications précédentes, comprenant en outre une étape consistant à appliquer un procédé de génération de contraintes à une ou plusieurs des fonctions de contraintes, le procédé de génération de contraintes appliquant un sous-ensemble de contraintes et ajoutant des contraintes supplémentaires séquentiellement.

7. Procédé selon la revendication 6, comprenant en outre une étape consistant à recevoir une priorité pour le sous-ensemble de contraintes, et/ou un nombre maximum de contraintes à générer en même temps.

8. Procédé selon l'une quelconque des revendications précédentes, dans lequel l'étape (i) inclut une réception de définitions d'une ou plusieurs variables, de définitions d'une ou plusieurs constantes et de définitions d'un ou plusieurs ensembles de données.

9. Procédé selon l'une quelconque des revendications précédentes, dans lequel un système d'apprentissage par renforcement fournit une ou plusieurs des fonctions de contraintes et/ou des procédés d'application de contraintes.

10. Procédé selon l'une quelconque des revendications précédentes, comprenant en outre une étape consistant à recevoir une demande, avant d'exécuter le calcul d'optimisation, pour effectuer un calcul d'essai, le procédé comprenant en outre l'exécution du calcul d'essai, le calcul d'essai indiquant si une solution complète est attendue à partir du calcul d'optimisation défini par le modèle du réseau électrique et les données d'entrée.

11. Système d'aide à la planification de réseau électrique (1), le système comprenant un ou plusieurs processeurs et une mémoire, la mémoire contenant des instructions exécutables par machine qui, lorsqu'elles sont exécutées par le ou les processeurs, amènent le ou les processeurs à :

(i) recevoir une fonction objective, la fonction objective représentant une quantité ou un paramètre associé(e) à un réseau électrique ;
(ii) recevoir une ou plusieurs fonctions de contraintes, la ou chaque fonction de contraintes représentant des contraintes sur le réseau électrique, la fonction objective et la ou les fonctions de contraintes représentant ensemble un modèle du réseau électrique ;
(iii) recevoir des données d'entrée relatives au réseau électrique ;
(iv) exécuter un calcul d'optimisation défini par le modèle du réseau électrique et les données d'entrée ;
(v) afficher un résultat du calcul d'optimisation ;
(vi) calculer un ou plusieurs résultats intermédiaires lorsque l'exécution du calcul d'optimisation renvoie, comme résultat, une indication que le calcul d'optimisation ne peut pas être achevé.

**12.** Système d'aide à la planification de réseau électrique (1) selon la revendication 11, dans lequel la mémoire contient des instructions exécutables par machine supplémentaires qui, lorsqu'elles sont exécutées sur le ou les processeurs, amènent le ou les processeurs à indiquer à un utilisateur que le calcul d'optimisation ne peut pas être achevé, et à fournir les résultats intermédiaires calculés à l'utilisateur.

**13.** Support de stockage non transitoire lisible par ordinateur contenant des instructions exécutables par machine qui, lorsqu'elles sont exécutées sur un ou plusieurs processeurs, amènent les processeurs à exécuter le procédé décrit dans l'une quelconque des revendications 1 à 10.

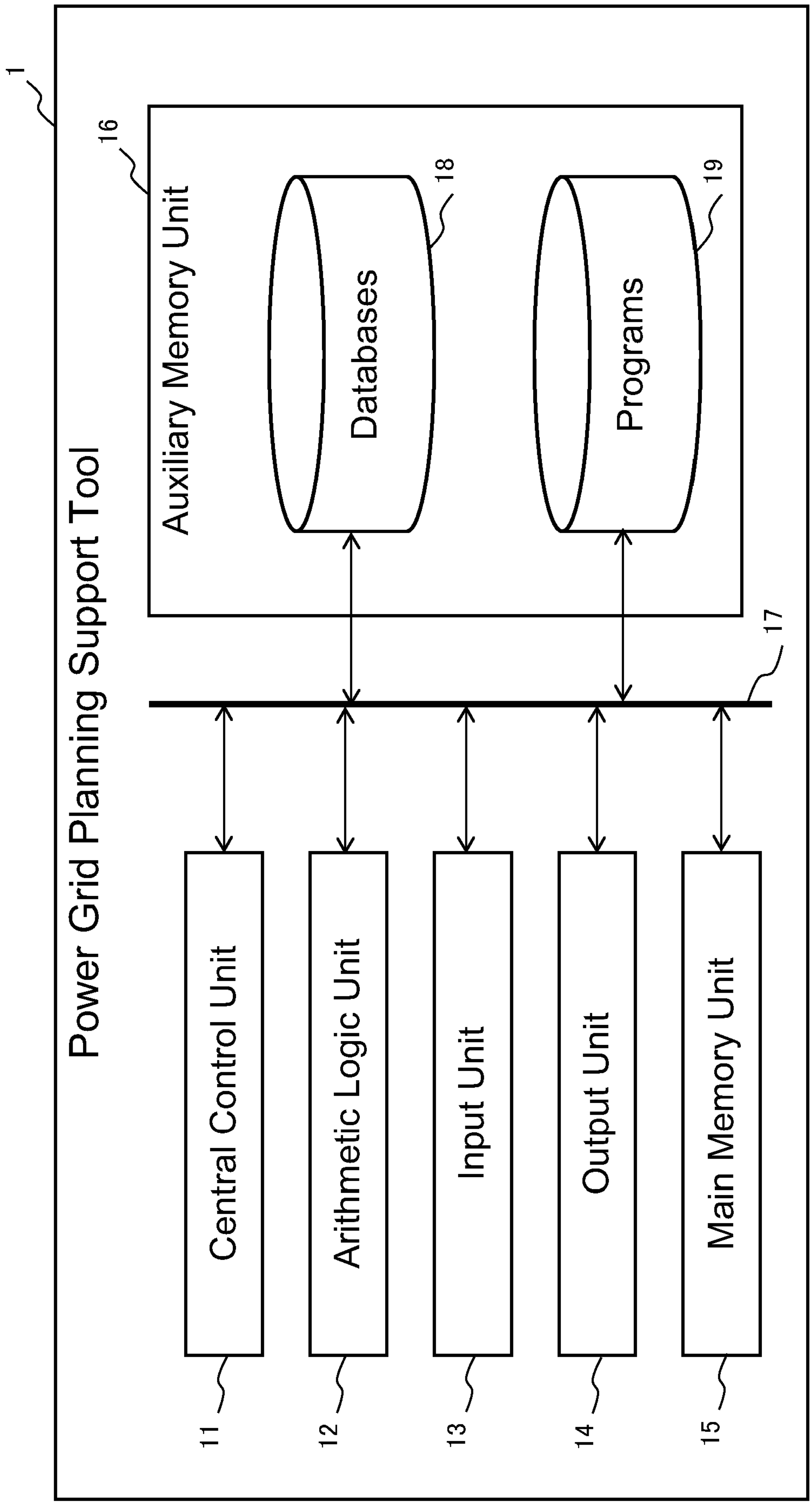
1
Power Grid Planning Support Tool
16
Auxiliary Memory Unit
18
Databases
19
Programs
17
Central Control Unit
Arithmetic Logic Unit
Input Unit
Output Unit
Main Memory Unit
11
12
13
14
15

Fig. 1

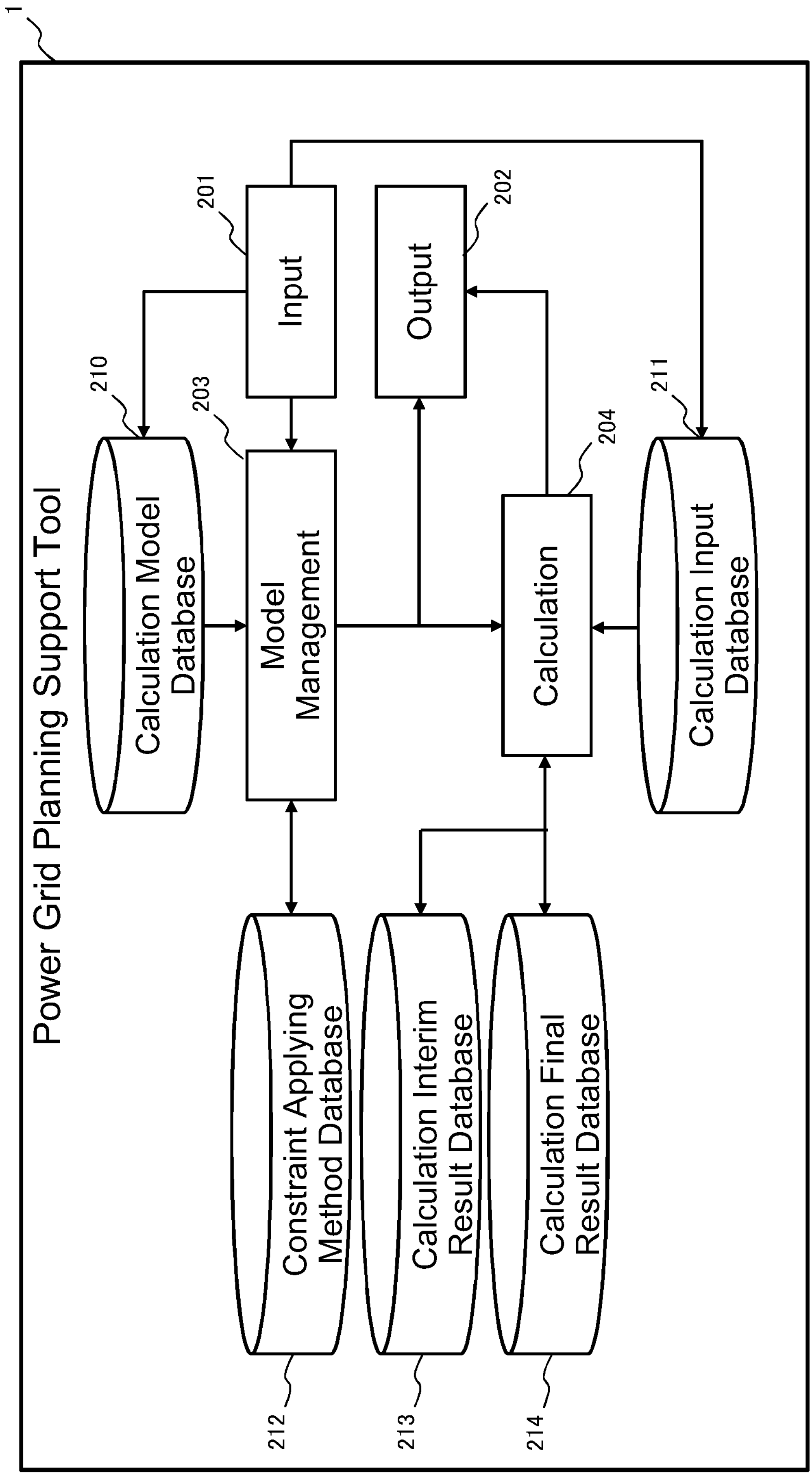
1
Power Grid Planning Support Tool
201
Input
202
Output
210
Calculation Model Database
203
Model Management
204
Calculation
211
Calculation Input Database
Constraint Applying Method Database
212
Calculation Interim Result Database
213
Calculation Final Result Database
214

Fig. 2

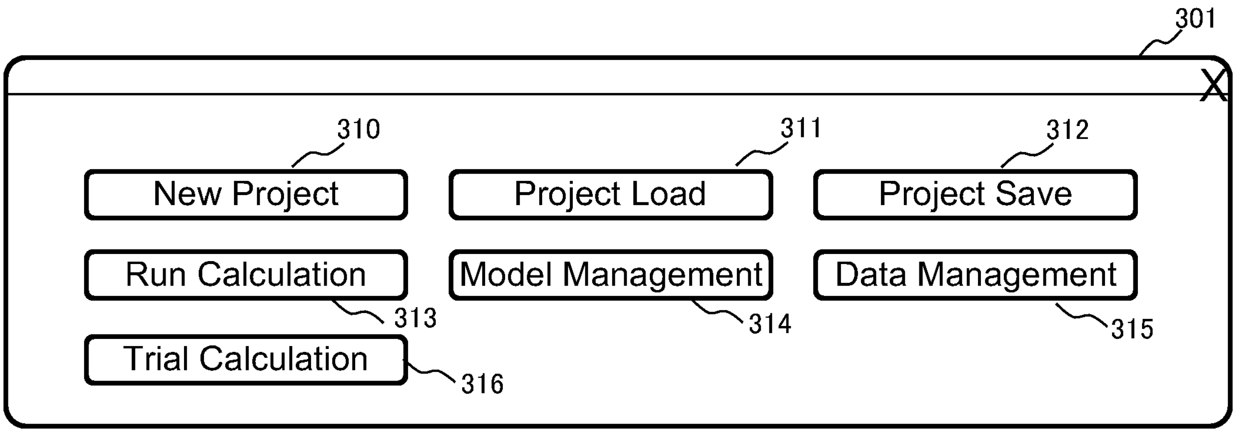
301
X
310
311
312
New Project
Project Load
Project Save
Run Calculation
Model Management
Data Management
313
314
315
Trial Calculation
316

Fig. 3

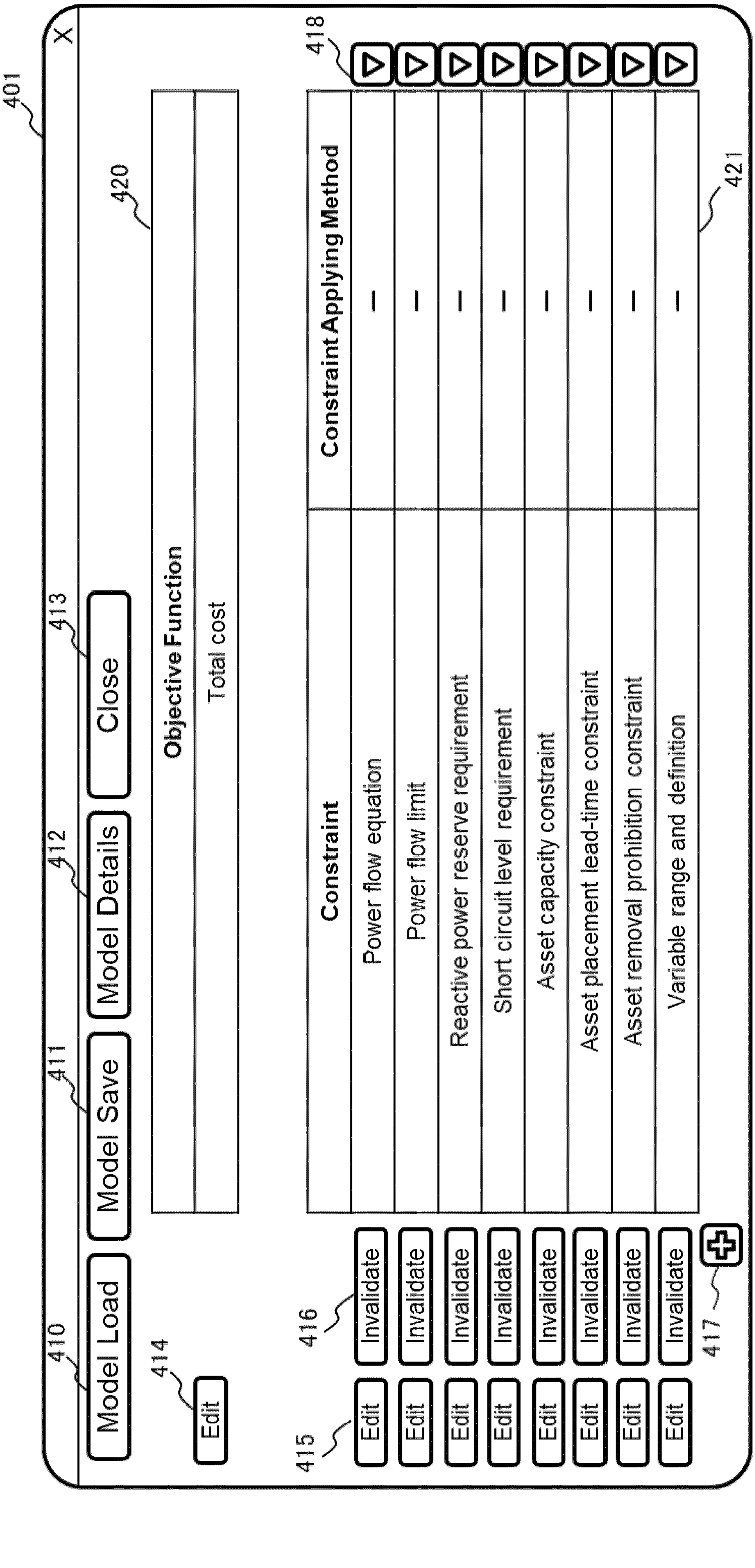
401
X
410
Model Load
411
Model Save
412
Model Details
413
Close
414
Edit
420
Objective Function
Total cost
415
416
Edit
Invalidate
Constraint
Constraint Applying Method
Power flow equation
Power flow limit
Reactive power reserve requirement
Short circuit level requirement
Asset capacity constraint
Asset placement lead-time constraint
Asset removal prohibition constraint
Variable range and definition
—
417
418
421

Fig. 4

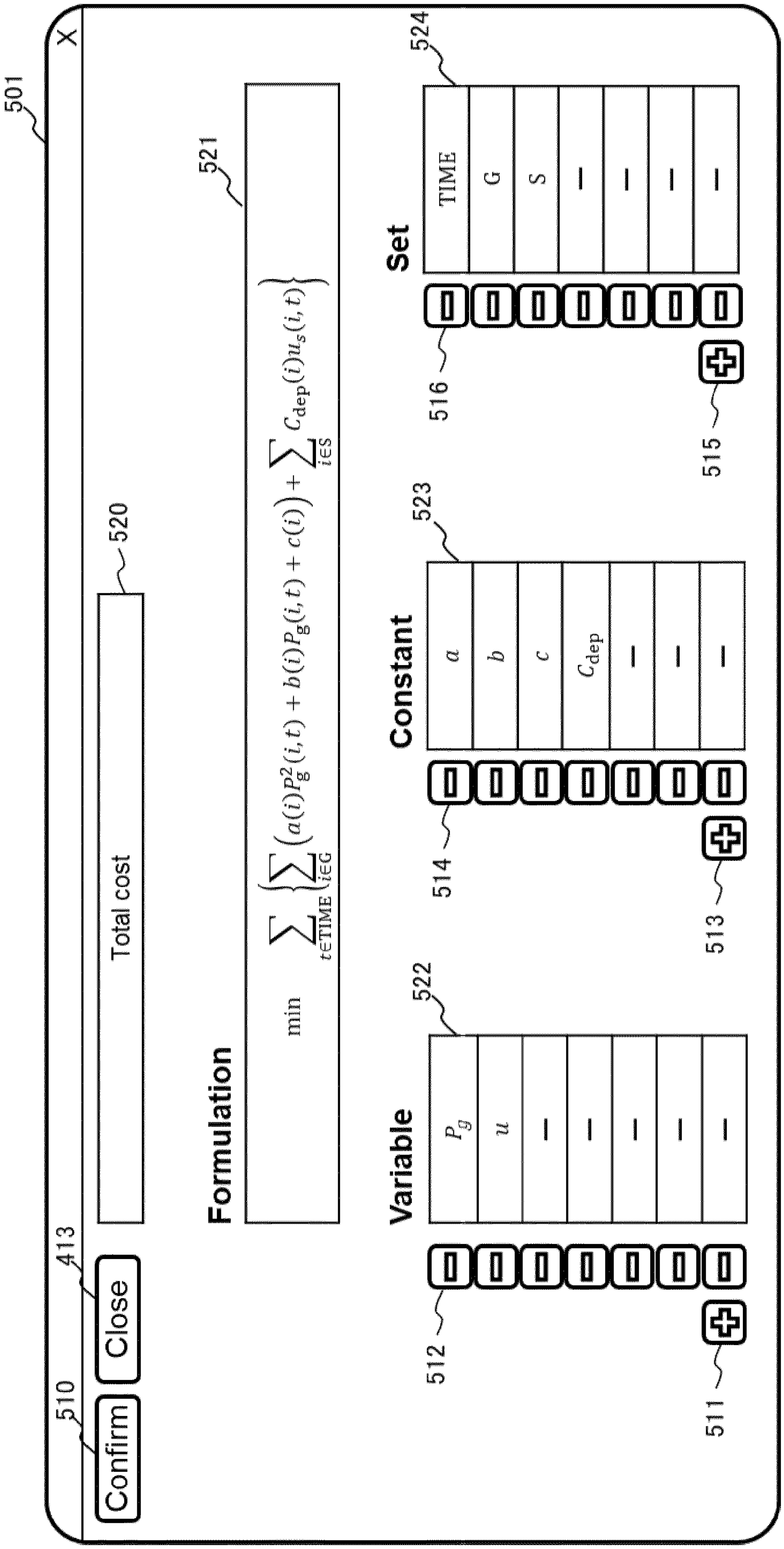
501
510
Confirm
413
Close
Total cost
520
Formulation
521
$\min \sum_{t \in \mathrm{TIME}} \left\{ \sum_{i \in G} \left( a(i) P_g^2(i,t) + b(i) P_g(i,t) + c(i) \right) + \sum_{i \in S} C_{\mathrm{dep}}(i) u_s(i,t) \right\}$
Variable
522
$P_g$
$u$
512
511
Constant
523
$a$
$b$
$c$
$C_{\mathrm{dep}}$
514
513
Set
524
TIME
G
S
516
515

Fig. 5

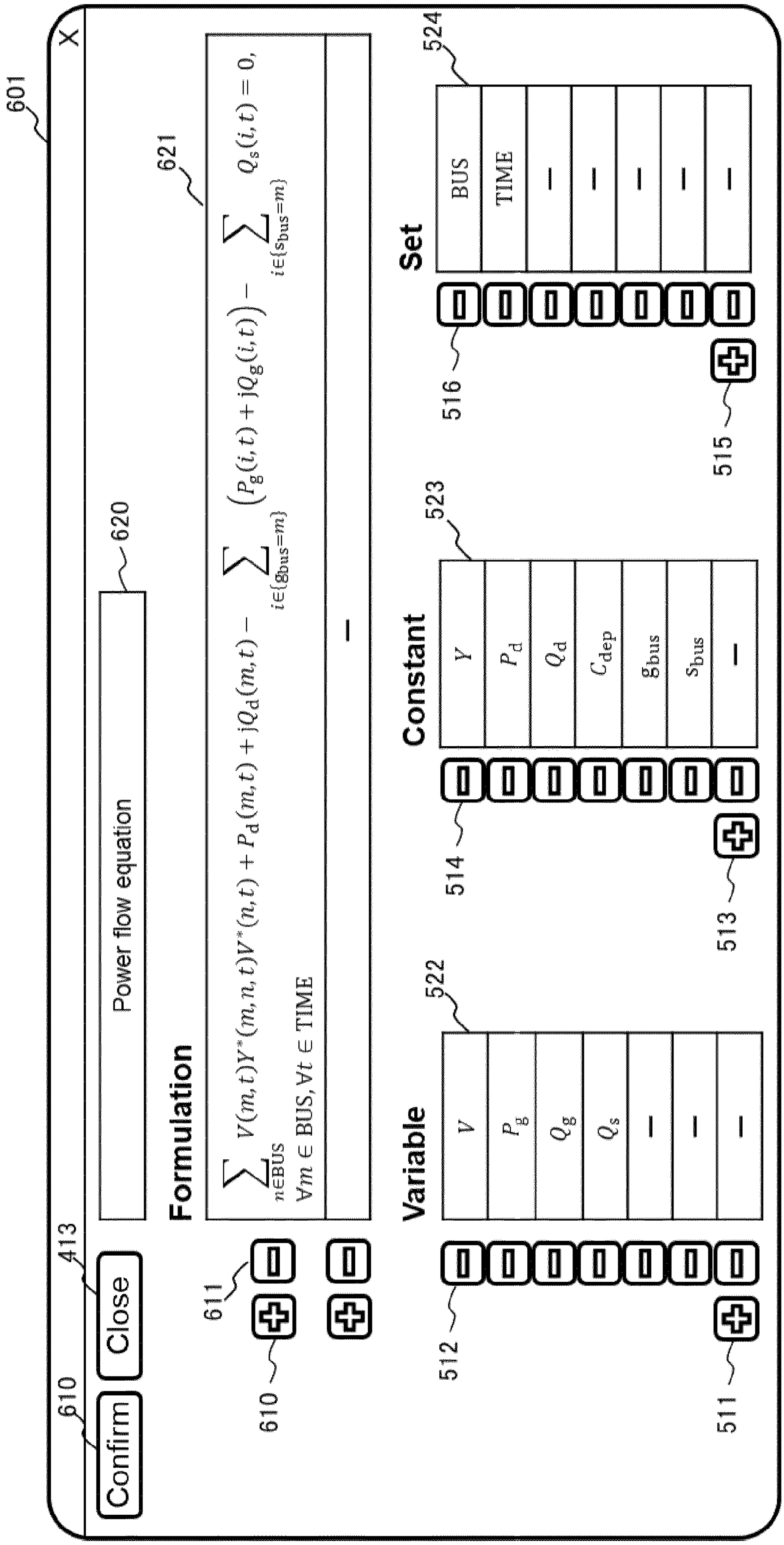
601
X
Confirm
610
Close
413
Power flow equation
620
Formulation
621
610
611
$\sum_{n \in BUS} V(m,t)Y^*(m,n,t)V^*(n,t) + P_d(m,t) + jQ_d(m,t) - \sum_{i \in \{g_{bus}=m\}} \left(P_g(i,t) + jQ_g(i,t)\right) - \sum_{i \in \{s_{bus}=m\}} Q_s(i,t) = 0,$
$\forall m \in BUS, \forall t \in TIME$
—
Variable
512
522
V
$P_g$
$Q_g$
$Q_s$
—
—
—
511
Constant
514
523
Y
$P_d$
$Q_d$
$C_{dep}$
$g_{bus}$
$s_{bus}$
—
513
Set
516
524
BUS
TIME
—
—
—
—
—
515

Fig. 6

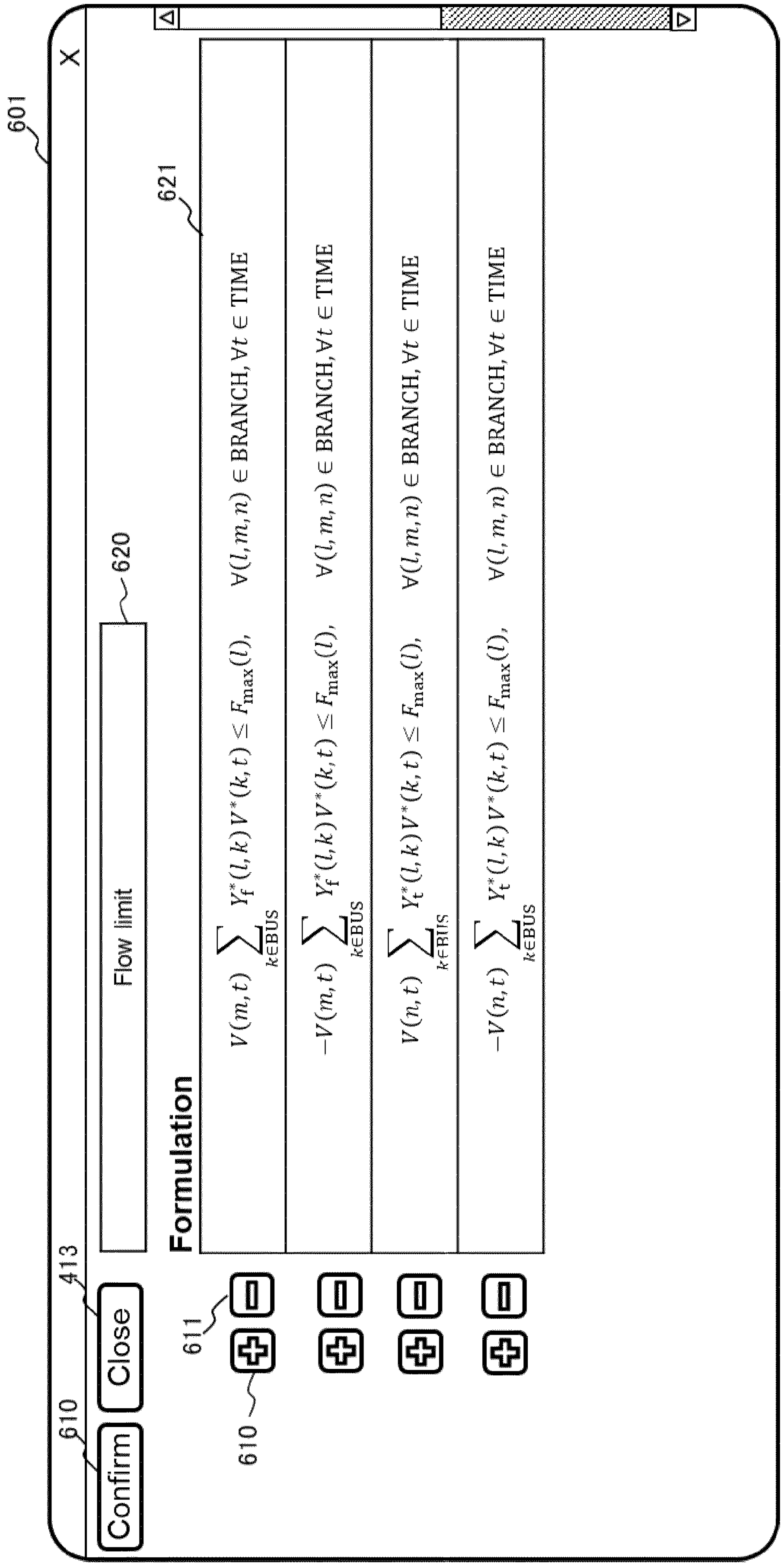
601
621
620
413
610
611
Confirm
Close
Flow limit
Formulation
$V(m,t)\sum_{k\in\mathrm{BUS}} Y_{\mathrm{f}}^{*}(l,k)V^{*}(k,t) \le F_{\max}(l), \quad \forall(l,m,n)\in \mathrm{BRANCH}, \forall t \in \mathrm{TIME}$
$-V(m,t)\sum_{k\in\mathrm{BUS}} Y_{\mathrm{f}}^{*}(l,k)V^{*}(k,t) \le F_{\max}(l), \quad \forall(l,m,n)\in \mathrm{BRANCH}, \forall t \in \mathrm{TIME}$
$V(n,t)\sum_{k\in\mathrm{BUS}} Y_{\mathrm{t}}^{*}(l,k)V^{*}(k,t) \le F_{\max}(l), \quad \forall(l,m,n)\in \mathrm{BRANCH}, \forall t \in \mathrm{TIME}$
$-V(n,t)\sum_{k\in\mathrm{BUS}} Y_{\mathrm{t}}^{*}(l,k)V^{*}(k,t) \le F_{\max}(l), \quad \forall(l,m,n)\in \mathrm{BRANCH}, \forall t \in \mathrm{TIME}$

Fig. 7

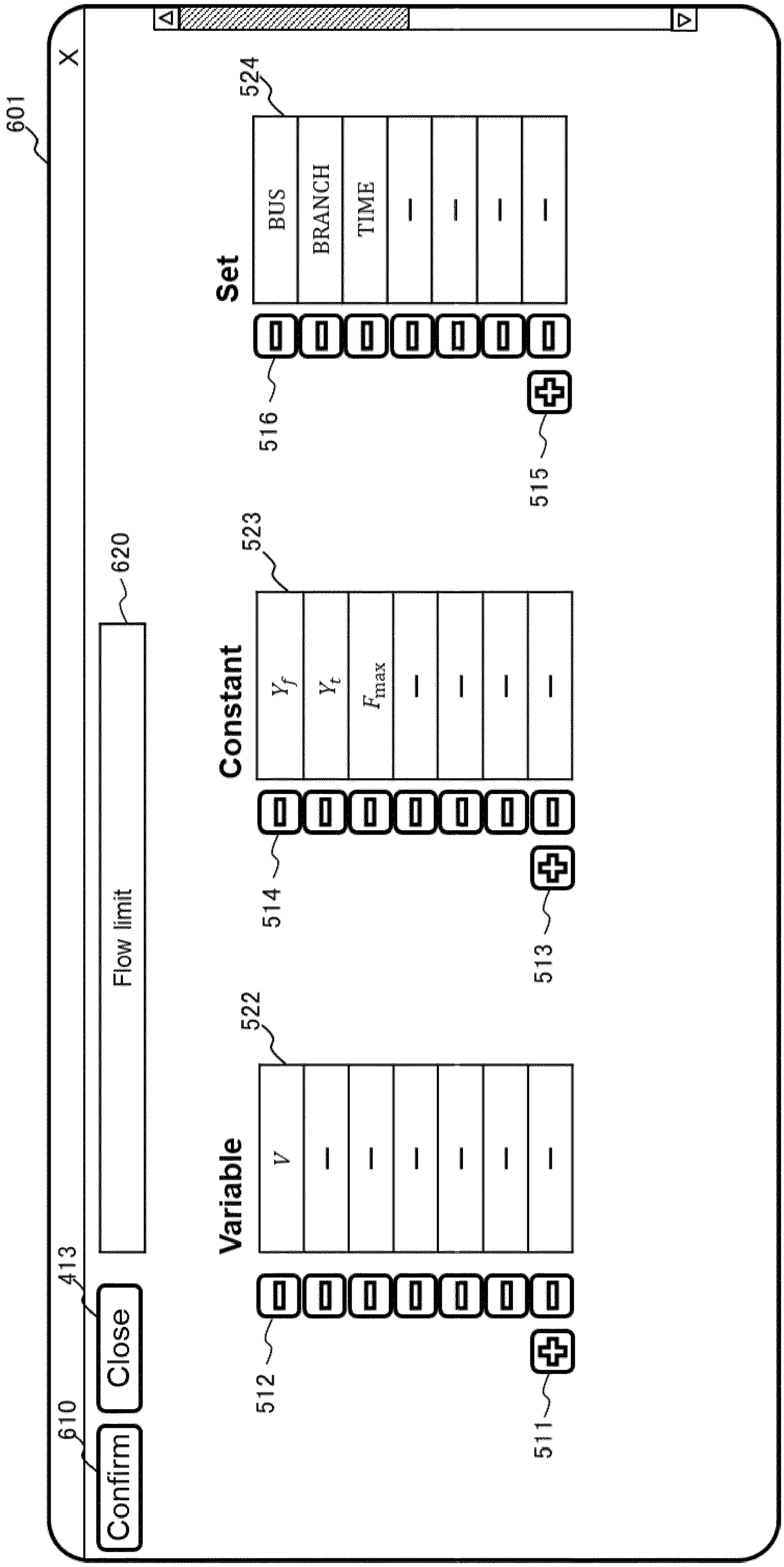
601
Confirm
610
Close
413
Flow limit
620
Variable
522
512
511
V
Constant
523
514
513
$Y_f$
$Y_t$
$F_{max}$
Set
524
516
515
BUS
BRANCH
TIME

Fig. 8

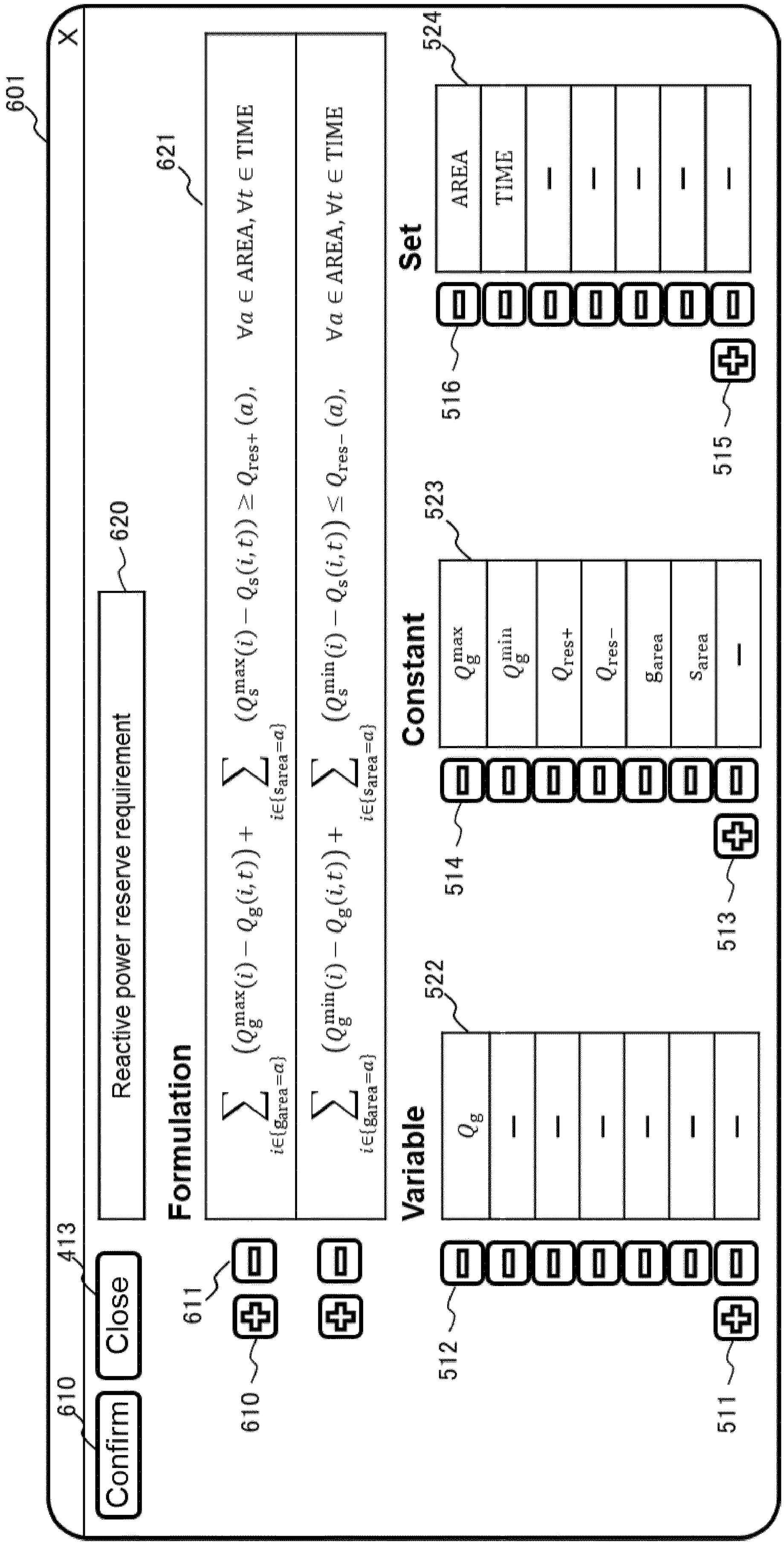
601
Confirm
Close
413
610
Reactive power reserve requirement
620
Formulation
621
611
Variable
Constant
Set
AREA
TIME
511
512
513
514
515
516
522
523
524

Fig. 9

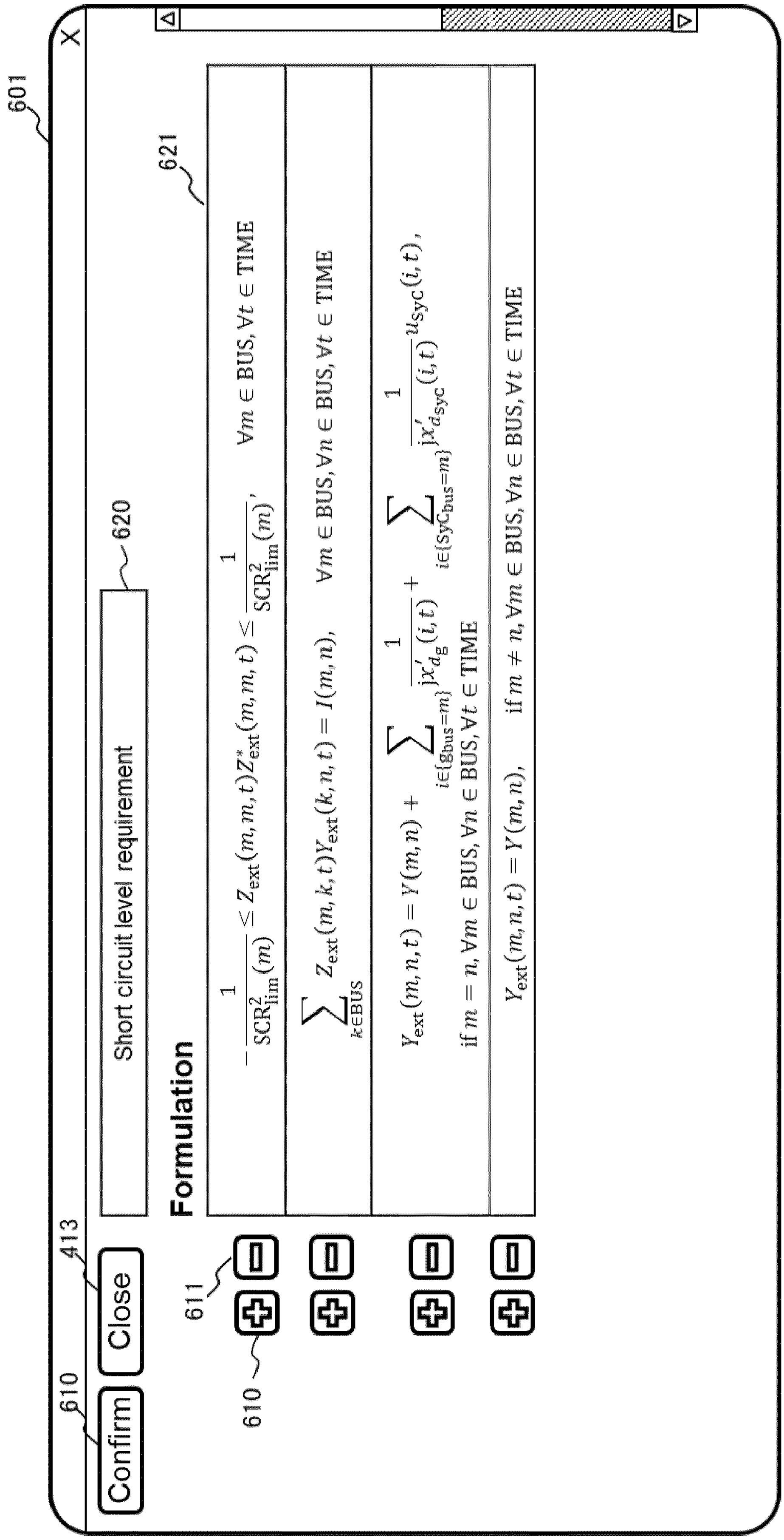
601
Confirm
610
Close
413
Short circuit level requirement
620
Formulation
621
610
611
$-\frac{1}{\mathrm{SCR}_{\mathrm{lim}}^2(m)} \le Z_{\mathrm{ext}}(m,m,t)Z^*_{\mathrm{ext}}(m,m,t) \le \frac{1}{\mathrm{SCR}_{\mathrm{lim}}^2(m)}, \quad \forall m \in \mathrm{BUS}, \forall t \in \mathrm{TIME}$
$\sum_{k\in \mathrm{BUS}} Z_{\mathrm{ext}}(m,k,t)Y_{\mathrm{ext}}(k,n,t) = I(m,n), \quad \forall m \in \mathrm{BUS}, \forall n \in \mathrm{BUS}, \forall t \in \mathrm{TIME}$
$Y_{\mathrm{ext}}(m,n,t) = Y(m,n) + \sum_{i\in\{g_{\mathrm{bus}}=m\}} \frac{1}{\mathrm{j}x'_{d_g}(i,t)} + \sum_{i\in\{\mathrm{SyC}_{\mathrm{bus}}=m\}} \frac{1}{\mathrm{j}x'_{d_{\mathrm{SyC}}}(i,t)} u_{\mathrm{SyC}}(i,t),$
$\text{if } m = n, \forall m \in \mathrm{BUS}, \forall n \in \mathrm{BUS}, \forall t \in \mathrm{TIME}$
$Y_{\mathrm{ext}}(m,n,t) = Y(m,n), \quad \text{if } m \ne n, \forall m \in \mathrm{BUS}, \forall n \in \mathrm{BUS}, \forall t \in \mathrm{TIME}$

Fig. 10

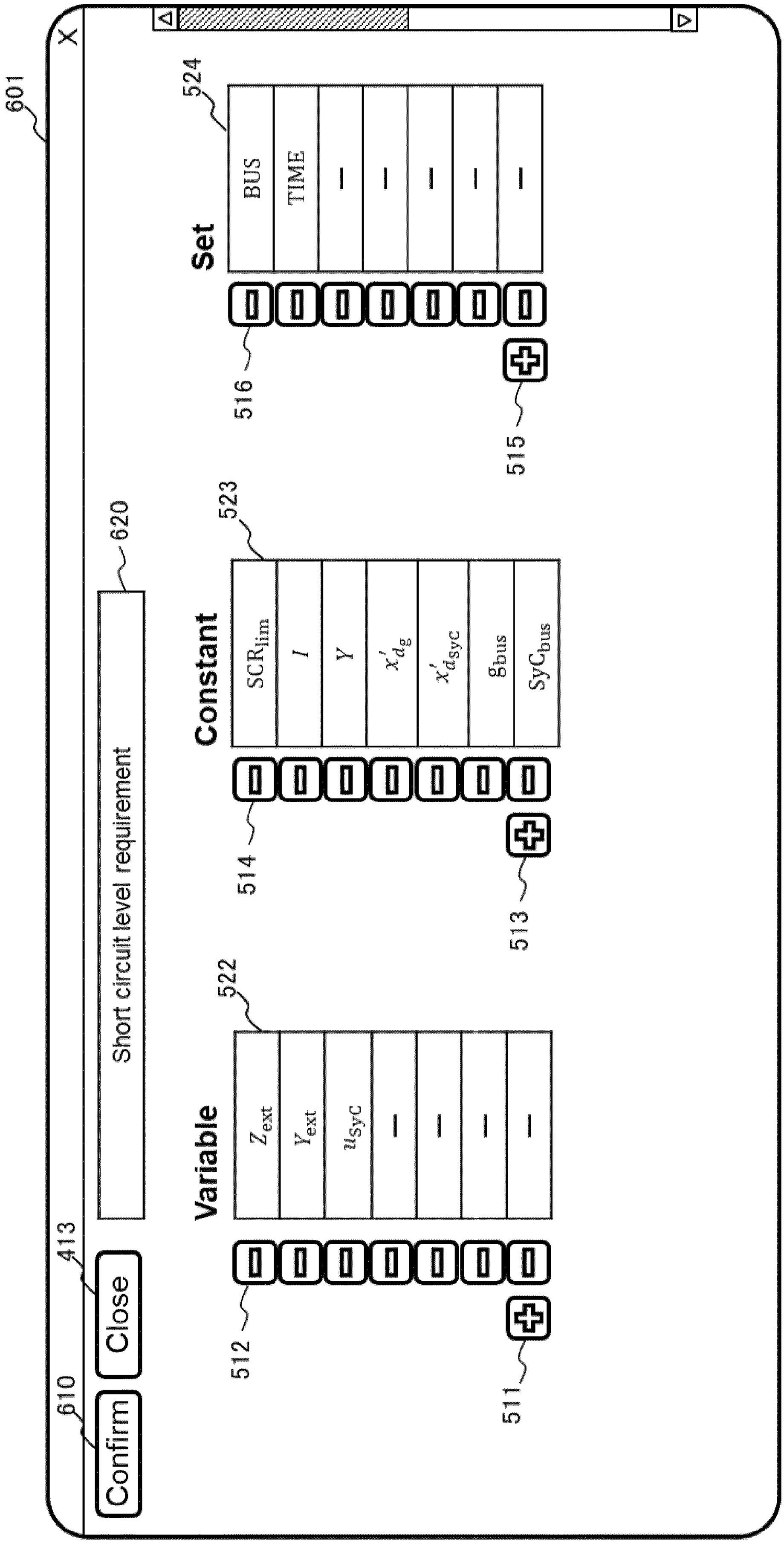
601
Confirm
610
Close
413
Short circuit level requirement
620
Variable
522
$Z_{ext}$
$Y_{ext}$
$u_{SyC}$
511
512
Constant
523
$SCR_{lim}$
$I$
$Y$
$x'_{d_g}$
$x'_{d_{SyC}}$
$g_{bus}$
$SyC_{bus}$
513
514
Set
524
BUS
TIME
515
516

Fig. 11

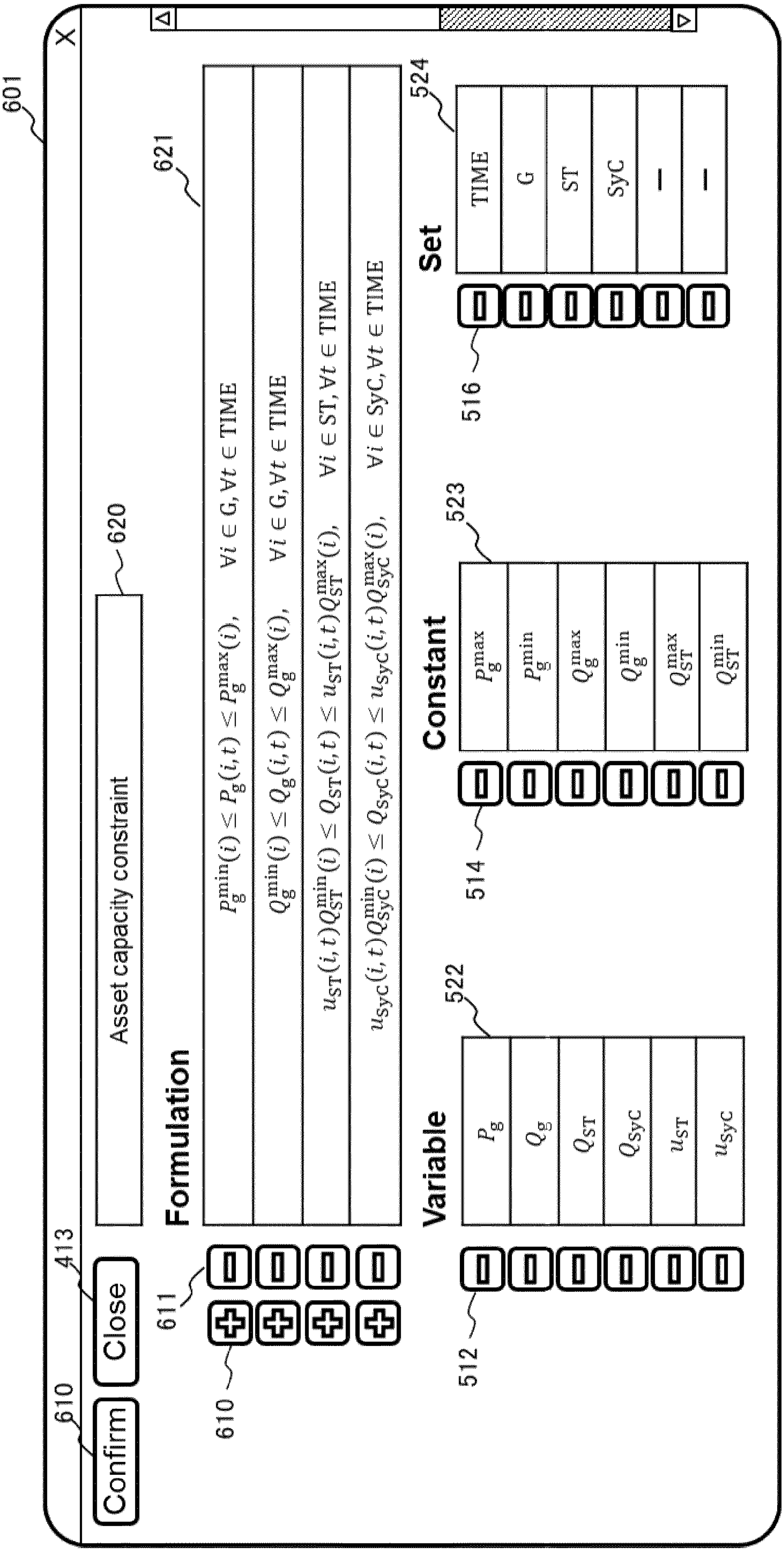
601
Confirm
Close
610
413
Asset capacity constraint
620
Formulation
621
611
610
$P_g^{min}(i) \leq P_g(i,t) \leq P_g^{max}(i), \quad \forall i \in G, \forall t \in TIME$
$Q_g^{min}(i) \leq Q_g(i,t) \leq Q_g^{max}(i), \quad \forall i \in G, \forall t \in TIME$
$u_{ST}(i,t)Q_{ST}^{min}(i) \leq Q_{ST}(i,t) \leq u_{ST}(i,t)Q_{ST}^{max}(i), \quad \forall i \in ST, \forall t \in TIME$
$u_{SyC}(i,t)Q_{SyC}^{min}(i) \leq Q_{SyC}(i,t) \leq u_{SyC}(i,t)Q_{SyC}^{max}(i), \quad \forall i \in SyC, \forall t \in TIME$
Variable
512
522
$P_g$
$Q_g$
$Q_{ST}$
$Q_{SyC}$
$u_{ST}$
$u_{SyC}$
Constant
514
523
$P_g^{max}$
$P_g^{min}$
$Q_g^{max}$
$Q_g^{min}$
$Q_{ST}^{max}$
$Q_{ST}^{min}$
Set
516
524
TIME
G
ST
SyC
—
—

Fig. 12

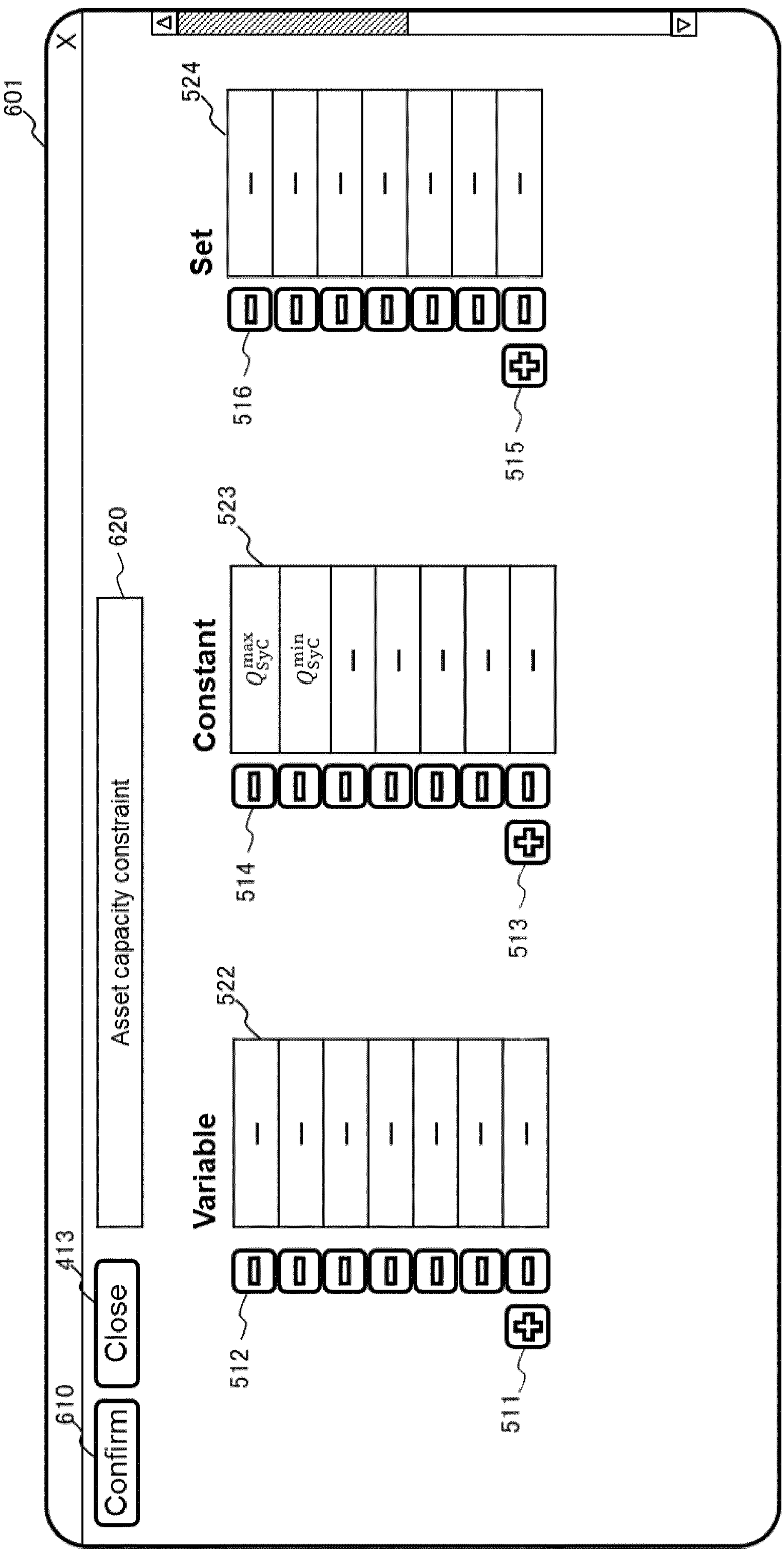
601
Confirm
610
Close
413
Asset capacity constraint
620
Variable
522
512
511
Constant
523
$Q_{SyC}^{max}$
$Q_{SyC}^{min}$
514
513
Set
524
516
515

Fig. 13

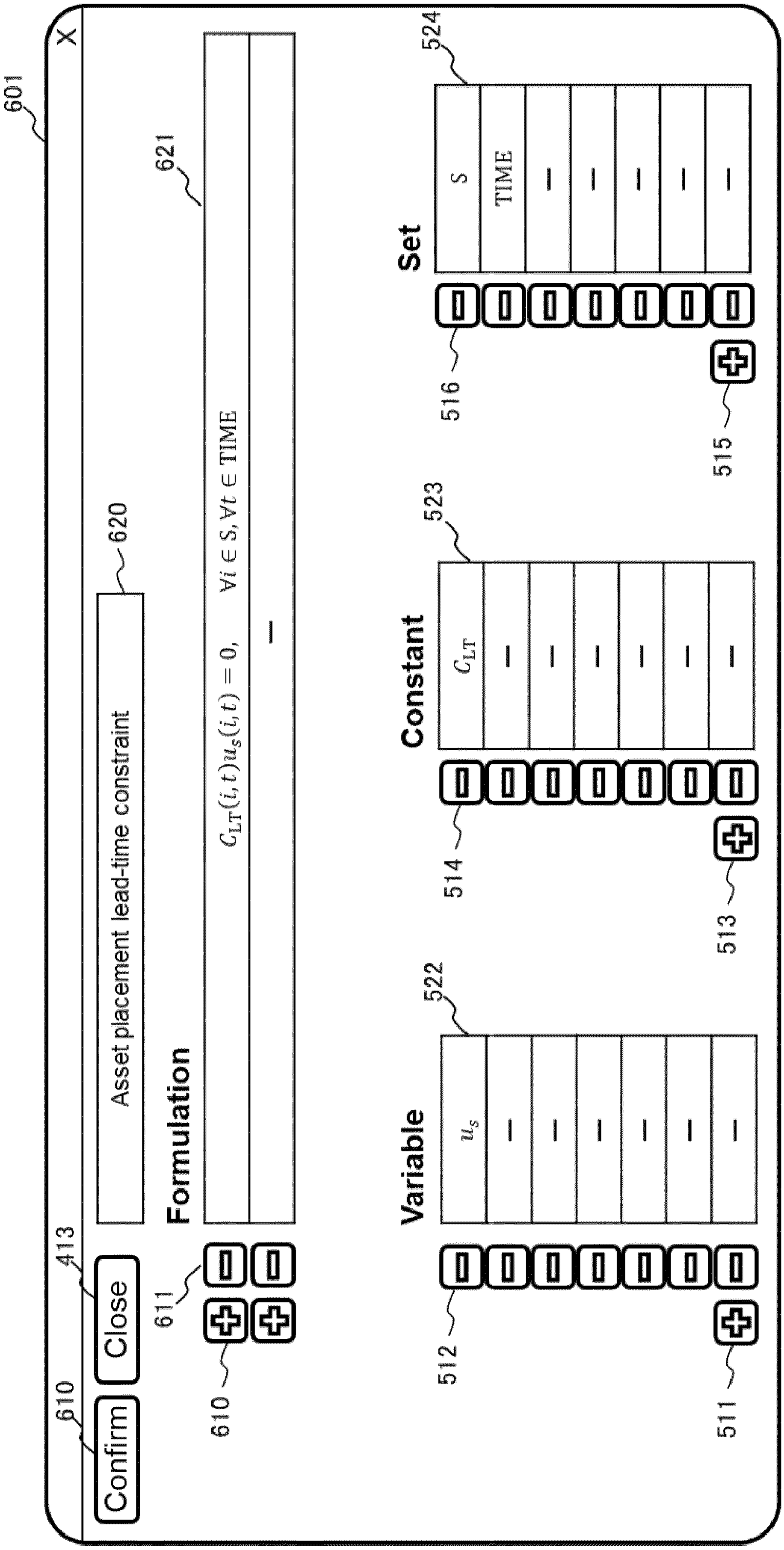
601
Confirm
610
Close
413
Asset placement lead-time constraint
620
Formulation
610
611
621
$C_{LT}(i,t)u_s(i,t) = 0, \quad \forall i \in S, \forall t \in TIME$
Variable
$u_s$
512
522
511
Constant
$C_{LT}$
514
523
513
Set
S
TIME
516
524
515

Fig. 14

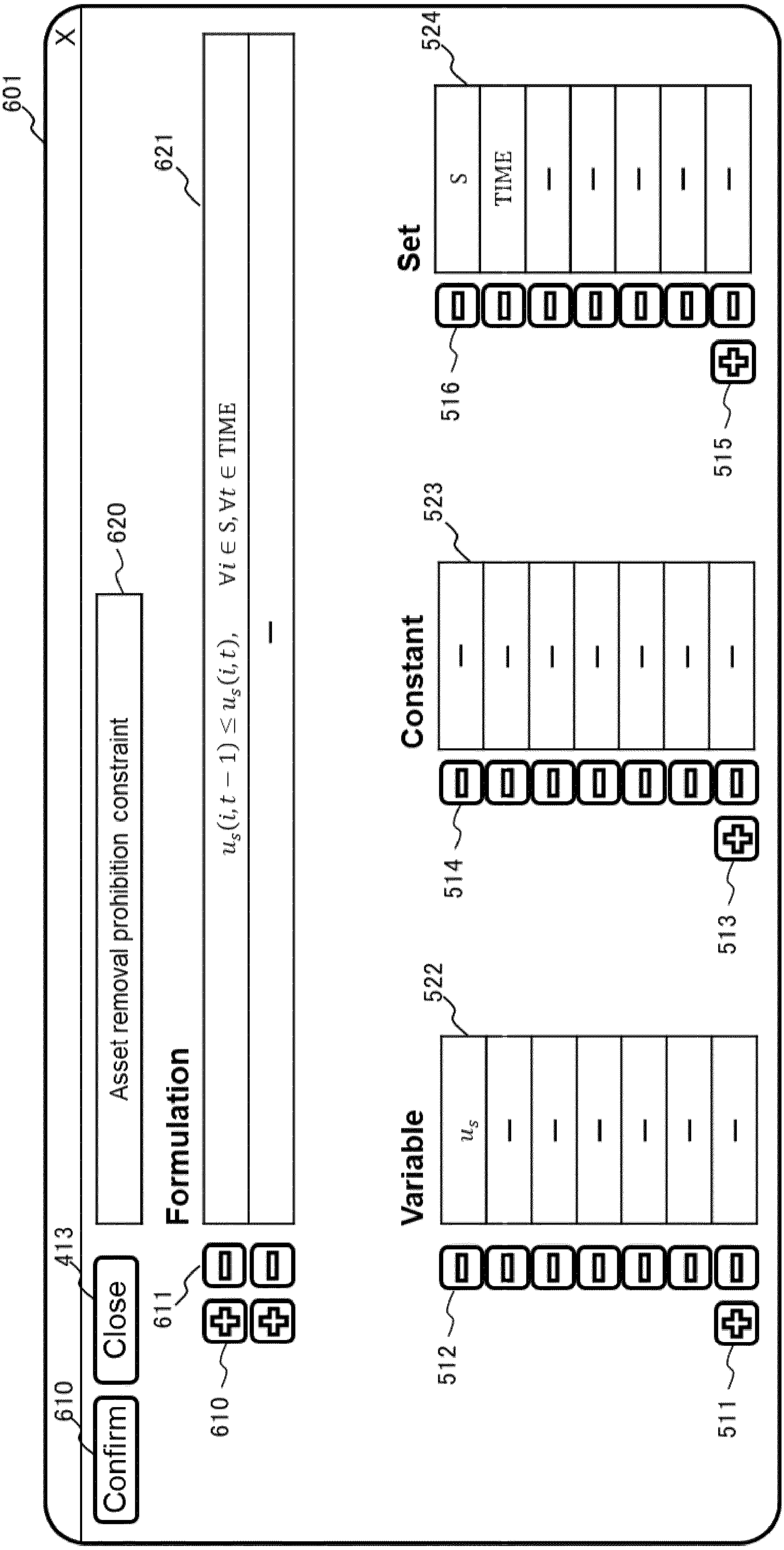
601
Confirm
Close
610
413
Asset removal prohibition constraint
620
Formulation
621
610
611
$u_s(i, t-1) \leq u_s(i, t), \quad \forall i \in S, \forall t \in TIME$
Variable
$u_s$
512
511
522
Constant
514
513
523
Set
S
TIME
516
515
524

Fig. 15

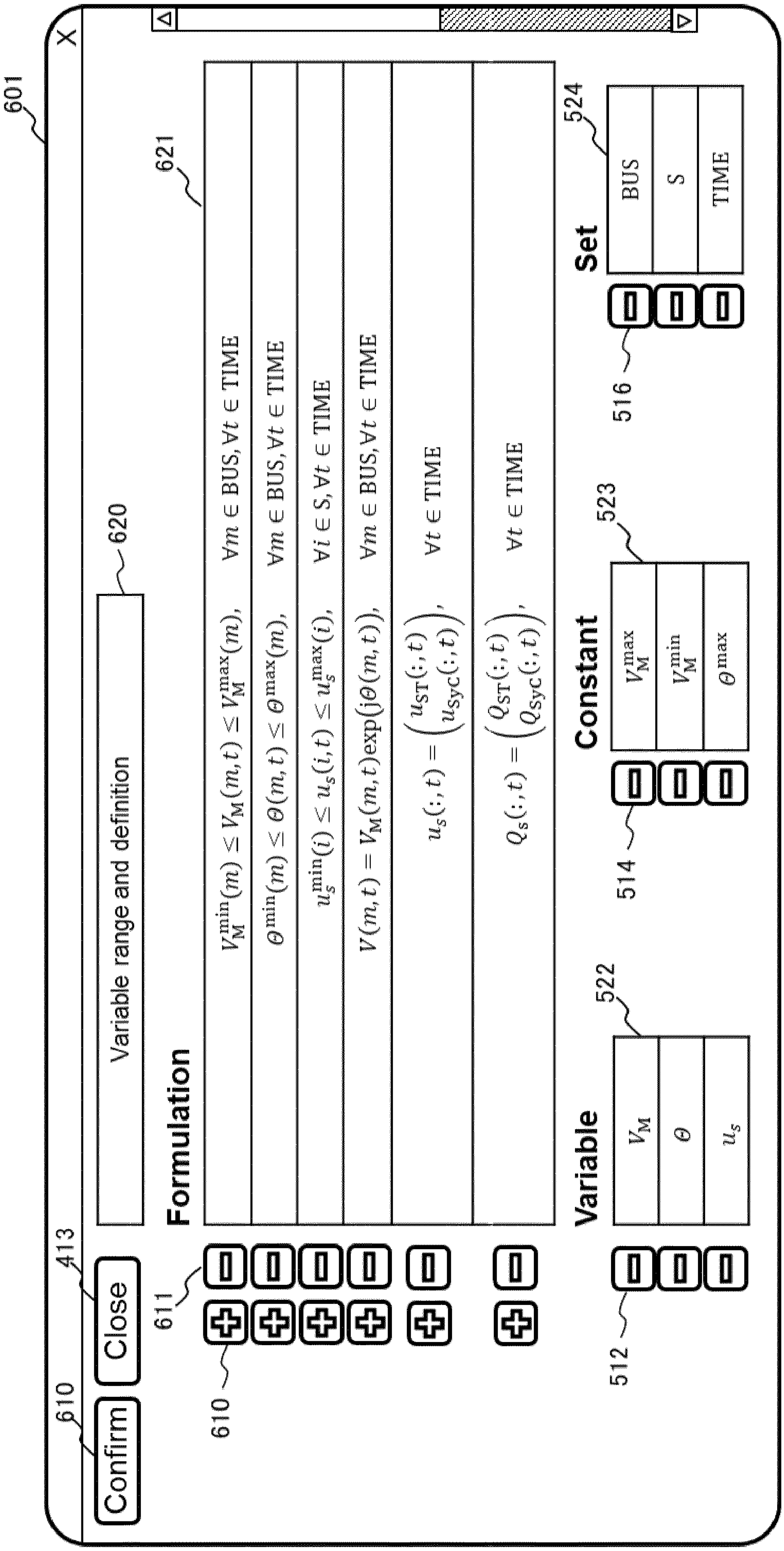
601
Confirm
Close
610
413
Variable range and definition
620
Formulation
621
611
610
Variable
512
522
$V_M$
$\theta$
$u_s$
Constant
514
523
$V_M^{max}$
$V_M^{min}$
$\theta^{max}$
Set
516
524
BUS
S
TIME

Fig. 16

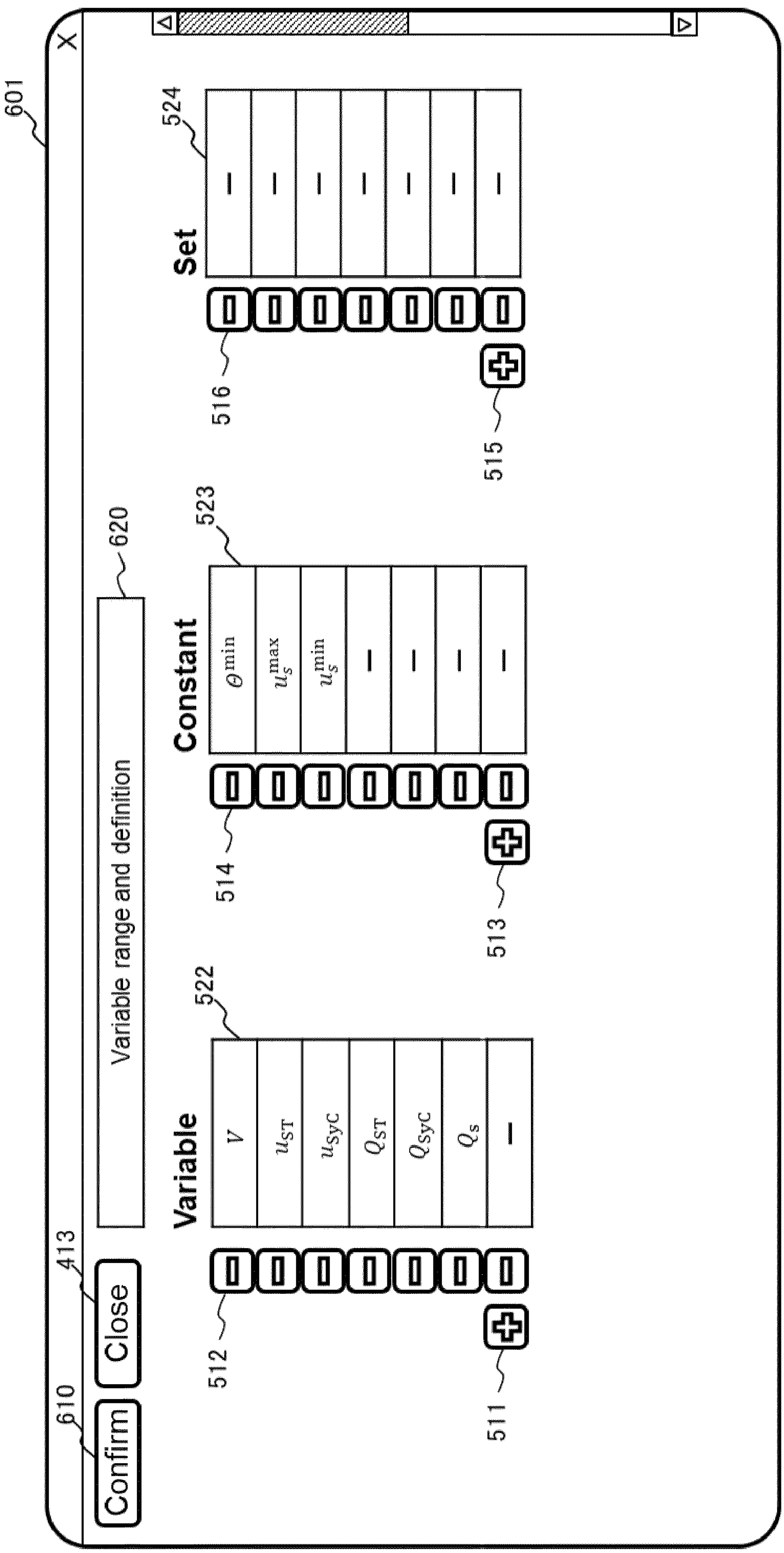
601
Confirm
610
Close
413
Variable range and definition
620
Variable
Constant
Set
V
$u_{ST}$
$u_{SyC}$
$Q_{ST}$
$Q_{SyC}$
$Q_s$
$\theta^{min}$
$u_s^{max}$
$u_s^{min}$
511
512
513
514
515
516
522
523
524

Fig. 17

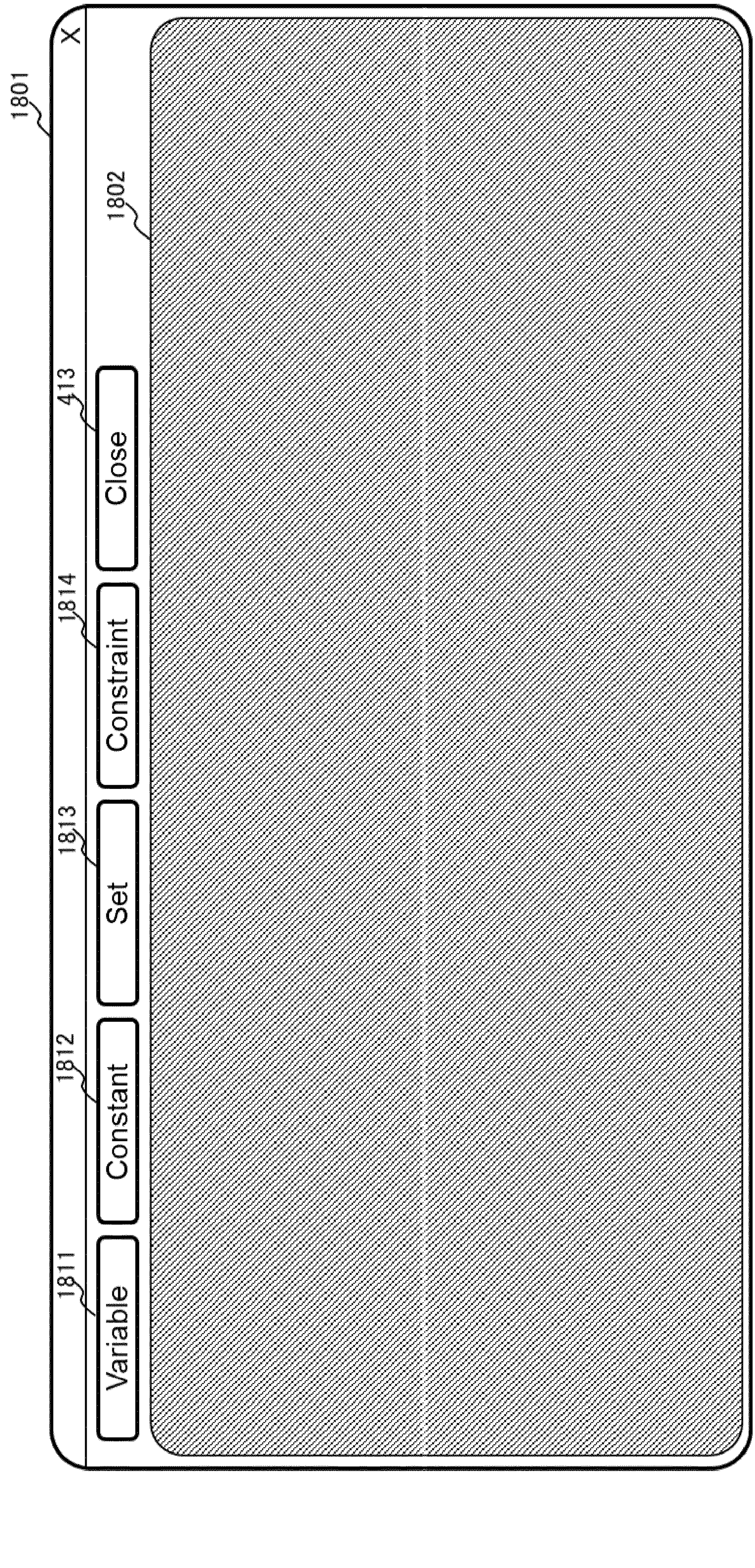
1801
X
1802
Variable
1811
Constant
1812
Set
1813
Constraint
1814
Close
413

Fig. 18

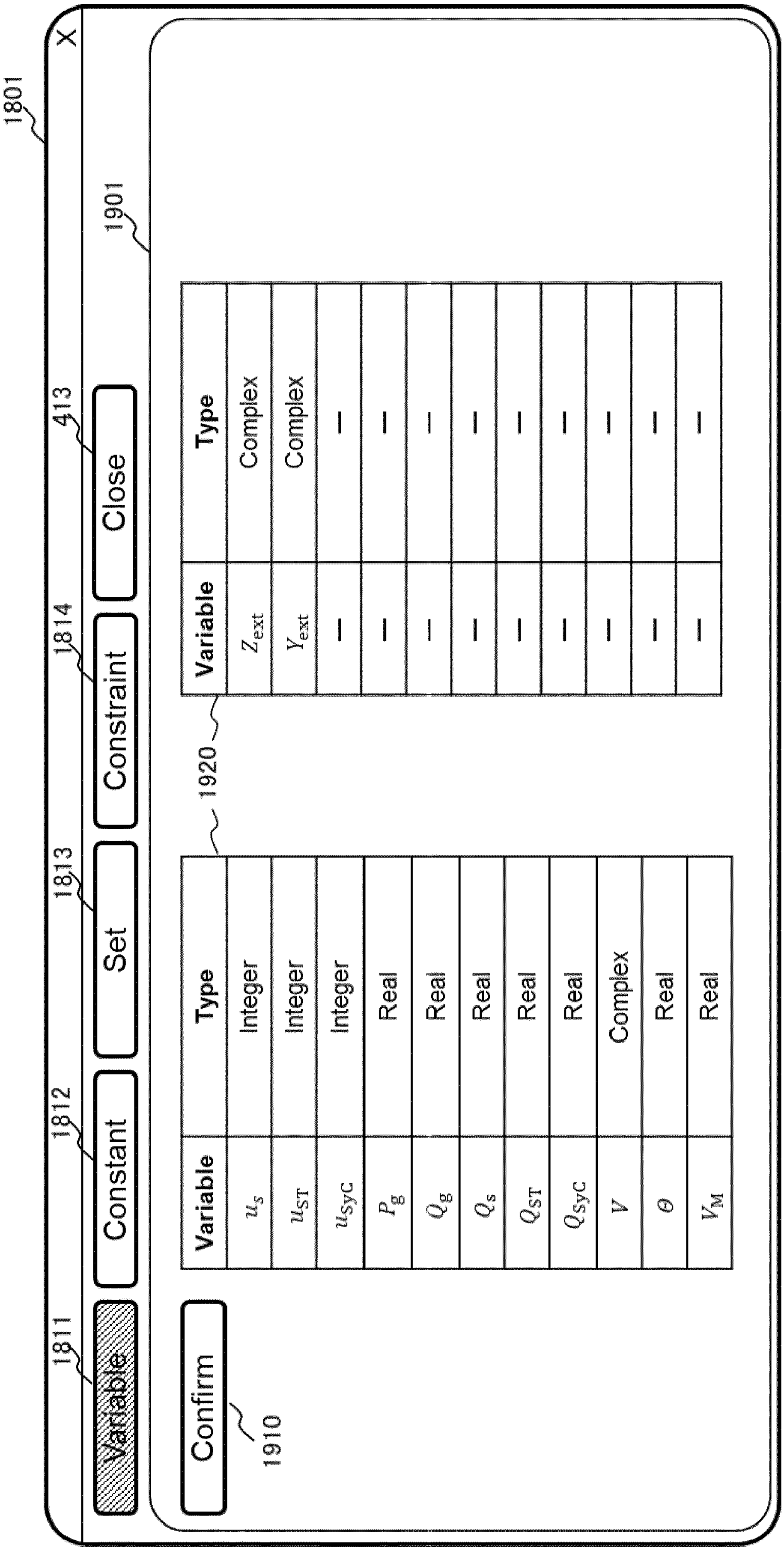
1801
X
1811
Variable
1812
Constant
1813
Set
1814
Constraint
413
Close
1901
Confirm
1910
1920
Variable
Type
$u_s$
Integer
$u_{ST}$
Integer
$u_{SyC}$
Integer
$P_g$
Real
$Q_g$
Real
$Q_s$
Real
$Q_{ST}$
Real
$Q_{SyC}$
Real
$V$
Complex
$\theta$
Real
$V_M$
Real
Variable
Type
$Z_{ext}$
Complex
$Y_{ext}$
Complex

Fig. 19

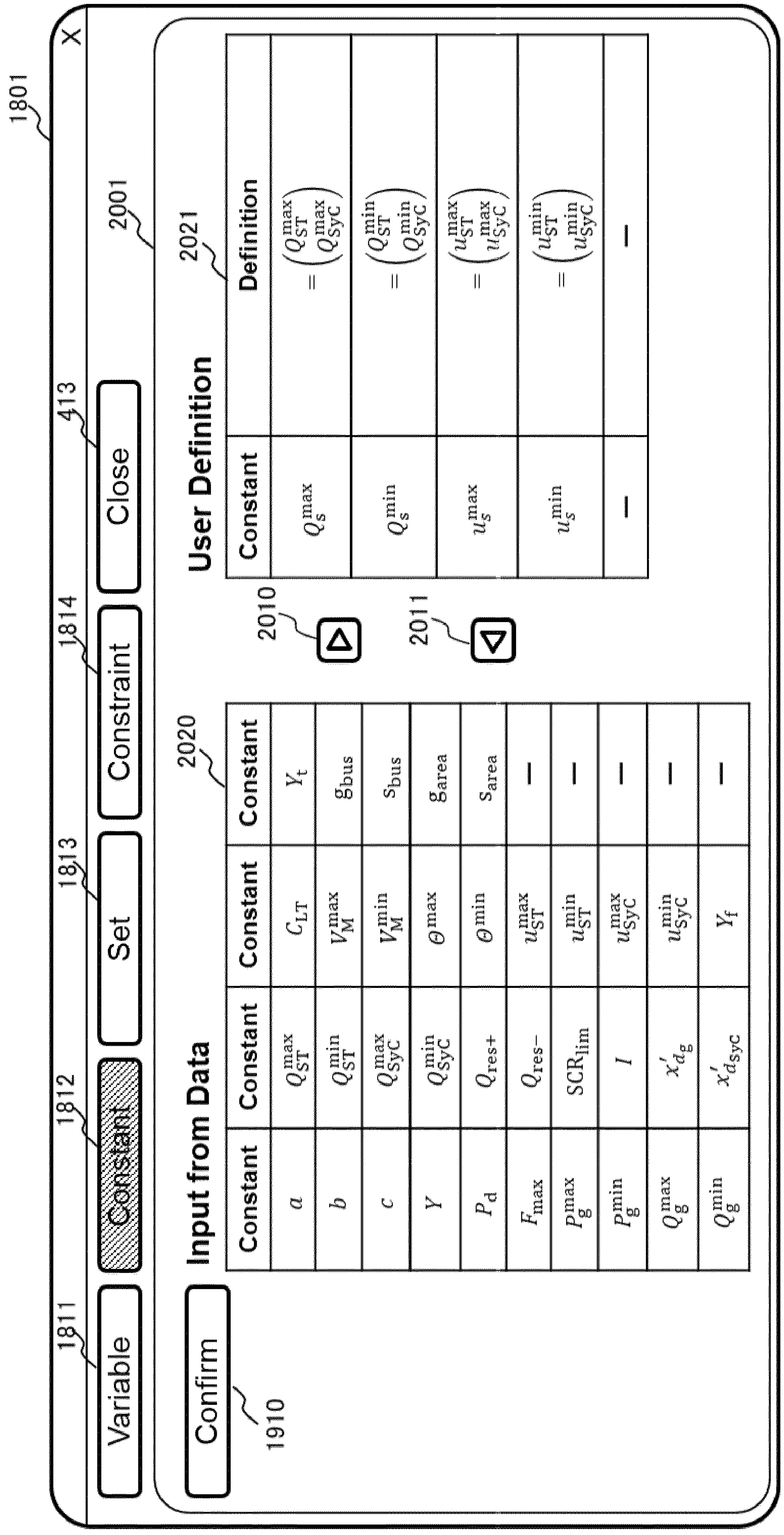
1801
X
1811
Variable
1812
Constant
1813
Set
1814
Constraint
413
Close
2001
Confirm
1910
Input from Data
2020
Constant
$a$
$b$
$c$
$Y$
$P_d$
$F_{max}$
$P_g^{max}$
$P_g^{min}$
$Q_g^{max}$
$Q_g^{min}$
Constant
$Q_{ST}^{max}$
$Q_{ST}^{min}$
$Q_{SyC}^{max}$
$Q_{SyC}^{min}$
$Q_{res+}$
$Q_{res-}$
$SCR_{lim}$
$I$
$x'_{d_g}$
$x'_{d_{SyC}}$
Constant
$C_{LT}$
$V_M^{max}$
$V_M^{min}$
$\Theta^{max}$
$\Theta^{min}$
$u_{ST}^{max}$
$u_{ST}^{min}$
$u_{SyC}^{max}$
$u_{SyC}^{min}$
$Y_f$
Constant
$Y_t$
$g_{bus}$
$s_{bus}$
$g_{area}$
$s_{area}$
—
—
—
—
—
2010
2011
User Definition
2021
Constant
Definition
$Q_s^{max}$
$= \begin{pmatrix} Q_{ST}^{max} \\ Q_{SyC}^{max} \end{pmatrix}$
$Q_s^{min}$
$= \begin{pmatrix} Q_{ST}^{min} \\ Q_{SyC}^{min} \end{pmatrix}$
$u_s^{max}$
$= \begin{pmatrix} u_{ST}^{max} \\ u_{SyC}^{max} \end{pmatrix}$
$u_s^{min}$
$= \begin{pmatrix} u_{ST}^{min} \\ u_{SyC}^{min} \end{pmatrix}$
—
—

Fig. 20

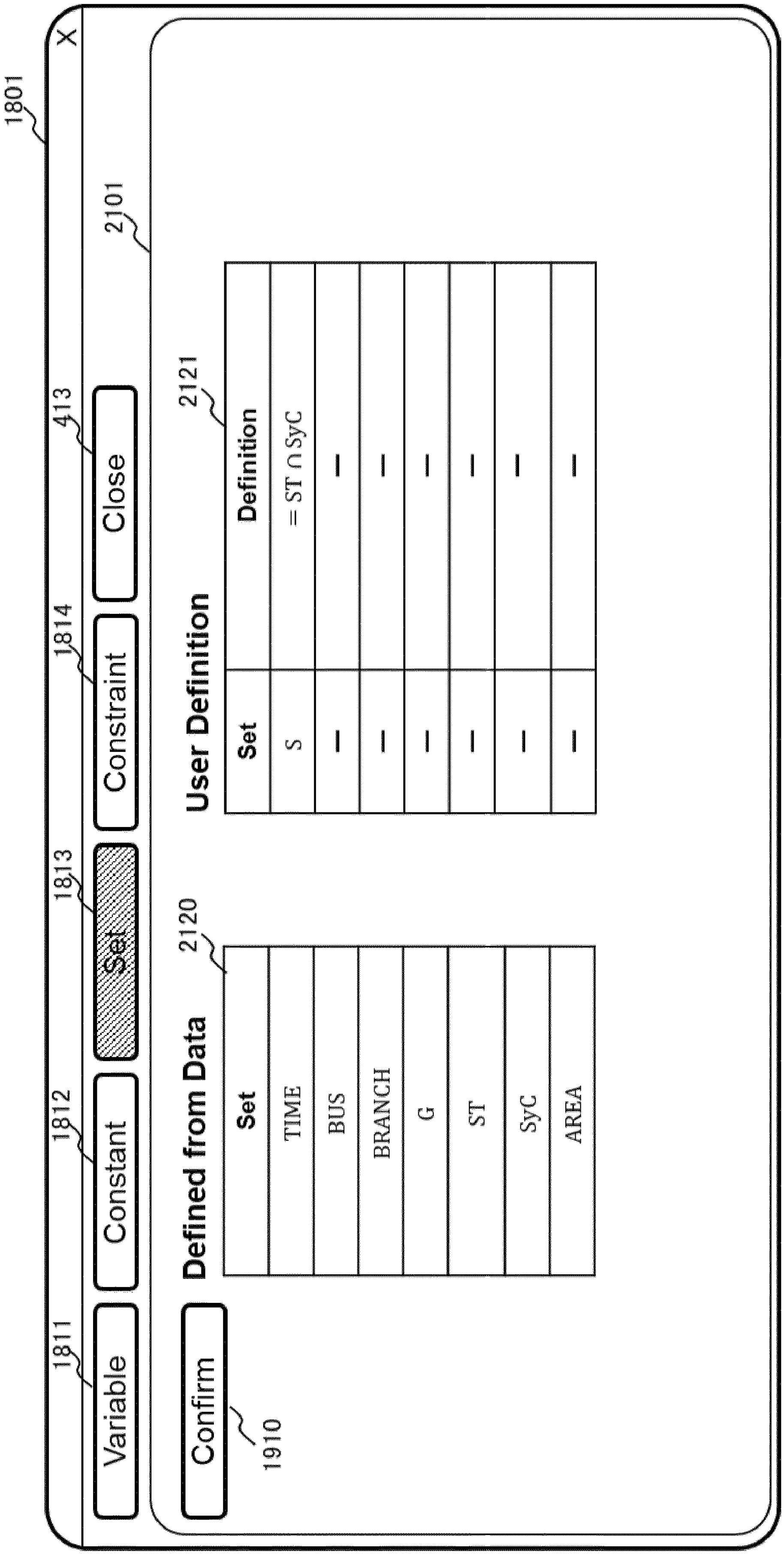
1801
X
2101
Variable
1811
Constant
1812
Set
1813
Constraint
1814
Close
413
Confirm
1910
Defined from Data
2120
Set
TIME
BUS
BRANCH
G
ST
SyC
AREA
User Definition
2121
Set
Definition
S
= ST ∩ SyC

Fig. 21

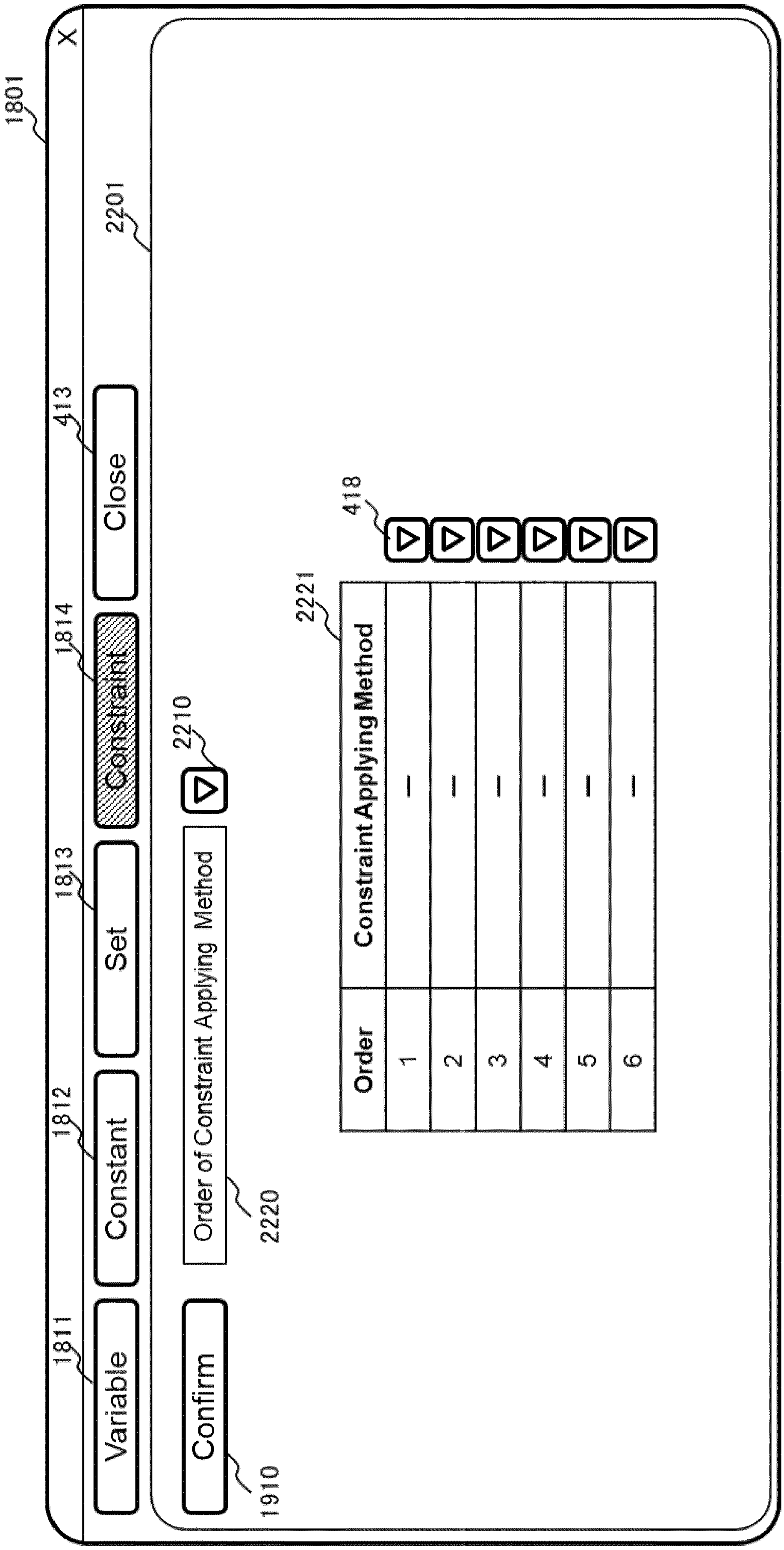
1801
X
2201
Variable
Constant
Set
Constraint
Close
1811
1812
1813
1814
413
Confirm
1910
Order of Constraint Applying Method
2220
2210
2221
418
Order
Constraint Applying Method
1
2
3
4
5
6
—

Fig. 22

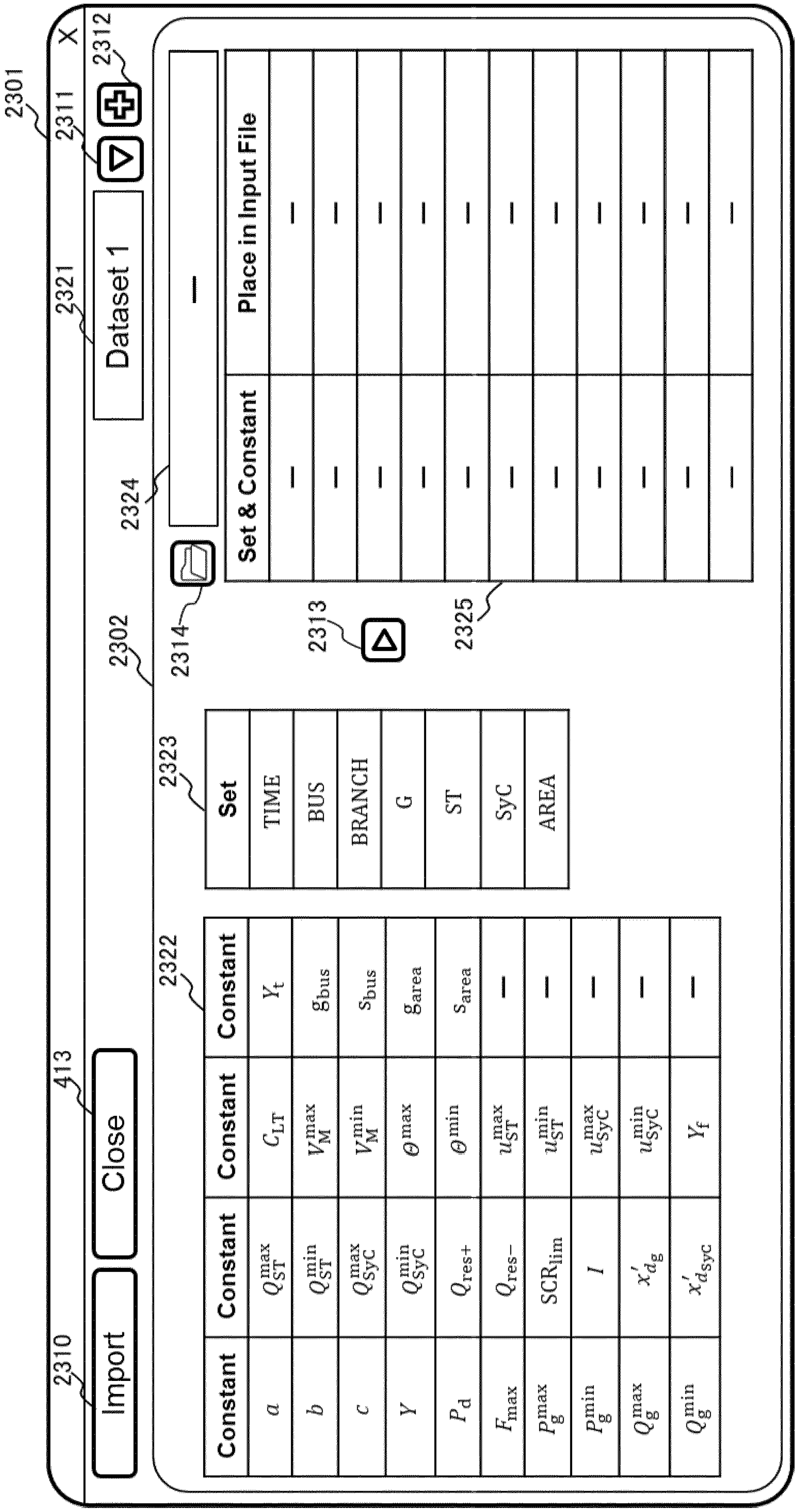
2301
2302
2310
413
2311
2312
2313
2314
2321
2322
2323
2324
2325
X
Import
Close
Dataset 1
Constant
a
b
c
Y
$P_d$
$F_{max}$
$P_g^{max}$
$P_g^{min}$
$Q_g^{max}$
$Q_g^{min}$
$Q_{ST}^{max}$
$Q_{ST}^{min}$
$Q_{SyC}^{max}$
$Q_{SyC}^{min}$
$Q_{res+}$
$Q_{res-}$
$SCR_{lim}$
I
$x'_{d_g}$
$x'_{d_{SyC}}$
$C_{LT}$
$V_M^{max}$
$V_M^{min}$
$\Theta^{max}$
$\Theta^{min}$
$u_{ST}^{max}$
$u_{ST}^{min}$
$u_{SyC}^{max}$
$u_{SyC}^{min}$
$Y_f$
$Y_t$
$g_{bus}$
$s_{bus}$
$g_{area}$
$s_{area}$
Set
TIME
BUS
BRANCH
G
ST
SyC
AREA
Set & Constant
Place in Input File

Fig. 23

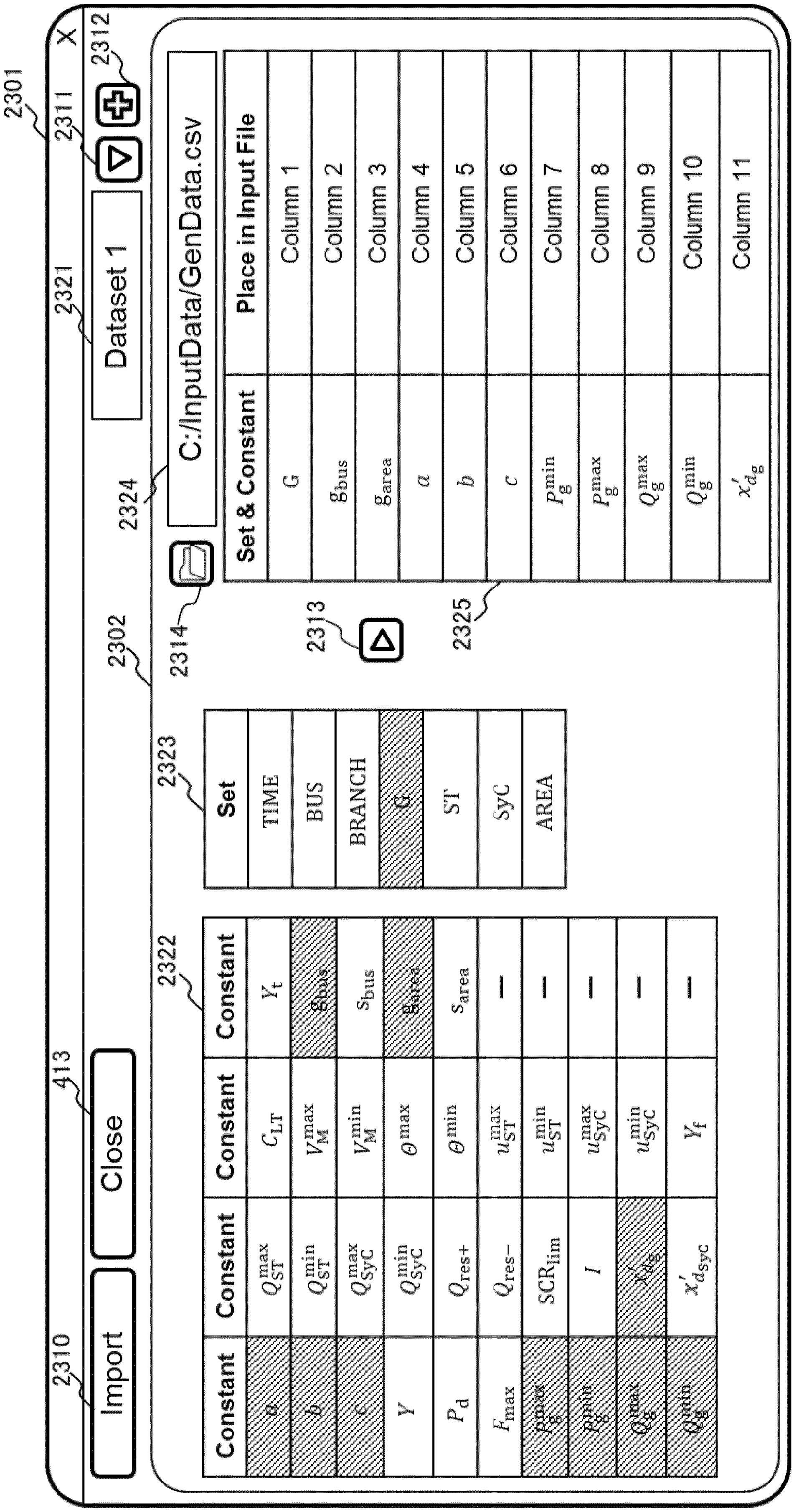
2301
2302
2310
413
2311
2312
2313
2314
2321
2322
2323
2324
2325
X
Import
Close
Dataset 1
C:/InputData/GenData.csv
Constant
Constant
Constant
Constant
Set
TIME
BUS
BRANCH
G
ST
SyC
AREA
Set & Constant
Place in Input File
Column 1
Column 2
Column 3
Column 4
Column 5
Column 6
Column 7
Column 8
Column 9
Column 10
Column 11

Fig. 24

2501

| G | $g_{bus}$ | $g_{area}$ | $a$ | $b$ | $c$ | $P_g^{max}$ | $P_g^{min}$ | $Q_g^{max}$ | $Q_g^{min}$ | $x'_{d_g}$ |
|---|---|---|---|---|---|---|---|---|---|---|
| 1 | 1 | 1 | 0.01 | 40 | 0 | 100 | 10 | 15 | -5 | 0.420 |
| 2 | 4 | 1 | 0.01 | 40 | 0 | 100 | 10 | 30 | -30 | 0.234 |
| ... | ... | ... | ... | ... | ... | ... | ... | ... | ... | ... |
| 19 | 116 | 1 | 0.01 | 40 | 0 | 100 | 10 | 100 | -100 | 0.297 |

Fig. 25

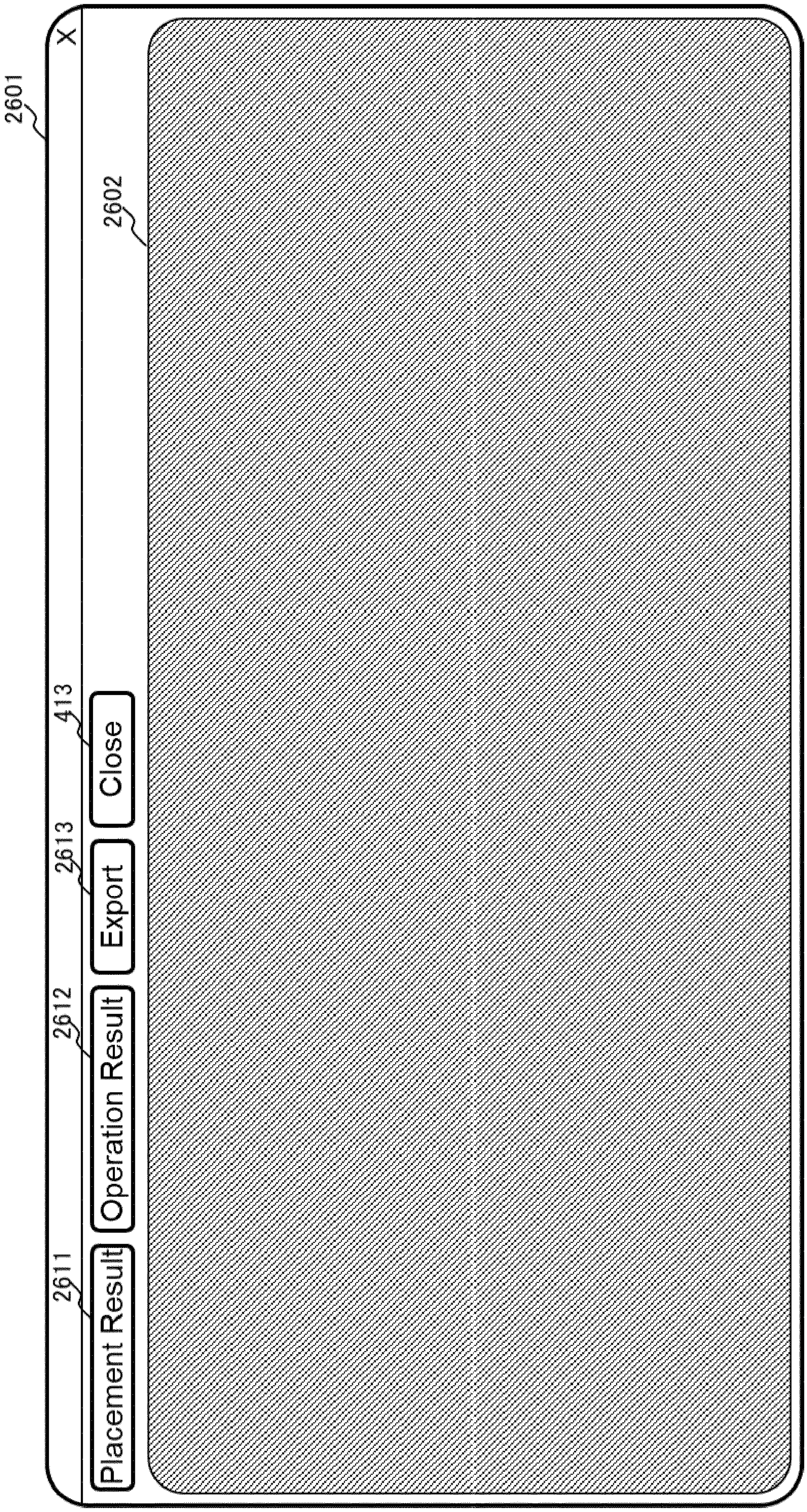
2601
2602
Placement Result
2611
Operation Result
2612
Export
2613
Close
413
X

Fig. 26

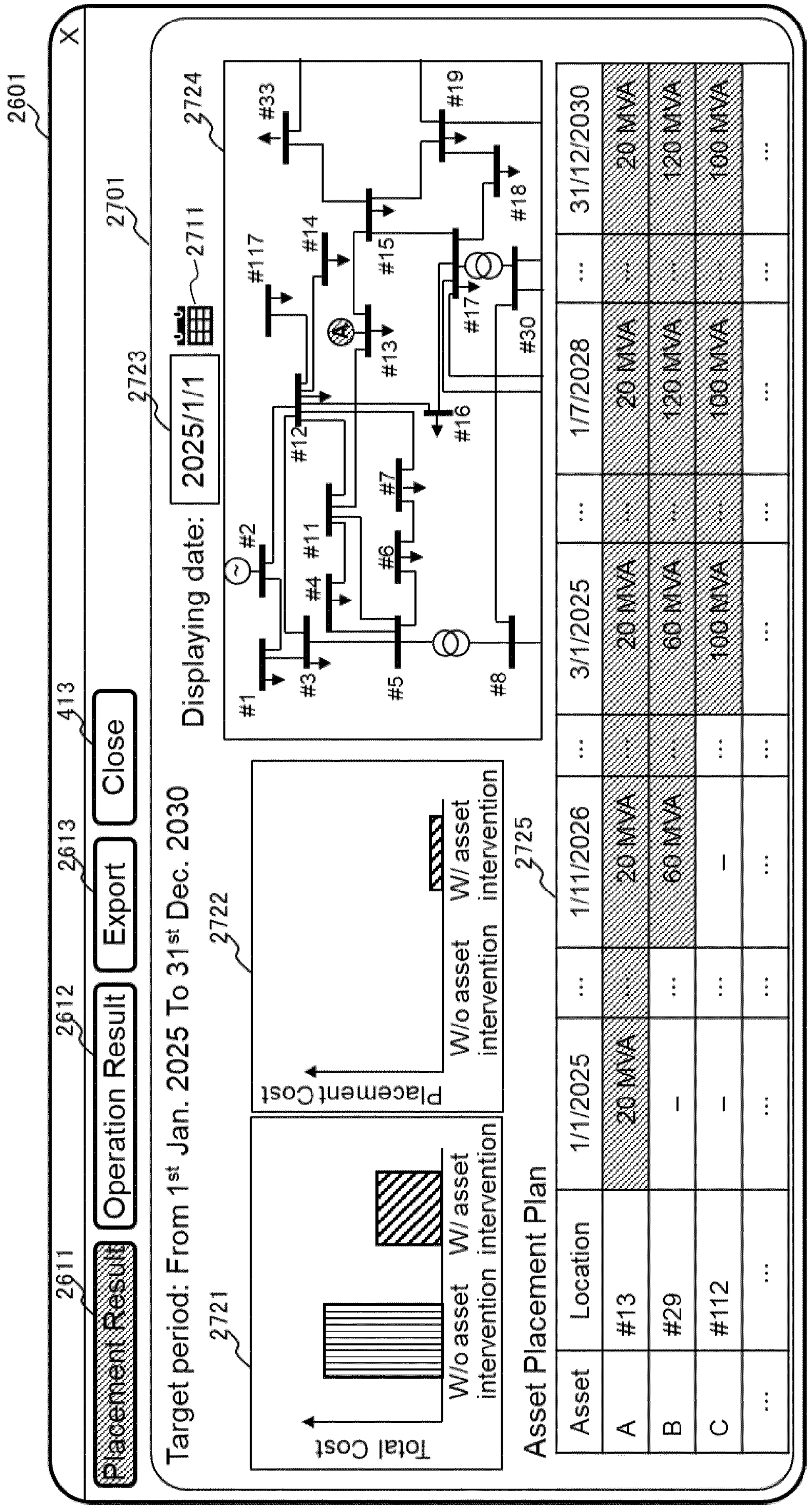
2601
2611
2612
2613
413
Placement Result
Operation Result
Export
Close
X
2701
Target period: From 1st Jan. 2025 To 31st Dec. 2030
2721
Total Cost
W/o asset intervention
W/ asset intervention
2722
Placement Cost
W/o asset intervention
W/ asset intervention
2723
Displaying date:
2025/1/1
2711
2724
#1 #2 #3 #4 #5 #6 #7 #8 #11 #12 #13 #14 #15 #16 #17 #18 #19 #30 #33 #117
A
2725
Asset Placement Plan
Asset | Location | 1/1/2025 | … | 1/11/2026 | … | 3/1/2025 | … | 1/7/2028 | … | 31/12/2030
A | #13 | 20 MVA | … | 20 MVA | … | 20 MVA | … | 20 MVA | … | 20 MVA
B | #29 | – | … | 60 MVA | … | 60 MVA | … | 120 MVA | … | 120 MVA
C | #112 | – | … | – | … | 100 MVA | … | 100 MVA | … | 100 MVA
… | … | … | … | … | … | … | … | … | … | …

Fig. 27

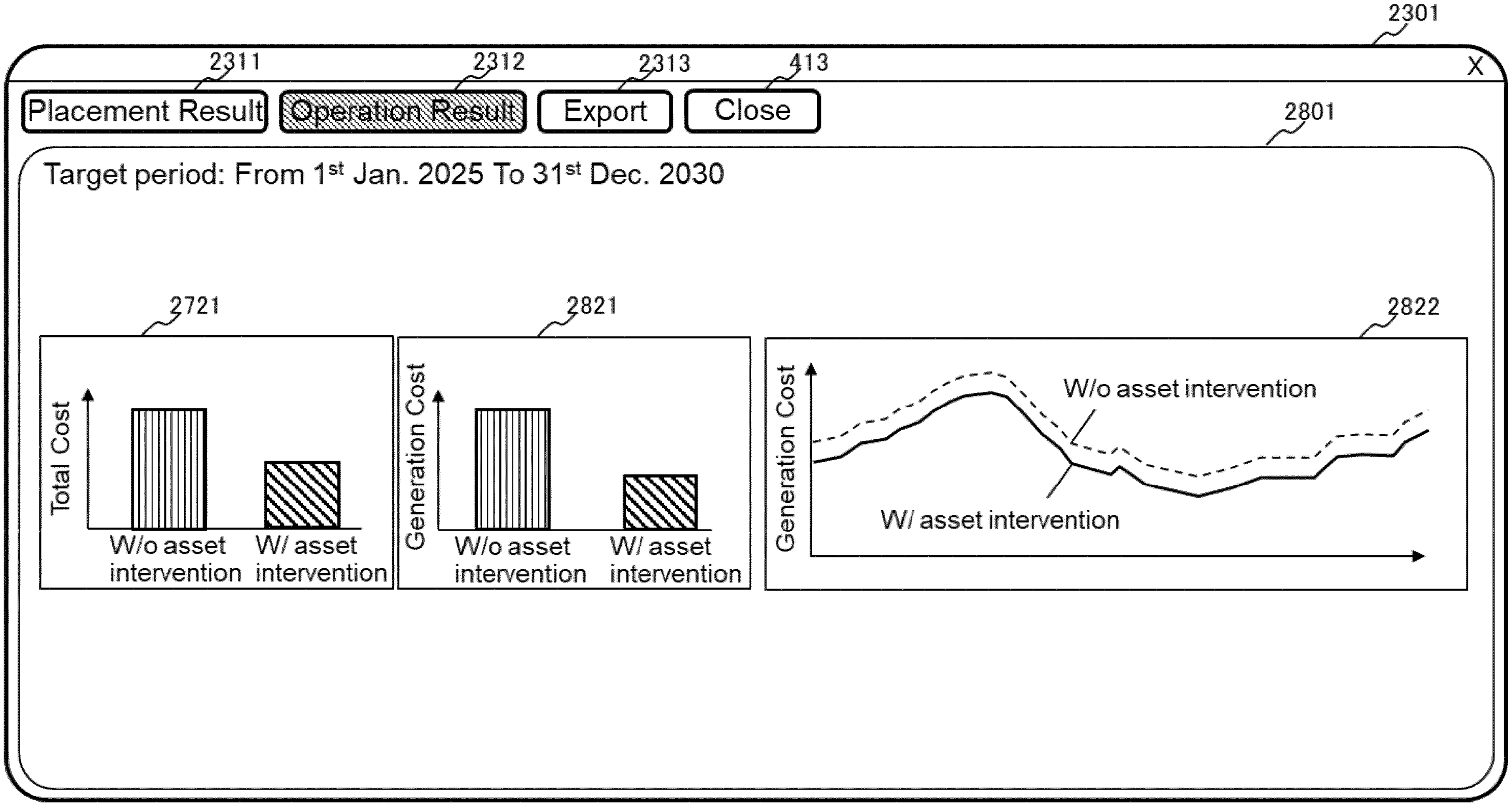
2301
2311
2312
2313
413
X
Placement Result
Operation Result
Export
Close
2801
Target period: From 1st Jan. 2025 To 31st Dec. 2030
2721
2821
2822
Total Cost
W/o asset intervention
W/ asset intervention
Generation Cost
W/o asset intervention
W/ asset intervention
Generation Cost
W/o asset intervention
W/ asset intervention

Fig. 28

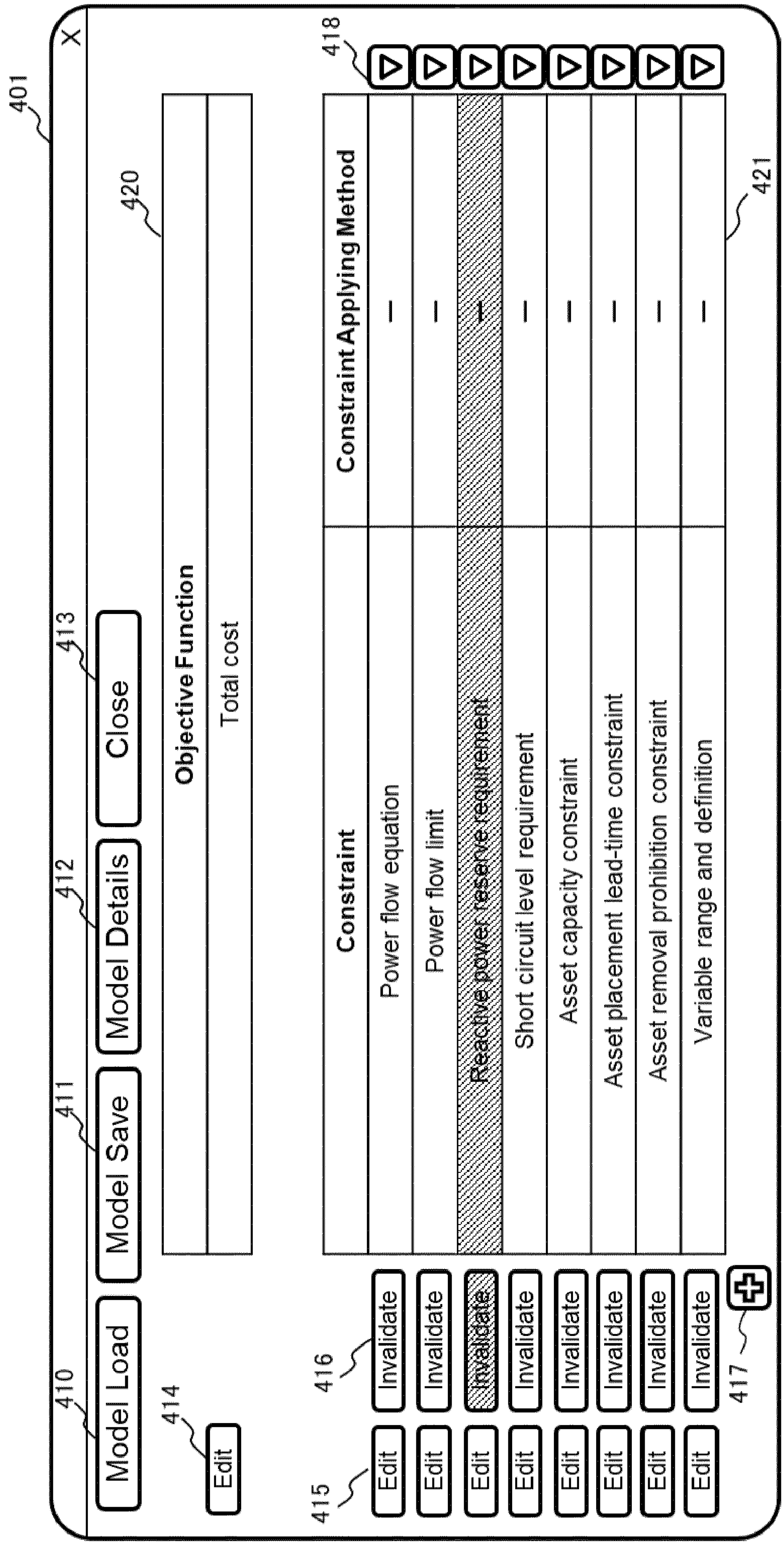
401
X
410
Model Load
411
Model Save
412
Model Details
413
Close
414
Edit
420
Objective Function
Total cost
415
416
Edit
Invalidate
Constraint
Power flow equation
Power flow limit
Reactive power reserve requirement
Short circuit level requirement
Asset capacity constraint
Asset placement lead-time constraint
Asset removal prohibition constraint
Variable range and definition
Constraint Applying Method
418
421
417

Fig. 29

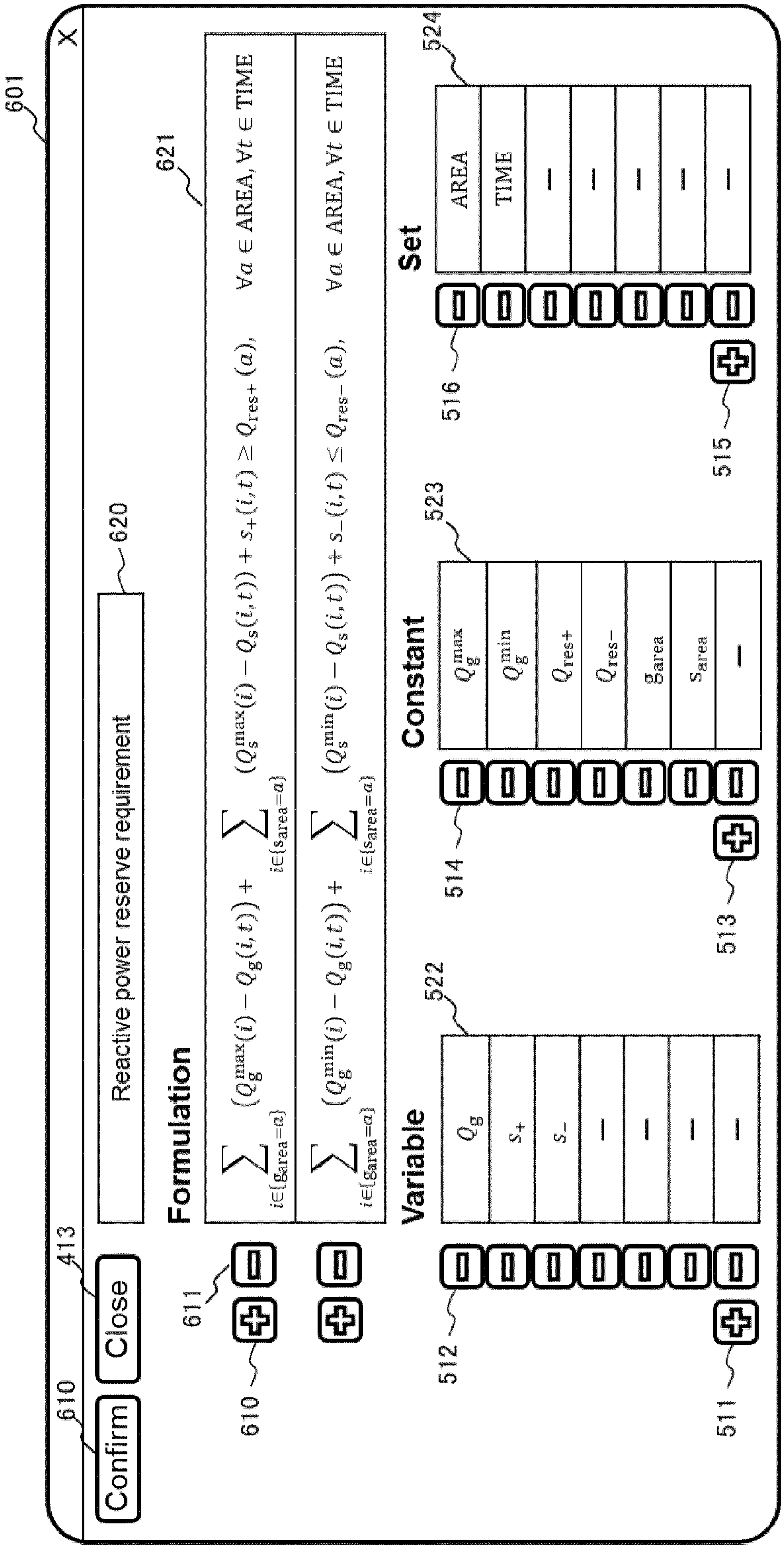
601
Confirm
610
Close
413
Reactive power reserve requirement
620
Formulation
621
610
611
$\sum_{i \in \{g_{area}=a\}} (Q_g^{max}(i) - Q_g(i,t)) + \sum_{i \in \{s_{area}=a\}} (Q_s^{max}(i) - Q_s(i,t)) + s_+(i,t) \geq Q_{res+}(a), \quad \forall a \in AREA, \forall t \in TIME$
$\sum_{i \in \{g_{area}=a\}} (Q_g^{min}(i) - Q_g(i,t)) + \sum_{i \in \{s_{area}=a\}} (Q_s^{min}(i) - Q_s(i,t)) + s_-(i,t) \leq Q_{res-}(a), \quad \forall a \in AREA, \forall t \in TIME$
Variable
512
522
$Q_g$
$s_+$
$s_-$
511
Constant
514
523
$Q_g^{max}$
$Q_g^{min}$
$Q_{res+}$
$Q_{res-}$
$g_{area}$
$s_{area}$
513
Set
516
524
AREA
TIME
515

Fig. 30

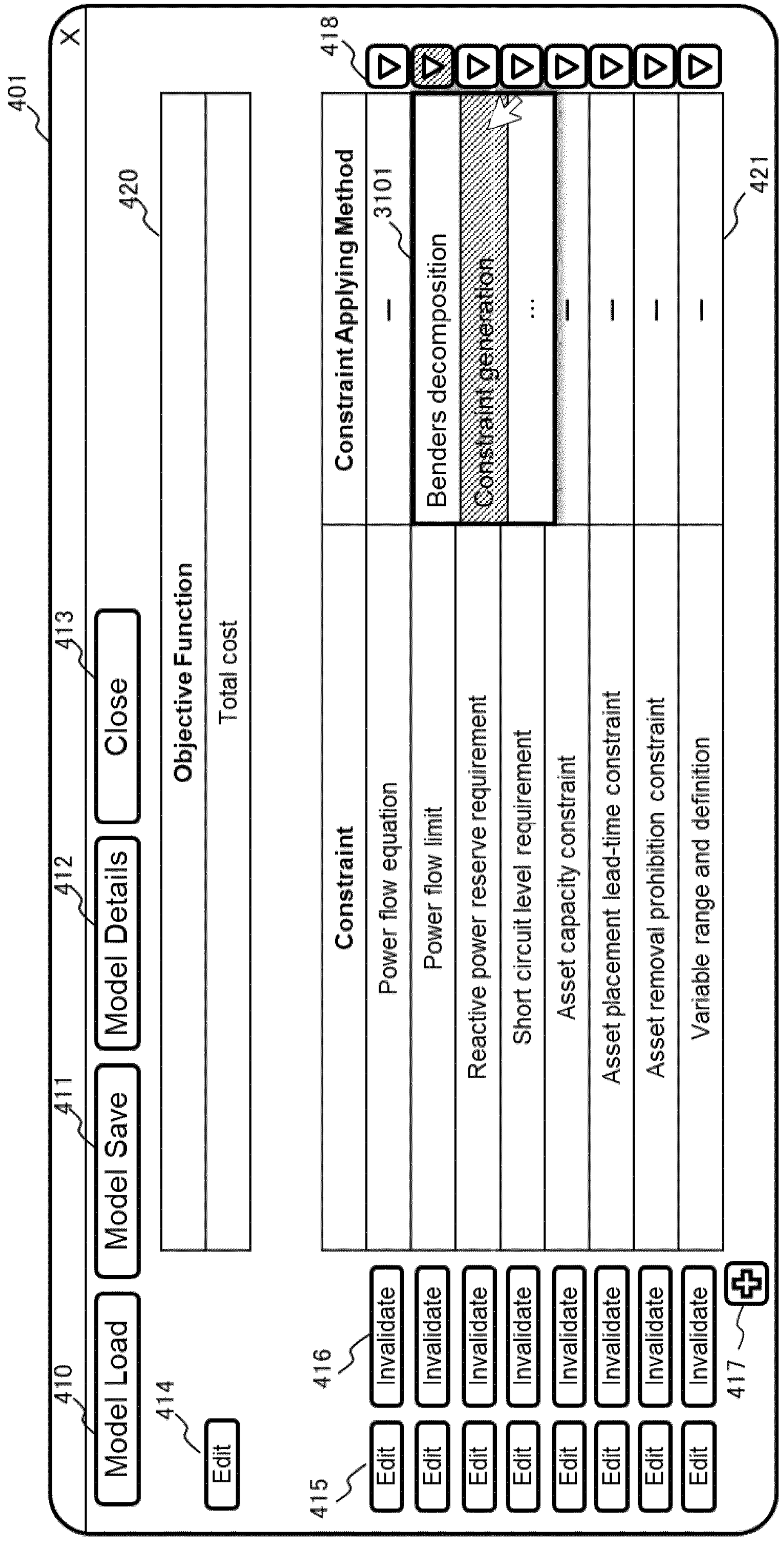
401
X
410
411
412
413
Model Load
Model Save
Model Details
Close
414
Edit
420
Objective Function
Total cost
418
3101
Constraint
Constraint Applying Method
415
416
Edit
Invalidate
Power flow equation
Power flow limit
Benders decomposition
Reactive power reserve requirement
Constraint generation
Short circuit level requirement
...
Asset capacity constraint
Asset placement lead-time constraint
Asset removal prohibition constraint
Variable range and definition
417
421

Fig. 31

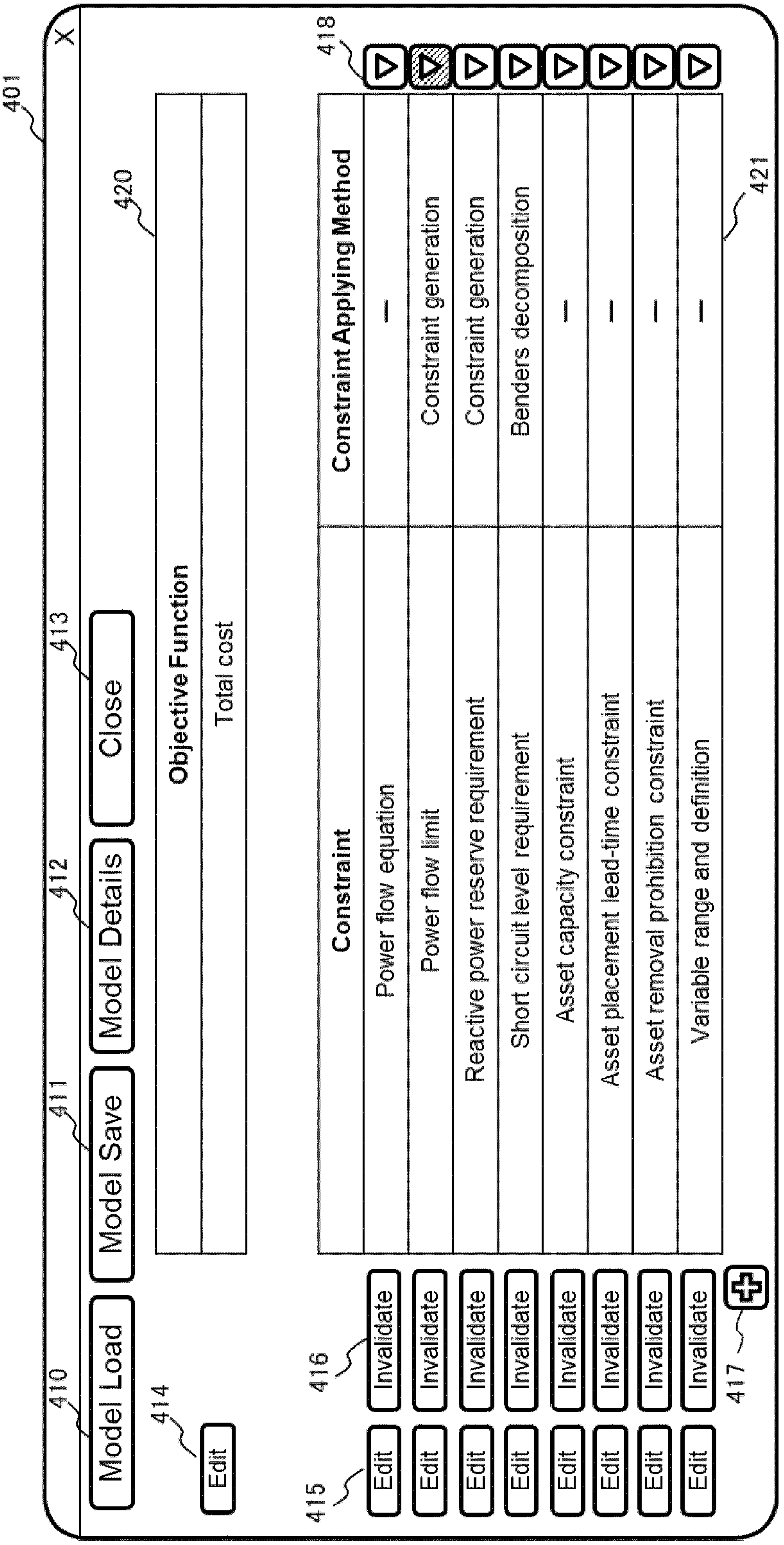
401
X
Model Load
Model Save
Model Details
Close
410
411
412
413
414
Edit
Objective Function
Total cost
420
415
416
417
418
421
Constraint
Constraint Applying Method
Power flow equation
—
Power flow limit
Constraint generation
Reactive power reserve requirement
Constraint generation
Short circuit level requirement
Benders decomposition
Asset capacity constraint
—
Asset placement lead-time constraint
—
Asset removal prohibition constraint
—
Variable range and definition
—
Edit
Invalidate

Fig. 32

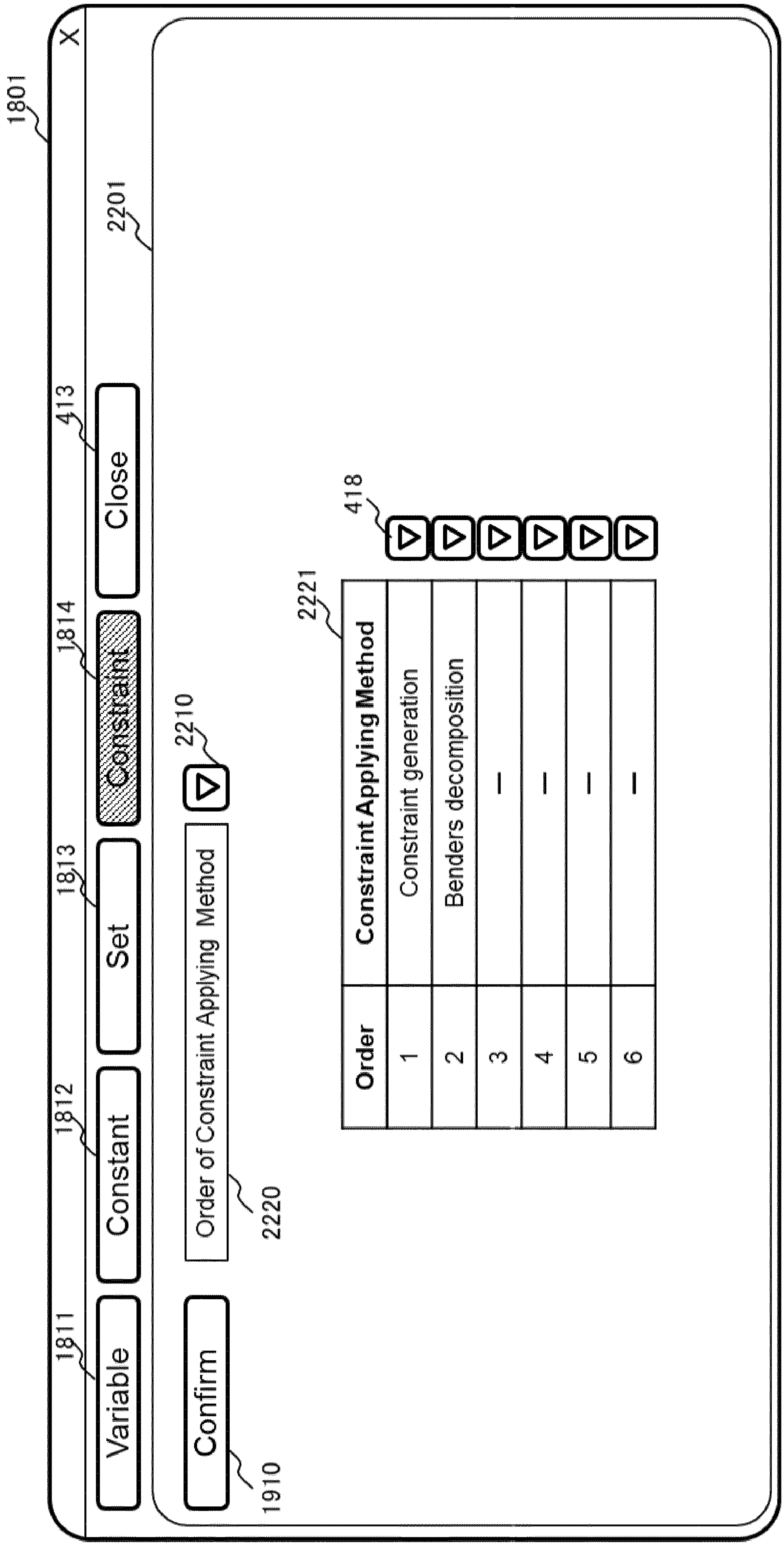
1801
X
2201
1811
Variable
1812
Constant
1813
Set
1814
Constraint
413
Close
1910
Confirm
Order of Constraint Applying Method
2220
2210
2221
418
Order
Constraint Applying Method
1
Constraint generation
2
Benders decomposition
3
—
4
—
5
—
6
—

Fig. 33

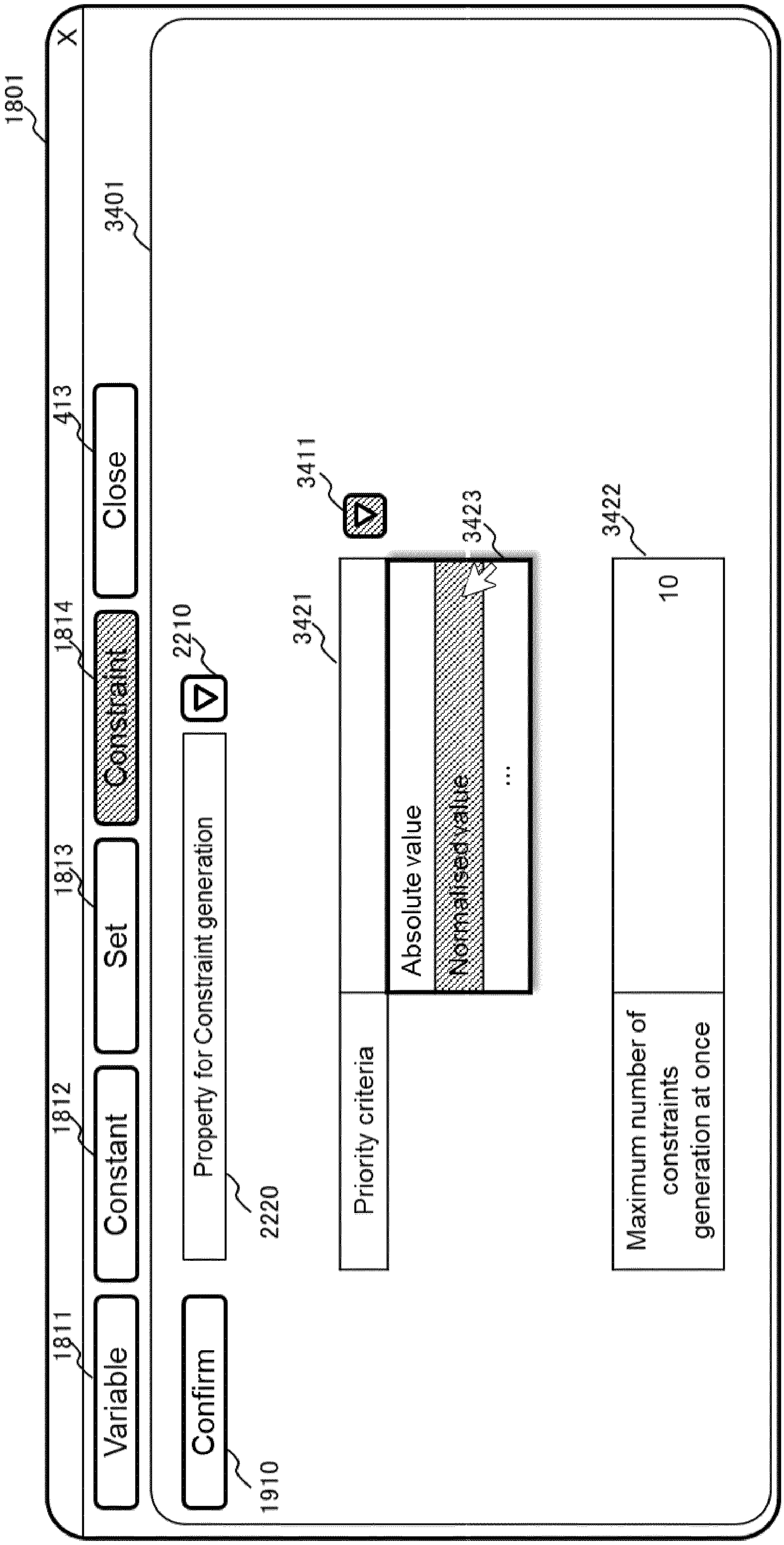
1801
X
3401
Variable
Constant
Set
Constraint
Close
1811
1812
1813
1814
413
Confirm
1910
Property for Constraint generation
2220
2210
Priority criteria
3421
3411
Absolute value
Normalised value
...
3423
Maximum number of constraints generation at once
10
3422

Fig. 34

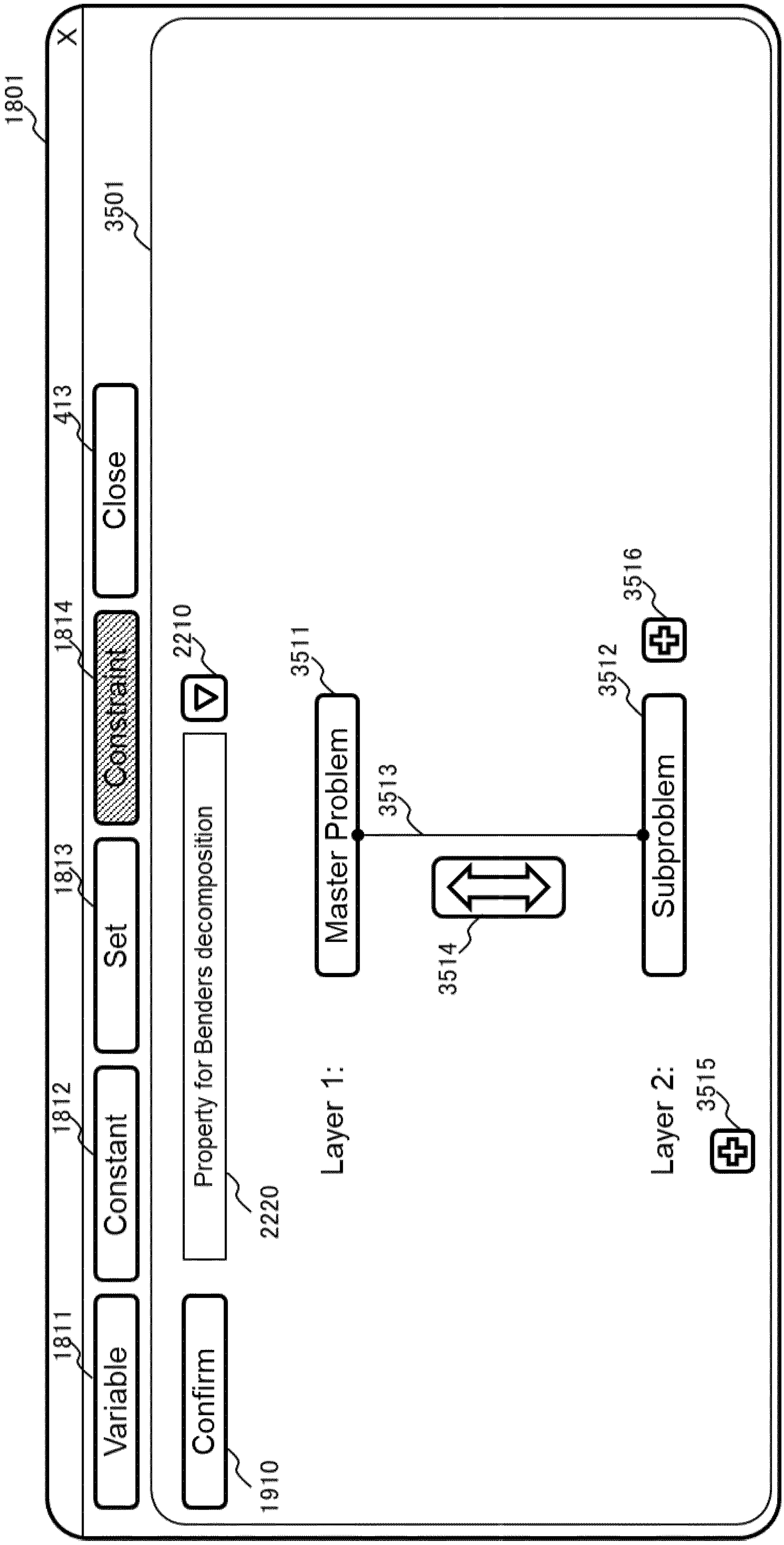
1801
Variable
Constant
Set
Constraint
Close
1811
1812
1813
1814
413
Confirm
1910
Property for Benders decomposition
2220
2210
3501
Layer 1:
Master Problem
3511
3513
3514
Layer 2:
Subproblem
3512
3515
3516

Fig. 35

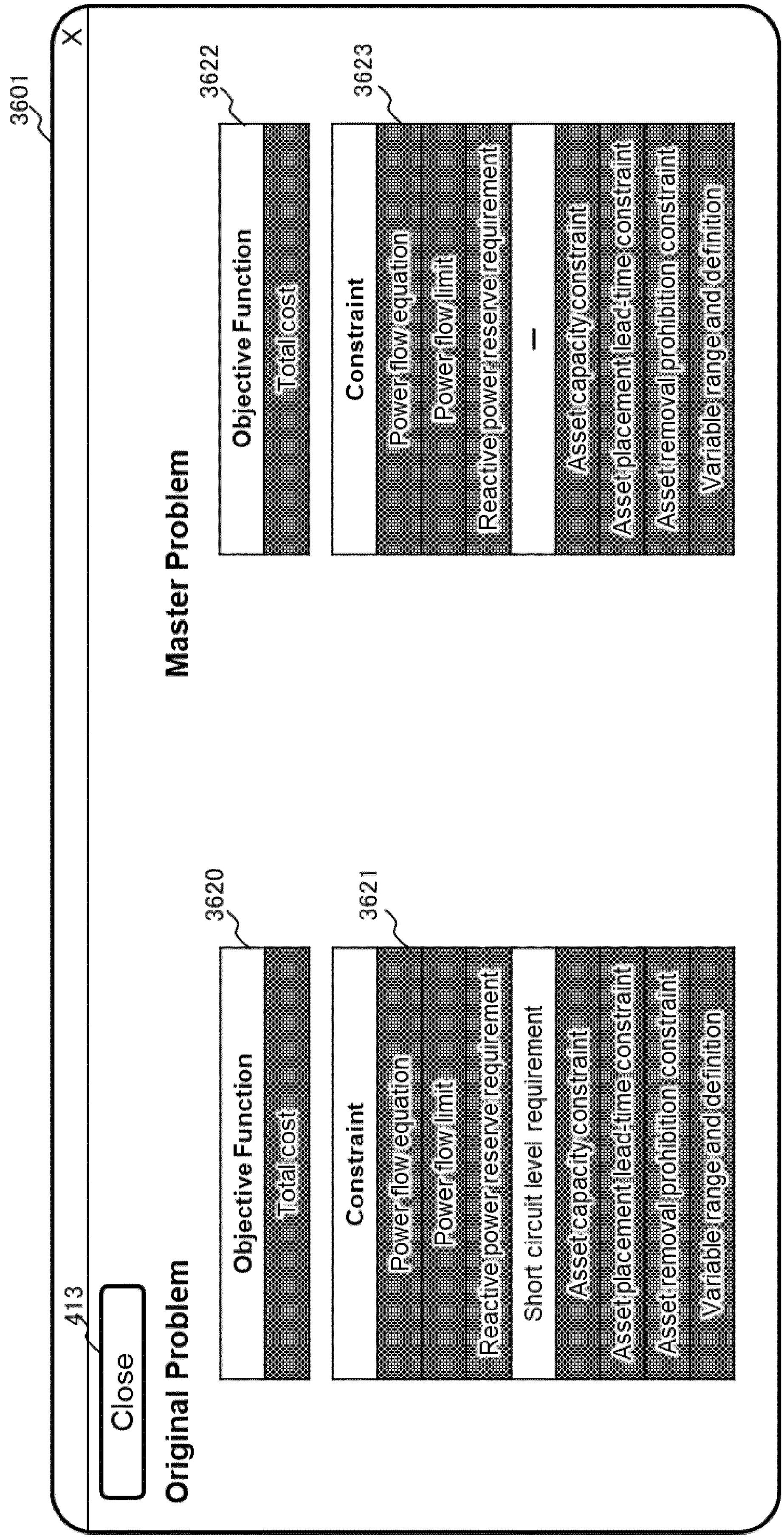
3601
X
413
Close
Original Problem
3620
Objective Function
Total cost
3621
Constraint
Power flow equation
Power flow limit
Reactive power reserve requirement
Short circuit level requirement
Asset capacity constraint
Asset placement lead-time constraint
Asset removal prohibition constraint
Variable range and definition
Master Problem
3622
Objective Function
Total cost
3623
Constraint
Power flow equation
Power flow limit
Reactive power reserve requirement
—
Asset capacity constraint
Asset placement lead-time constraint
Asset removal prohibition constraint
Variable range and definition

Fig. 36

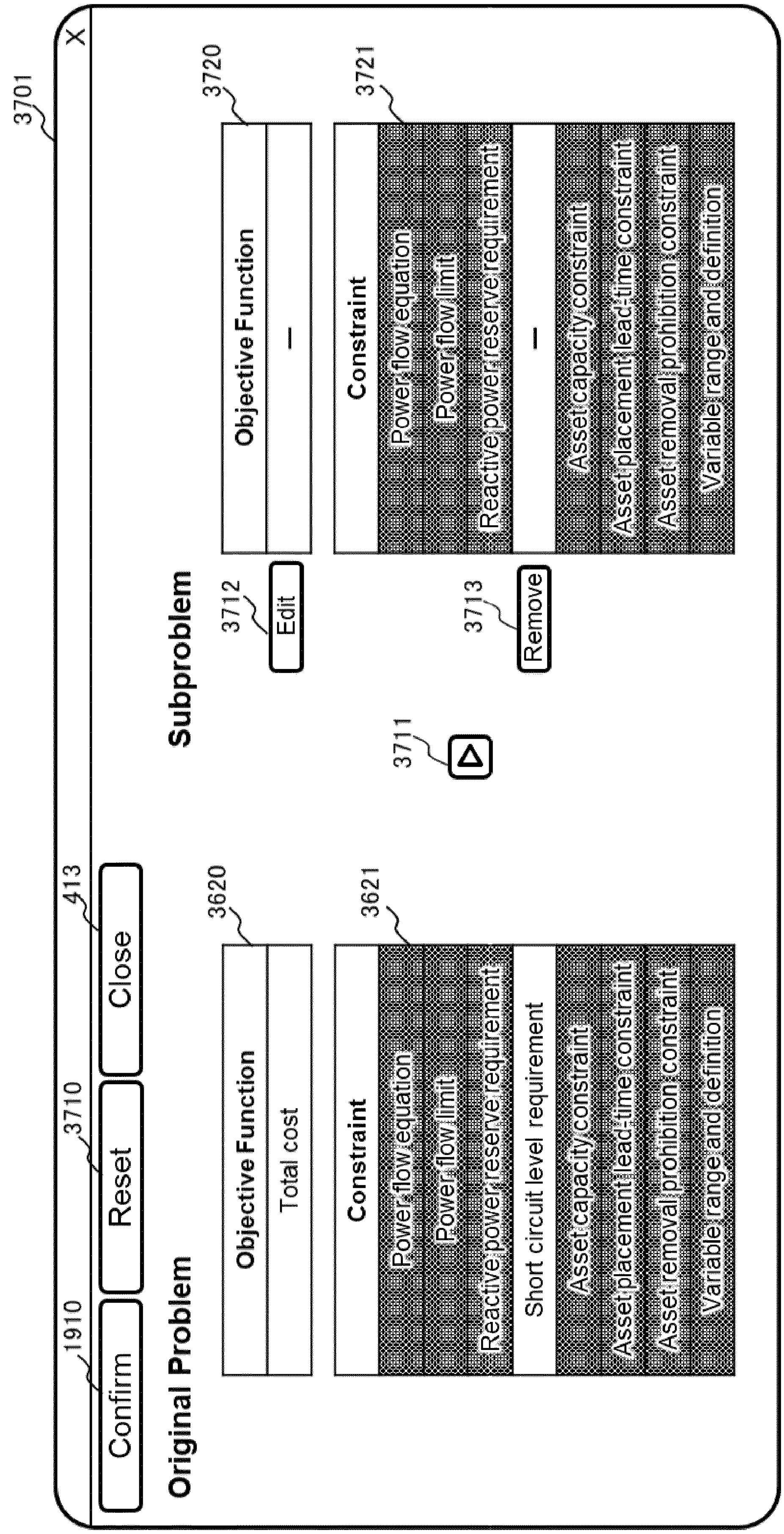
3701
X
Confirm
1910
Reset
3710
Close
413
Original Problem
3620
Objective Function
Total cost
3621
Constraint
Power flow equation
Power flow limit
Reactive power reserve requirement
Short circuit level requirement
Asset capacity constraint
Asset placement lead-time constraint
Asset removal prohibition constraint
Variable range and definition
3711
Subproblem
3712
Edit
3713
Remove
3720
Objective Function
—
3721
Constraint
Power flow equation
Power flow limit
Reactive power reserve requirement
—
Asset capacity constraint
Asset placement lead-time constraint
Asset removal prohibition constraint
Variable range and definition

Fig. 37

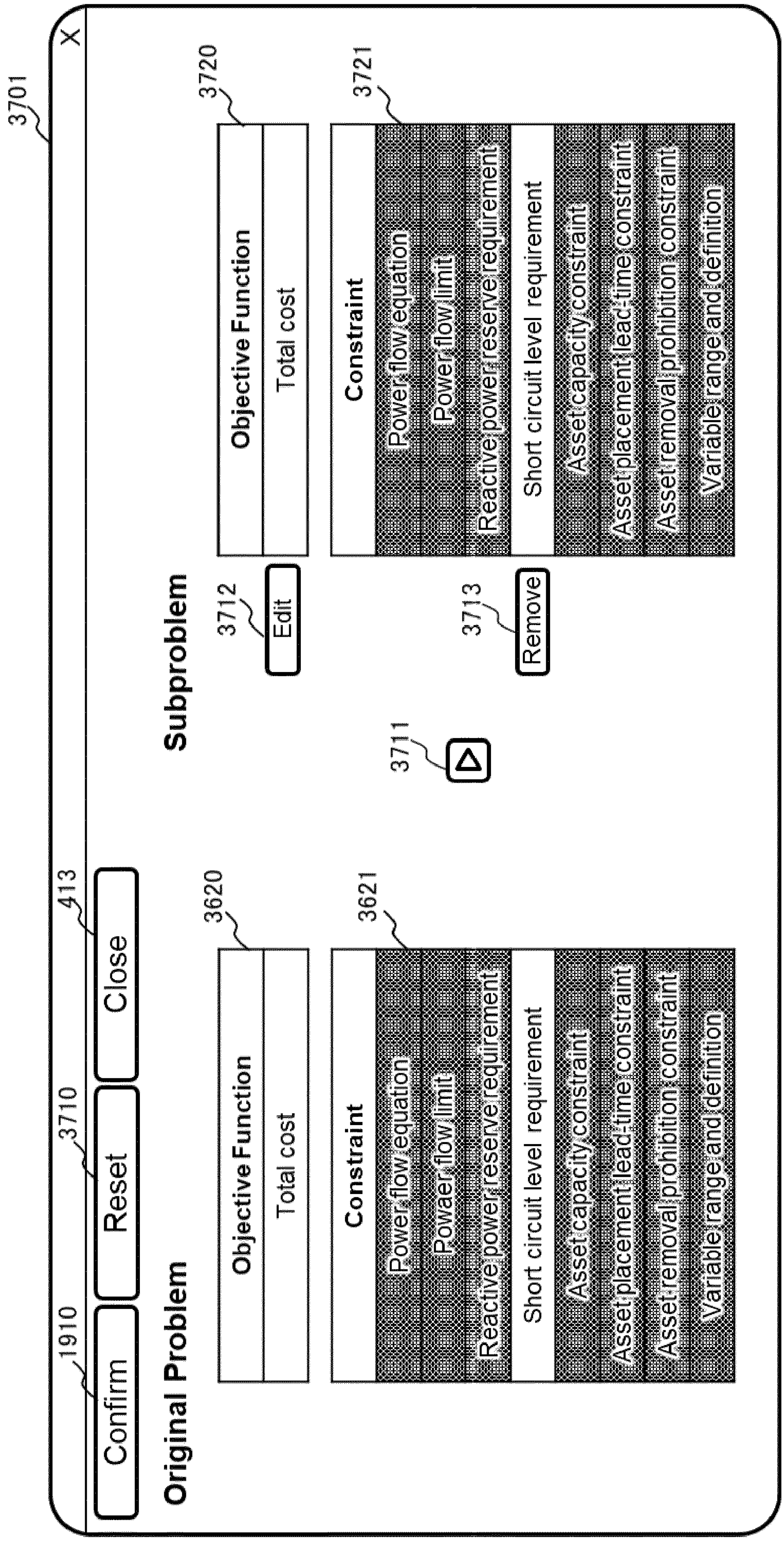
3701
X
Confirm
1910
Reset
3710
Close
413
Original Problem
3620
Objective Function
Total cost
3621
Constraint
Power flow equation
Powaer flow limit
Reactive power reserve requirement
Short circuit level requirement
Asset capacity constraint
Asset placement lead-time constraint
Asset removal prohibition constraint
Variable range and definition
3711
Subproblem
3712
Edit
3713
Remove
3720
Objective Function
Total cost
3721
Constraint
Power flow equation
Power flow limit
Reactive power reserve requirement
Short circuit level requirement
Asset capacity constraint
Asset placement lead-time constraint
Asset removal prohibition constraint
Variable range and definition

Fig. 38

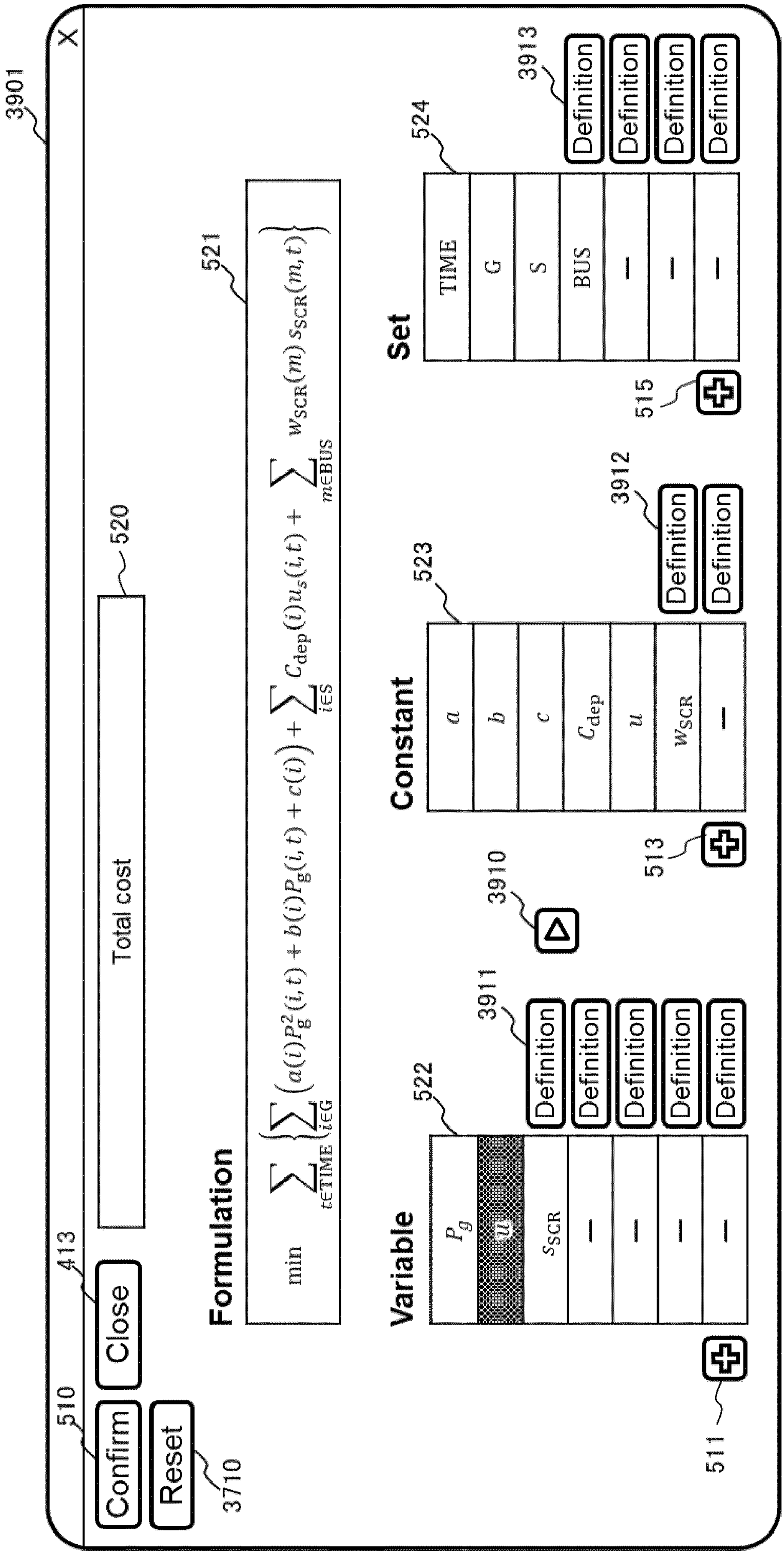
3901
Confirm
Close
Reset
510
413
3710
Total cost
520
Formulation
521
$\min \sum_{t \in TIME} \left\{ \sum_{i \in G} \left( a(i) P_g^2(i,t) + b(i) P_g(i,t) + c(i) \right) + \sum_{i \in S} C_{dep}(i) u_s(i,t) + \sum_{m \in BUS} w_{SCR}(m) s_{SCR}(m,t) \right\}$
Variable
522
$P_g$
$u$
$s_{SCR}$
Definition
3911
511
3910
Constant
523
$a$
$b$
$c$
$C_{dep}$
$u$
$w_{SCR}$
513
3912
Set
524
TIME
G
S
BUS
515
3913

Fig. 39

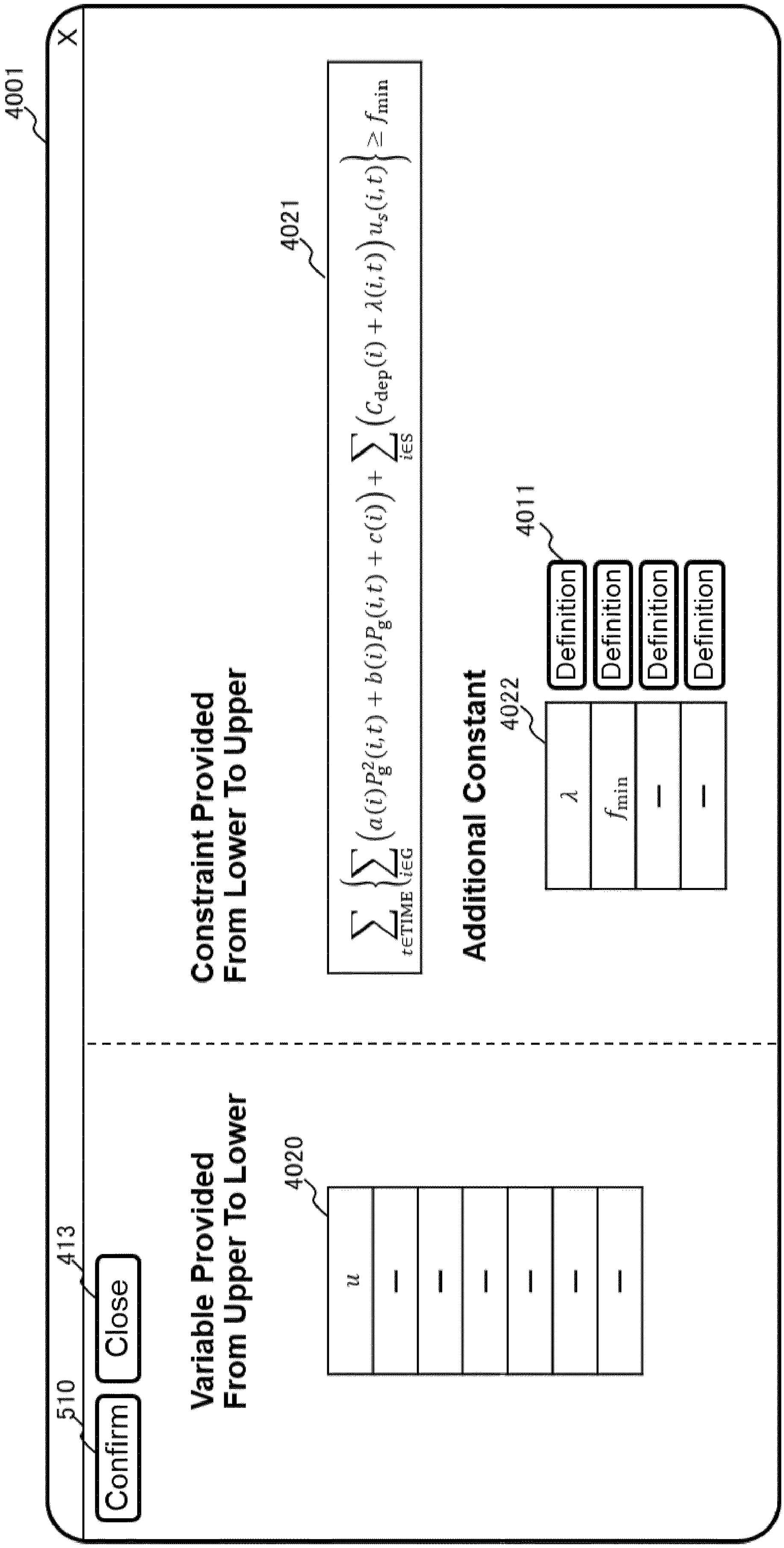
4001
X
Confirm
510
Close
413
Variable Provided From Upper To Lower
4020
$u$
Constraint Provided From Lower To Upper
4021
$\sum_{t\in TIME}\left\{\sum_{i\in G}\left(a(i)P_g^2(i,t)+b(i)P_g(i,t)+c(i)\right)+\sum_{i\in S}\left(C_{dep}(i)+\lambda(i,t)\right)u_s(i,t)\right\}\geq f_{min}$
Additional Constant
4022
$\lambda$
$f_{min}$
4011
Definition
Definition
Definition
Definition

Fig. 40

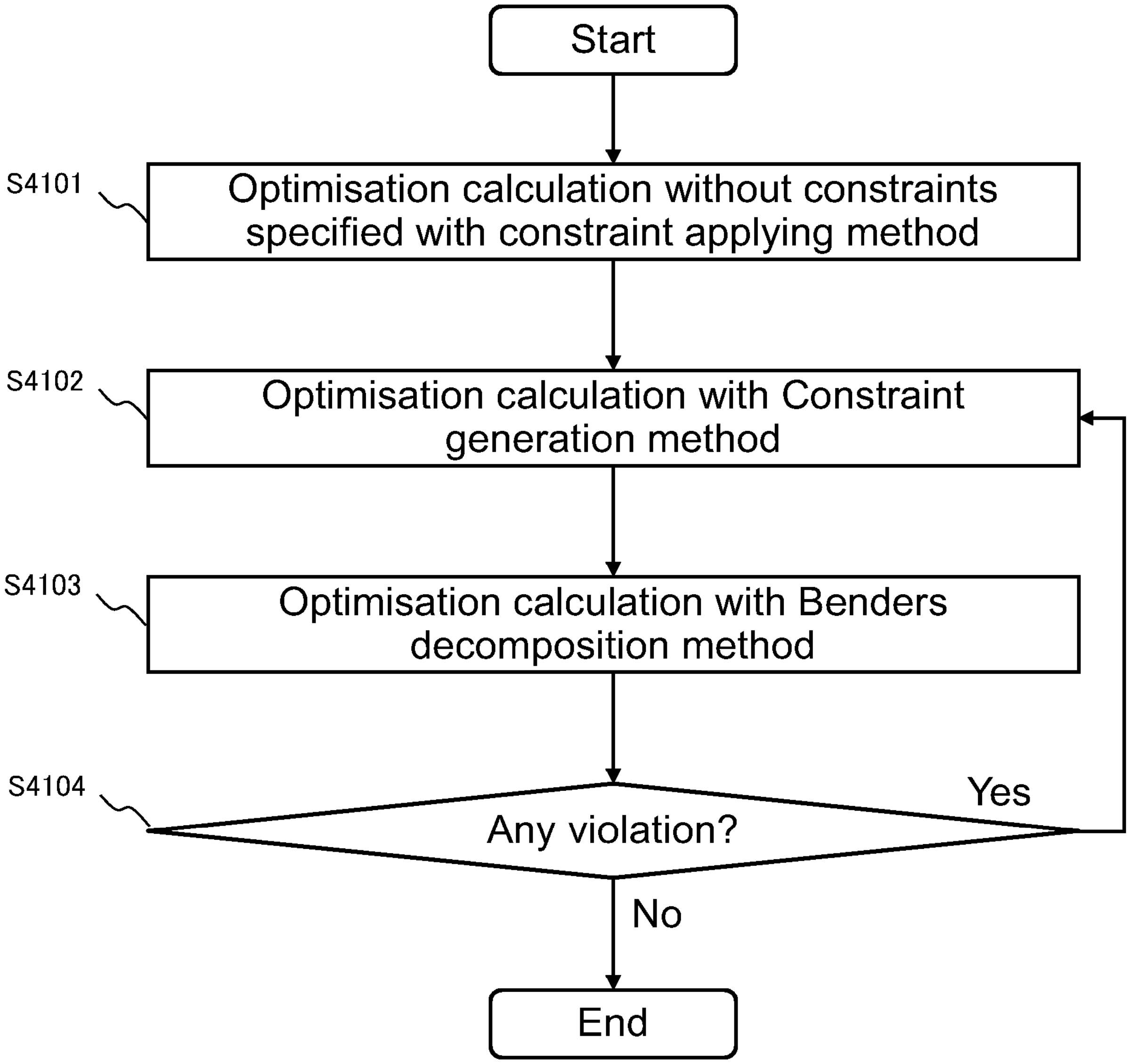
Start
S4101
Optimisation calculation without constraints specified with constraint applying method
S4102
Optimisation calculation with Constraint generation method
S4103
Optimisation calculation with Benders decomposition method
S4104
Any violation?
Yes
No
End

Fig. 41

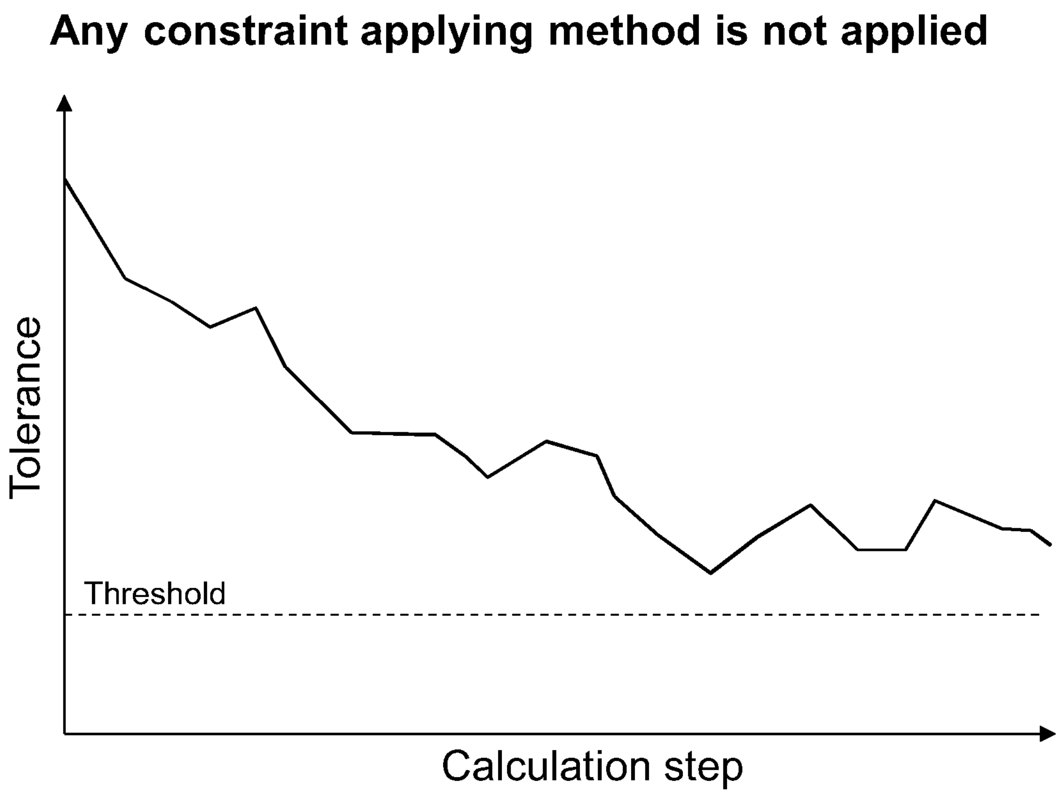
Any constraint applying method is not applied
Tolerance
Threshold
Calculation step

Fig. 42

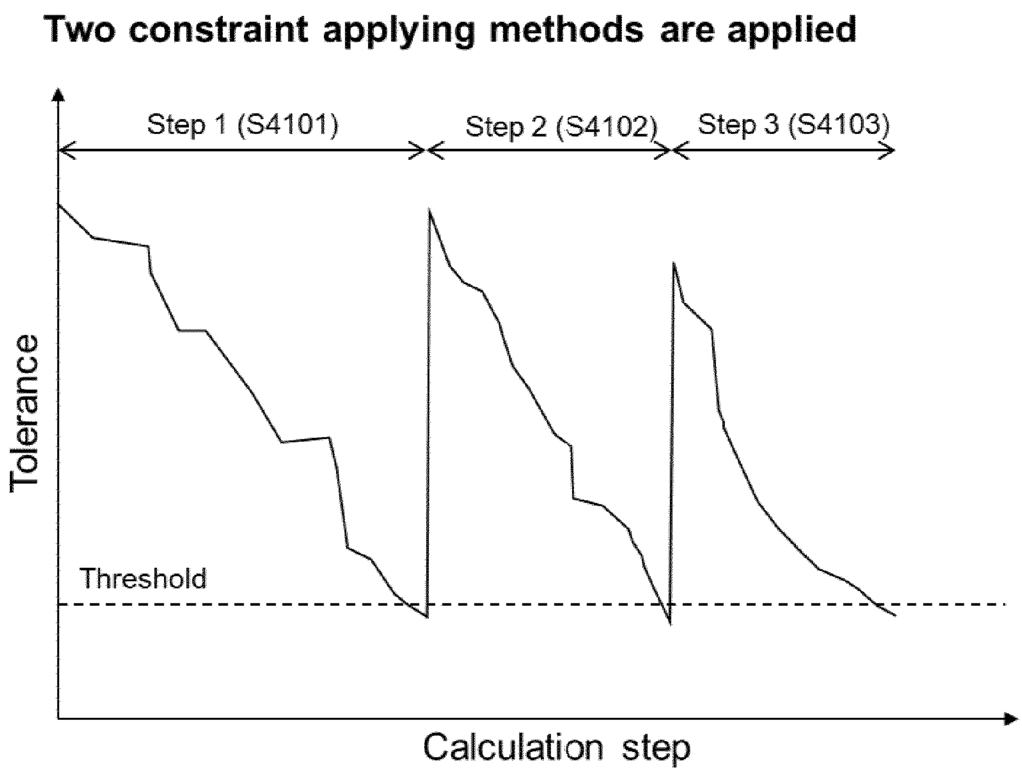
Two constraint applying methods are applied
Step 1 (S4101)
Step 2 (S4102)
Step 3 (S4103)
Tolerance
Threshold
Calculation step

Fig. 43

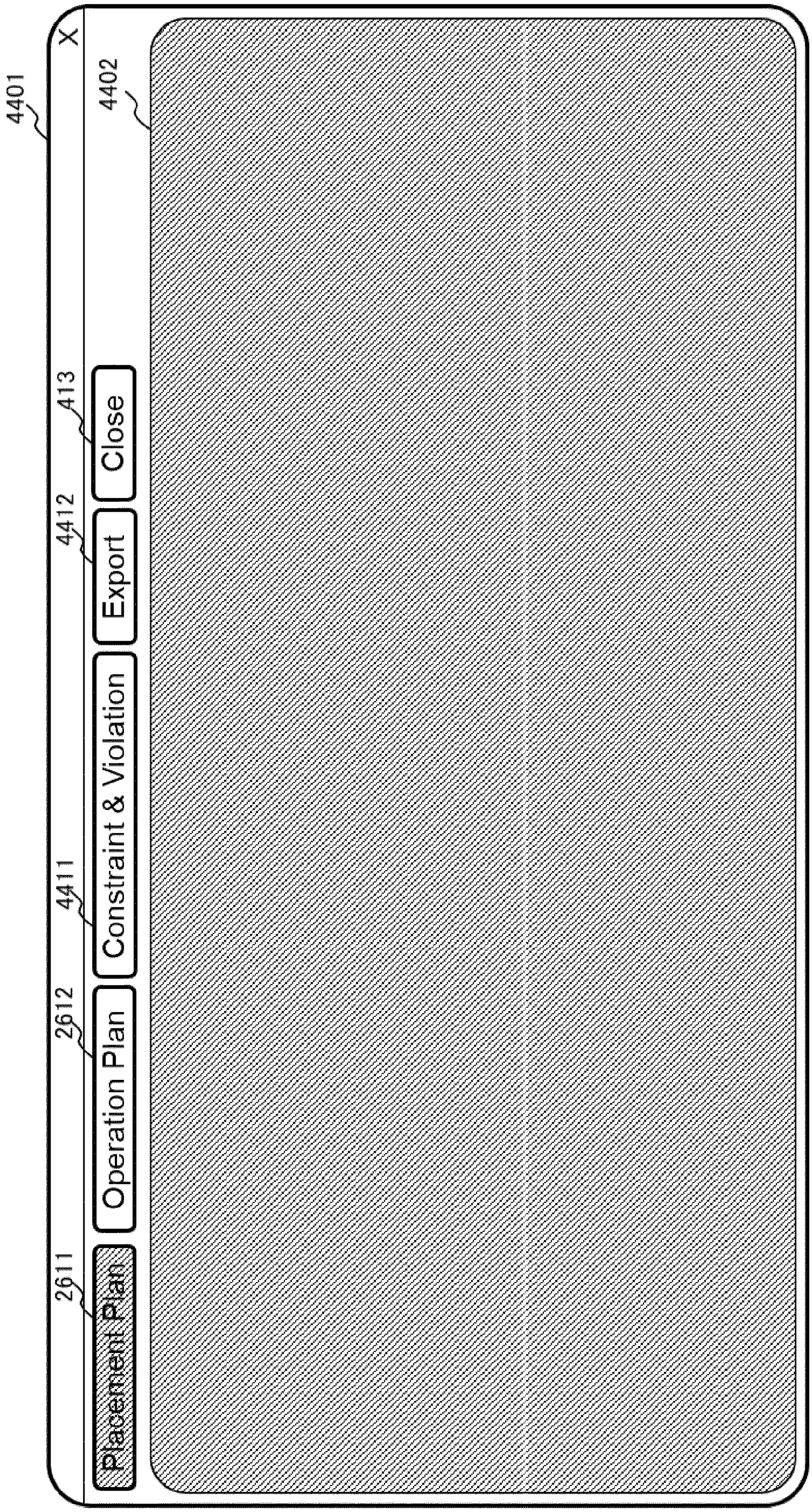
4401
4402
X
2611
Placement Plan
2612
Operation Plan
4411
Constraint & Violation
4412
Export
413
Close

Fig. 44

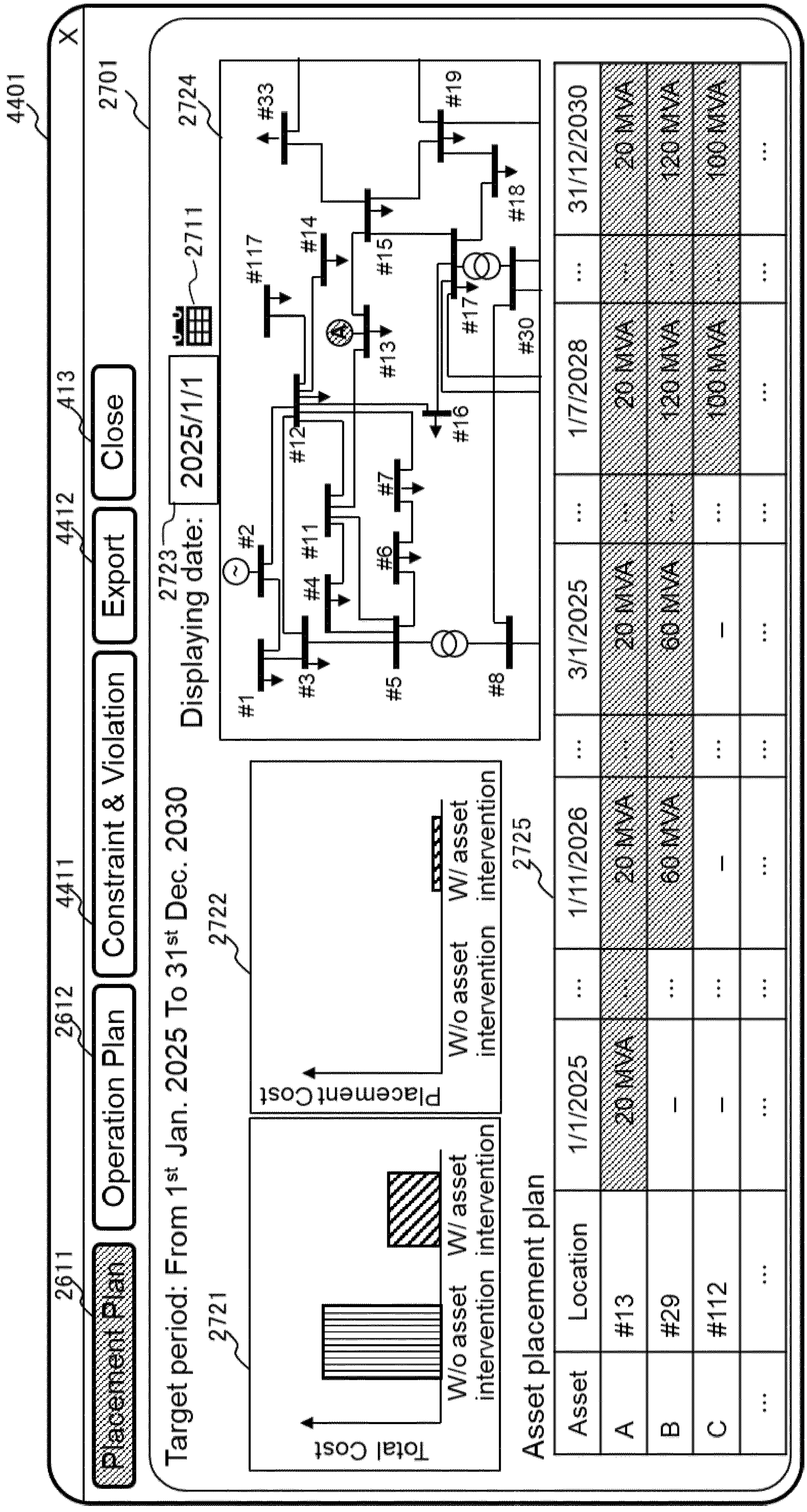
4401
2701
X
Placement Plan
2611
Operation Plan
2612
Constraint & Violation
4411
Export
4412
Close
413
Target period: From 1st Jan. 2025 To 31st Dec. 2030
2721
Total Cost
W/o asset intervention
W/ asset intervention
2722
Placement Cost
W/o asset intervention
W/ asset intervention
2723
Displaying date:
2025/1/1
2711
2724
#1
#2
#3
#4
#5
#6
#7
#8
#11
#12
#13
#14
#15
#16
#17
#18
#19
#30
#33
#117
A
2725
Asset placement plan
Asset | Location | 1/1/2025 | ... | 1/11/2026 | ... | 3/1/2025 | ... | 1/7/2028 | ... | 31/12/2030
A | #13 | 20 MVA | ... | 20 MVA | ... | 20 MVA | ... | 20 MVA | ... | 20 MVA
B | #29 | – | ... | 60 MVA | ... | 60 MVA | ... | 120 MVA | ... | 120 MVA
C | #112 | – | ... | – | ... | – | ... | 100 MVA | ... | 100 MVA
... | ... | ... | ... | ... | ... | ... | ... | ... | ... | ...

Fig. 45

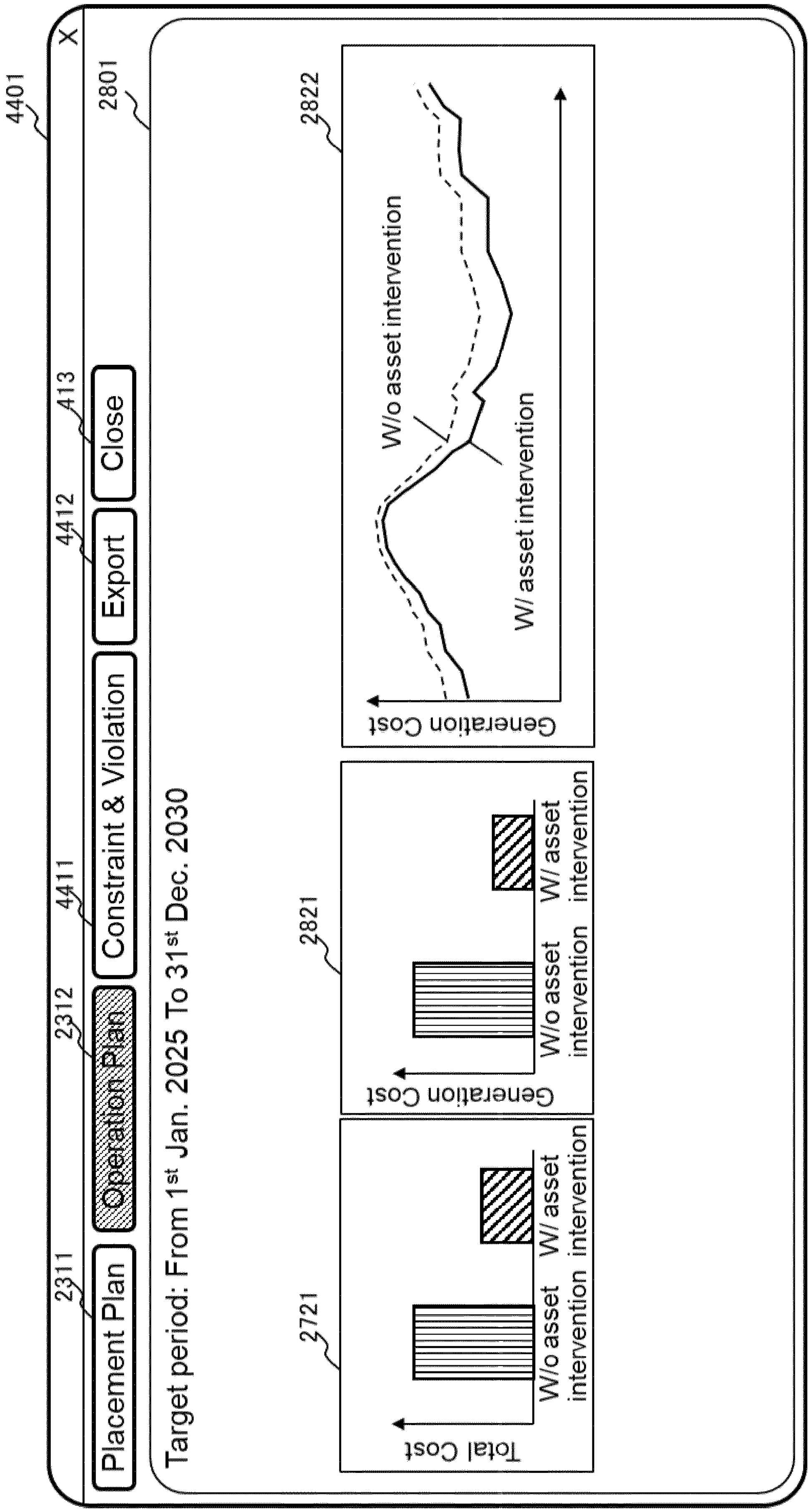
4401
2801
2311
2312
4411
4412
413
Placement Plan
Operation Plan
Constraint & Violation
Export
Close
X
Target period: From 1st Jan. 2025 To 31st Dec. 2030
2721
2821
2822
Total Cost
Generation Cost
W/o asset intervention
W/ asset intervention
Generation Cost
W/o asset intervention
W/ asset intervention
Generation Cost
W/o asset intervention
W/ asset intervention

Fig. 46

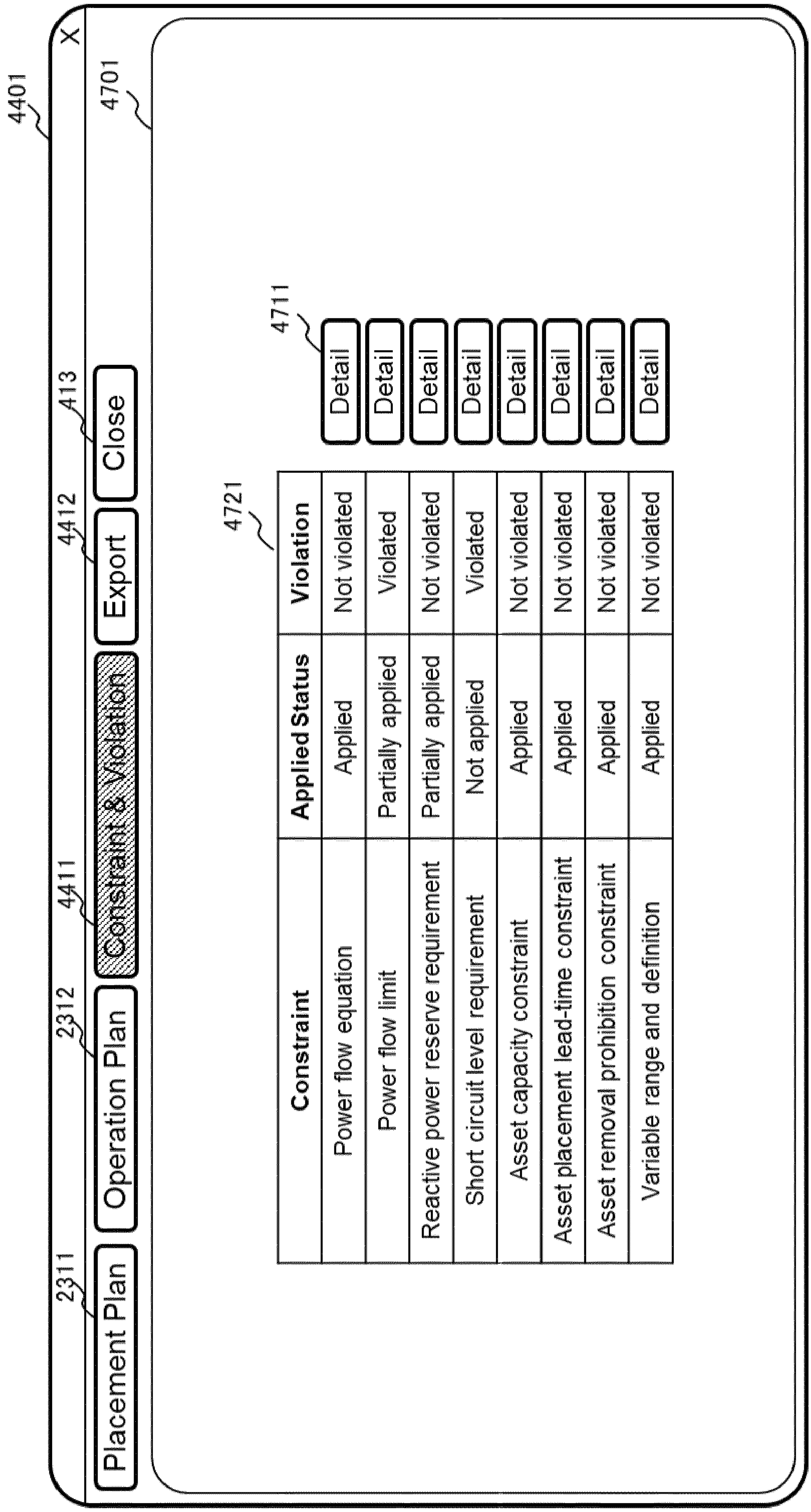
4401
4701
X
Placement Plan
2311
Operation Plan
2312
Constraint & Violation
4411
Export
4412
Close
413
4721
4711
Constraint
Applied Status
Violation
Power flow equation
Applied
Not violated
Detail
Power flow limit
Partially applied
Violated
Detail
Reactive power reserve requirement
Partially applied
Not violated
Detail
Short circuit level requirement
Not applied
Violated
Detail
Asset capacity constraint
Applied
Not violated
Detail
Asset placement lead-time constraint
Applied
Not violated
Detail
Asset removal prohibition constraint
Applied
Not violated
Detail
Variable range and definition
Applied
Not violated
Detail

Fig. 47

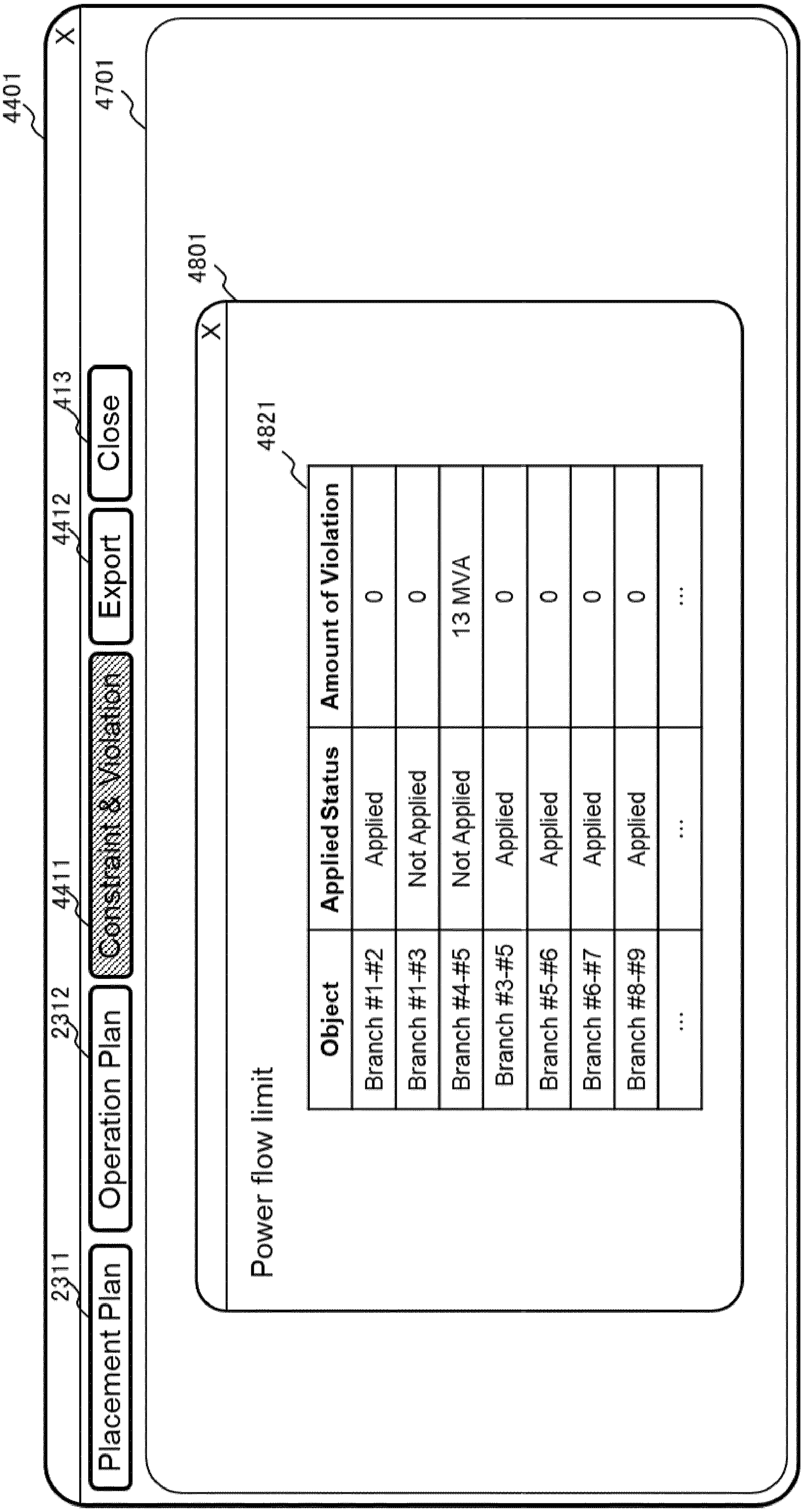
4401
4701
X
Placement Plan
Operation Plan
Constraint & Violation
Export
Close
2311
2312
4411
4412
413
4801
4821
X
Power flow limit
Object
Applied Status
Amount of Violation
Branch #1-#2
Applied
0
Branch #1-#3
Not Applied
0
Branch #4-#5
Not Applied
13 MVA
Branch #3-#5
Applied
0
Branch #5-#6
Applied
0
Branch #6-#7
Applied
0
Branch #8-#9
Applied
0
...
...
...

Fig. 48

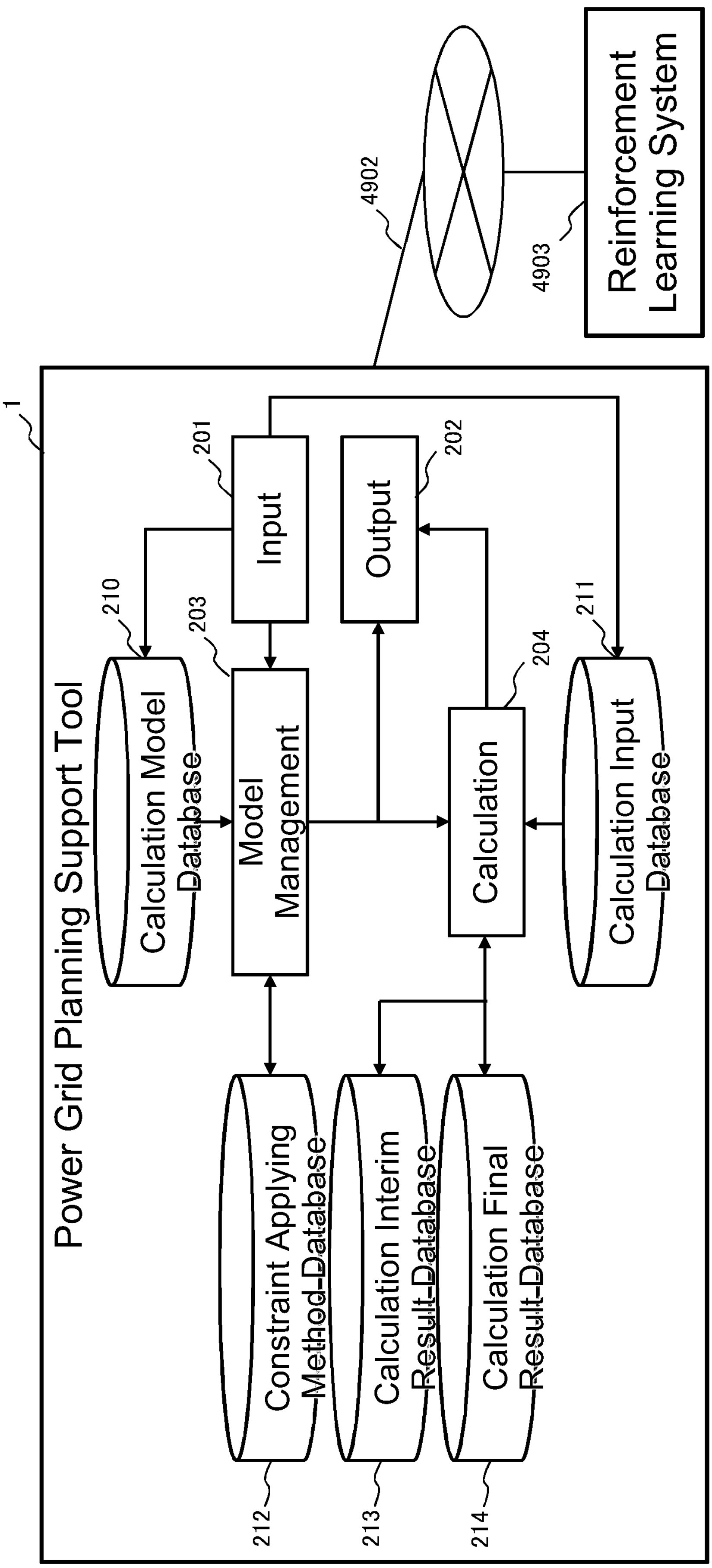
Power Grid Planning Support Tool
1
201
Input
202
Output
203
Model Management
204
Calculation
210
Calculation Model Database
211
Calculation Input Database
212
Constraint Applying Method Database
213
Calculation Interim Result Database
214
Calculation Final Result Database
4902
4903
Reinforcement Learning System

Fig. 49

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2020212681 A1
- US 2022115867 A1
- JP 2022142649 B